# EUROPEAN PATENT APPLICATION

(11) **EP 1 645 440 A1**
(43) Date of publication of application: **12.04.2006**
(21) Application number: 04792570.6
(22) Date of filing: 19.10.2004
(51) Int. Cl.: B60B 33/00

(54) **SUPPORTING STRUCTURE FOR WHEEL**

(30) Priority: 09.03.2004 JP 2004065091; 13.07.2004 JP 2004205528
(71) Applicant: Yang, Xuanzhuang, Tokyo 1740044 (JP)
(72) Inventor: Yang, Xuanzhuang, Tokyo 1740044 (JP)
(74) Representative: Beetz & Partner
(86) International application number: PCT/JP2004/015401
(87) International publication number: WO 2005/084965

(57) **Abstract**

A supporting structure for wheel includes a wheel rotating as grounding and supporting a vehicle body, and a rotary body rotatable only in the opposite direction to a rotating direction of the wheel in association with proceeding of the vehicle body. A rotation axis of the wheel is arranged in substantially parallel to a rotation axis of the rotary body, and the rotation axis of the rotary body is arranged at a rear of and above the rotation axis of the wheel with respect to the proceeding direction of the vehicle body. The rotation axis of the wheel is movable between a reference position at which the rotation axis of the wheel moves forward with respect to the proceeding direction of the vehicle body so as to separate a circumferential surface of the wheel and a circumferential surface of the rotary body from each other and a contact position at which the circumferential surface of the wheel and the circumferential surface of the rotary body come in contact with each other, and also movable along an arc shaped track around the rotation axis of the rotary body as a center while rendering the circumferential surface of the wheel and the circumferential surface of the rotary body contact to each other.

## Description

### Technical Field

This invention relates to a supporting structure attached to transporting or traveling apparatuses and devices such as, e.g., wheel chairs, baby strollers, stretchers, automobiles, and machine tools in various industrial fields for allowing a wheel or wheels to ride over a step easily.

### Background of the Invention

Front wheels of wheel chairs, and wheels attached to such as baby strollers and stretchers have smaller radiuses, require large force to ride over obstacles such as steps existing on roads and inside buildings, and are accompanied with hard works. Traveling may be interrupted due to large resistance even by, e.g., a small step or small stone. The whole wheels may be frequently lifted up. It is therefore a very important solution to develop a mechanism to render a small wheel easily ride over obstacles.

Conventionally, various improvements have been made to render the wheels ride over a step. For example, a structure has been proposed in which an arm attaching a small wheel is mounted to a supporting member for supporting a wheel and in which the wheel is lifted on the step where the small wheel hits the step before the wheel hits the step (see, e.g., Patent Document #1). A structure has been also proposed in which an arc-shaped auxiliary member is attached to a supporting member supporting a wheel to render the auxiliary member hit a step before the wheel hit the step where the step is higher than a prescribed level and thereby to lift the wheel up on the step (see, e.g., Patent Document #2).

Patent Document #1: Japanese Patent Application Publication No.2002-35039
Patent Document #2: Japanese Patent Application Publication No. 2002-2206

With the structures above, however, the arm with the small wheel or the auxiliary member may be broken and may disturb smooth traveling where the arm or the auxiliary member hits the step before the wheel hits the step.

### Summary of the Invention

### Problems to be solved by the Invention

It is an object of the invention to provide a supporting structure for wheel enabling the wheel to smoothly ride over an obstacle such as a step existing on a road or the like.

To solve the above problem, according to the invention, a supporting structure for wheel is provided in having a feature including a wheel rotating as grounding and supporting a vehicle body; and a rotary body rotatable only in the opposite direction to a rotating direction of the wheel in association with proceeding of the vehicle body where a rotation axis of the wheel is arranged in substantially parallel to a rotation axis of the rotary body, where the rotation axis of the rotary body is arranged at a rear of and above the rotation axis of the wheel with respect to the proceeding direction of the vehicle body, and where the rotation axis of the wheel is movable along an arc shaped track around the rotation axis of the rotary body as a center toward a rear side with respect to the proceeding direction of the vehicle body while the wheel and the rotary body move in association with each other.

According to such a supporting structure for wheel, when obstacle contacts to the wheel, the wheel moves in association with the rotary body, and the wheel rotates around the contact portion with the obstacle as a center as being pushed in a proceeding direction by the rotary body and moves toward an upper portion of the obstacle. That is, with an ordinary supporting structure for wheel in which the rotation axis of the wheel does not move at all, the wheel is moved toward an upper portion of an obstacle by means of force exerted to the rotation axis of the wheel, but with this invention, the wheel is moved toward an upper portion of the obstacle according to force pushing the wheel from an associated motion of the rotation axis and the wheel. Because the rotary body is located at a higher position than that of the rotation axis of the wheel, the distance between the point of force application and the fulcrum becomes longer than an ordinary situation, so that the wheel can be pushed up with smaller force than the ordinary situation. The wheel, therefore, can be pushed up on the obstacle with smaller force than the ordinary situation. It is to be noted that the rotary body does not rotate when the wheel is moved up on the obstacle, suppressing any revolution of the wheel, thereby rendering the wheel surely pushed up by the rotary body. Where the wheel moves up to the upper portion of the obstacle, the rotary body moves down as rotating in a direction opposite to the rotational direction that the wheel proceeds in the proceeding direction. The wheel moves in the proceeding direction as rotating where being pushed by the rotary body. After the wheel is moved up on the obstacle, the proceeding of the wheel can therefore be started smoothly and quickly. This invention has a simpler structure, so that it will never happen that members such as an arm or auxiliary member hit any obstacle to break down the structure, and so that this invention is very safe.

In this supporting structure for wheel, it is desirable that the rotation axis of the wheel is movable between a reference position at which the rotation axis of the wheel moves forward with respect to the proceeding direction of the vehicle body so as not to move the wheel and the rotary body in an associated manner and an associated movement position at which the wheel and the rotary body move in the associated manner.

Further, it is desirable that a plate member is provided on each side of the wheel and that the plate member has a guide groove to render the rotation axis of the wheel move in the guide groove. The guide groove desirably includes a first guide portion for guiding the rotation axis between the reference position and the associated movement position and a second guide portion for guiding the rotation axis rearward from the associated position with an ark shaped track. The upper surface of the first guide portion may be desirably formed to be inclined downward as going from the reference position to the associated movement position.

A protrusion may be formed on a lower surface of the first guide portion to render the rotation axis of the wheel movable between the reference position and the associated movement position over the protrusion. An elastic body may be formed for returning the rotation axis of the wheel from the associated movement position to the reference position.

With this invention, the structure may include a supporting member supporting the plate member in a movable manner in the proceeding direction of the vehicle body, where the rotary body is secured to the supporting member, and where the rotation axis of the wheel moves from the reference position to the associating movement position upon moving the plate member rearward with respect to the proceeding direction of the vehicle body and moves from the associating movement position to the reference position upon moving the plate member forward with respect to the proceeding direction of the vehicle body.

With the invented structure, the wheel and the rotation axis may be disposed in a movable state in association with each other, and the structure may includes an engaging member for rendering the rotary body rotatable only in the opposite direction to the rotational direction of the wheel in association with proceeding of the vehicle body upon contacting with the rotary body and rendering the rotary body freely rotatable in association with the rotation of the wheel upon separating from the rotary body.

The invented structure may also include a holding body for holding the wheel and the rotary body, and a holding body supporting member for supporting the holding body in a slidable manner along the proceeding direction of the vehicle body. This structure may have the engaging member secured to the holding body supporting member, and the rotary body comes in contact with the engaging member by moving the holding body rearward with respect to the proceeding direction of the vehicle body and is separated from the engaging member by moving the holding body forward with respect to the proceeding direction of the vehicle body.

An engaging member mover may be formed in which the engaging member comes in contact with the rotary body by pushing the engaging member from a rear side thereof and in which the engaging member is separated from the rotary body by separation from the engaging member.

Alternatively, this structure may include a holding body for holding the wheel, the rotary body and the engaging member, and a holding body supporting member for supporting the holding body movably along the proceeding direction of the vehicle body. In this structure, where the engaging member mover is secured to the holding body supporting member, the engaging member is pushed from a rear portion thereof with the engaging member mover by moving the holding body rearward with respect to the proceeding direction of the vehicle body, and the engaging member mover separates from the engaging member by moving the holding body forward with respect to the proceeding direction of the vehicle body.

In a preferred embodiment of the invention, an engaging member moving apparatus may be formed for moving the engaging member so as to contact to and separate from the rotary body. Furthermore, a rotary body moving apparatus may be formed for moving the rotary body so as to contact to and separate from the wheel.

It is also desirable that a plate member is provided on each side of the wheel and has a guide groove and that the rotation axis of the wheel is moved in the guide groove. The holding body may preferably has a plate member disposed on each side of the wheel, where the plate member has a guide groove, and where the rotation axis of the wheel is moved in the guide groove. The rear end of the guide groove may preferably be disposed in front of the rotary body in the proceeding direction of the wheel.

The wheel and the rotary body can move in an associated manner by contacting a circumferential surface of the wheel with a circumferential surface of the rotary body. A small wheel having the same rotation axis to that of the wheel may preferably be provided at a circumferential surface of the wheel, and the wheel and the rotary body are moved in an associated manner by contacting the circumferential surface of the small wheel with the circumferential surface of the rotary body. The wheel can be a dual wheel caster.

In a preferred embodiment of the invention, a second rotary body rotatable only in the direction opposite to the direction of the rotary body is provided where the rotation axis of the wheel and the rotation axis of the second rotary body are disposed substantially parallel to each other, and where the rotation axis of the second rotary body is disposed in front of and on an upper side of the rotation axis of the wheel with respect to the proceeding direction of the vehicle body, the rotation axis of the wheel is movable forward along an arc-shaped track extending around the rotation axis of the second rotary body as a center as moving the wheel and the second rotary body in an associated manner.

To solve the above problems, according to the invention, there provides a supporting structure for wheel including a wheel rotating as grounding and supporting a vehicle body, and a rotary body having a radius smaller than a radius of the wheel, where the wheel and the rotary body rotate around the same rotation axis as a center and provides a rotation limiting mechanism allowing the rotation of the rotary body only in the opposite direction to the rotational direction of the wheel in accompany with proceeding of the vehicle body correlated to the wheel, and a stopper disposed rearward and downward from the rotation axis with respect to the proceeding direction of the vehicle body, where the rotary body is movable rearward and downward with respect to the proceeding direction of the vehicle body as being in contact with the stopper, and where the rotation axis is movable rearward and downward with respect to the proceeding direction of the vehicle body.

According to such a supporting structure for wheel, by rendering the wheel, the rotary body, and the rotation axis movable, the rotary body comes in contact with the stopper when an obstacle hits the wheel, and the wheel and the rotary body move toward an upper portion of the obstacle as being pushed in the proceeding direction by the stopper. This structure allows the wheel to move up on the obstacle smoothly. After the wheel is moved up on the obstacle, proceeding of the wheel can be started smoothly. This invention has a simpler structure, so that it will never happen that members such as an arm or auxiliary member hit any obstacle to break down the structure, and so that this invention is very safe.

In this supporting structure for wheel, where the wheel is arranged at an outer peripheral surface of the rotary body, and where the rotation limiting mechanism is formed between an inner peripheral surface of the wheel and the outer peripheral surface of the rotary body, the rotary body can be made projected from a side of the wheel, and a portion projected from the side of the wheel can be made in contact with the stopper.

The rotation axis can be formed movable from the reference position at which the rotation axis is moved forward as a position that the rotary body and the stopper do not contact to each other to the contact position at which the rotary body and the stopper contact to each other.

The plate member may be formed on each side of the wheel, and a guide groove is provided at the plate member to render the rotation axis movable in the guide groove. In this structure, the stopper includes an inclined surface which is more inclined downward as proceeds to the opposite direction to the proceeding direction of the vehicle body; the rotary body moves along the inclined surface; the guide groove includes a first guide portion for guiding the rotation axis between the reference position and the contact position and a second guide portion for guiding the rotation axis with a linear track extending substantially parallel to the inclined surface. The stopper may have a curved surface extending in a shape of an arc-shaped curve; the rotary body may move along the curved surface; and the guide groove may include a first guide portion for guiding the rotation axis between the reference position and the contact position and a second guide portion for guiding the rotation axis with a curved track extending in an arc-shape.

Furthermore, an upper surface of the first guide portion may be inclined downward as goes from the reference position to the contact position. The first guide portion may be formed with a protrusion on a lower surface of the first guide portion, and the rotation axis may move between the reference position and the contact position over the protrusion. An elastic body for urging the rotation axis from the contact position to the reference position, may be preferably arranged.

With the supporting structure for wheel, a support member for supporting the plate member in a manner movable in the proceeding direction of the vehicle body, may be provided, and the rotation axis moves from the reference position to the contact position by rearward motion of the plate member with respect to the proceeding direction of the vehicle body and moves from the contact position to the reference position by forward motion of the plate member with respect to the proceeding direction of the vehicle body.

There may be formed with a stopper moving apparatus for moving the stopper so as to contact to and separate from the wheel. A guide groove on a circumferential surface of the rotary body may be preferably arranged, and the stopper may include a rail for guiding the guide groove. The wheel can be a dual wheel caster.

### Advantages of the Invention

According to the invention, the wheel can be moved up on an obstacle such as steps or the like smoothly. After the wheel is moved up on the obstacle, the proceeding of the wheel can be started smoothly. In a case where obstacles are successively located, the wheel can be moved up smoothly, and proceeding can be started quickly, so that the supporting structure for wheel provides a smooth drive. This invention has a simpler structure, so that it will never happen that members such as an arm or auxiliary member hit any obstacle to break down the structure, and so that this invention is very safe.

### Brief Description of the Drawings

Fig. 1 is a side view showing a supporting structure for wheel according to a first embodiment of the invention;
Fig. 2 is a rear view showing the supporting structure for wheel according to a first embodiment of the invention;
Fig. 3 is an illustration showing a guide groove in an enlarged manner;
Fig. 4 is an illustration showing a state that the wheel moves forward on a flat surface;
Fig. 5 is an illustration showing a state that the wheel hits a step portion;
Fig. 6 is an illustration showing a state of a midway that the wheel moves up to a top of the step portion;
Fig. 7 is an illustration showing a state immediately after the wheel moves up on the step portion;
Fig. 8 is an illustration showing a state that the wheel is pushed by a gear on the step portion;
Fig. 9 is an illustration showing a state that the wheel moves on the step portion and separates from the gear;
Fig. 10 is an illustration showing an embodiment in which a rear end of the guide groove is designed to be located at rear of a rotation axis of the gear;
Fig. 11 is an illustration showing an embodiment in which the wheel is moved up on the step portion upon adjustment of an inclined angle of the vehicle body;
Fig. 12 is an illustration showing a state that the wheel moves at rear of the gear;
Fig. 13 is an illustration showing an embodiment in which a protrusion is formed in the guide groove;
Fig. 14 is a side view showing a supporting structure for wheel having an elastic body according to the first embodiment of the invention;
Fig. 15 is a rear view showing a supporting structure for wheel having an elastic body according to the first embodiment of the invention;
Fig. 16 is a side view showing a supporting structure for wheel in which a rotary body is in contact with a periphery of a small wheel according to the first embodiment of the invention;
Fig. 17 is a rear view showing a supporting structure for wheel in which the rotary body is in contact with the periphery of the small wheel according to the first embodiment of the invention;
Fig. 18 is a side view showing a supporting structure for wheel in which a dual wheel caster is supported according to the first embodiment of the invention;
Fig. 19 is a rear view showing a supporting structure for wheel in which the dual wheel caster is supported according to the first embodiment of the invention;
Fig. 20 is an illustration showing another state of the gear and an engaging member;
Fig. 21 is a side view showing a supporting structure for wheel in which a holding body for holding the wheel is designed to slide according to the first embodiment of the invention;
Fig. 22 is a rear view showing the supporting structure for wheel in which the holding body for holding the wheel is designed to slide according to the first embodiment of the invention;
Fig. 23 is a cross section showing in an enlarged manner a top portion of the holding body and a holding body supporting member;
Fig. 24 is a schematic cross section showing a state that the holding body slides rearward;
Fig. 25 is a side view showing the supporting structure for wheel having a rotary body's rotation axis supporting body and a rotary body's rotation axis guide groove according to the first embodiment of the invention;
Fig. 26 is a rear view a side view showing the supporting structure for wheel having the rotary body's rotation axis supporting body and the rotary body's rotation axis guide groove according to the first embodiment of the invention;
Fig. 27 is an illustration showing a rotary member arranged in a holding body supporting member according to the first embodiment of the invention;
Fig. 28 is a side view showing a supporting structure for wheel having an elastic body urging the holding body as to return the holding body forward according to the first embodiment of the invention;
Fig. 29 is a side view showing a supporting structure for wheel in which the wheel and the gear are held at the holding body and in which an engaging plate is secured to a holding body holding member according to the first embodiment of the invention;
Fig. 30 is a rear view showing the supporting structure for wheel in which the wheel and the gear are held at the holding body and in which the engaging plate is secured to the holding body holding member according to the first embodiment of the invention;
Fig. 31 is a side view showing a supporting structure for wheel in which the wheel, the gear, and the engaging plate are held to the holding body and in which an engaging member mover is secured to a holding body supporting member according to the first embodiment of the invention;
Fig. 32 is a side view showing the supporting structure for wheel in which the wheel, the gear, and the engaging plate are held to the holding body and in which the engaging member mover is secured to the holding body supporting member according to the first embodiment of the invention, and showing in an enlarged manner a state that the holding body moves correlatively rearward with respect to the holding body supporting member;
Fig. 33 is a side view showing a supporting structure for wheel in which the engaging plate is moved with the engaging member moving apparatus to contact with the gear according to the first embodiment of the invention;
Fig. 34 is an illustration showing a state that the engaging plate is moved with the engaging member moving apparatus to contact with the gear;
Fig. 35 is a side view showing a supporting structure for wheel in which the gear is moved with the rotary body moving apparatus to contact with the wheel according to the first embodiment of the invention;
Fig. 36 is a side view showing a supporting structure for wheel having a second rotary body according to the first embodiment of the invention;
Fig. 37 is an illustration showing in an enlarged manner a guide groove of a supporting structure for wheel having the second rotary body according to the first embodiment of the invention;
Fig. 38 is an illustration showing a supporting structure for wheel having the second rotary body and an elastic body urging the rotation axis of the wheel as to be returned to the reference position according to the first embodiment of the invention;
Fig. 39 is a side view showing a supporting structure for wheel according to the second embodiment of the invention;
Fig. 40 is a rear view showing a supporting structure for wheel according to the second embodiment of the invention;
Fig. 41 is an illustration showing a guide groove in an enlarged manner;
Fig. 42 is an illustration showing a state that the wheel proceeds on a flat surface;
Fig. 43 is an illustration showing a state that the wheel hits a step portion;
Fig. 44 is an illustration showing a state in a midway that the wheel, the rotary body, and the rotation axis move toward an upper portion of the step portion;
Fig. 45 is an illustration showing a state immediately after the wheel, the rotary body, and the rotation axis move up on the upper portion of the step portion;
Fig. 46 is an illustration showing a state that the rotary body is pushed by a stopper on the step portion;
Fig. 47 is an illustration showing a state that the wheel, the rotary body, and the rotation axis move forward on the upper portion of the step portion to separate the rotary body from the stopper;
Fig. 48 is a cross section showing a second embodiment of the invention in which a rail is formed at the stopper;
Fig. 49 is an illustration showing a shape of the guide groove according to another modification of the second embodiment of the invention;
Fig. 50 is an illustration showing a shape of the guide groove according to another modification of the second embodiment of the invention;
Fig. 51 is a side view showing shapes of the stopper and the guide groove according to another modification of the second embodiment of the invention;
Fig. 52 is an illustration showing a state in a midway that the wheel, the rotary body, and the rotation axis move toward the upper portion of the step portion in the supporting structure for wheel according to another modification of the second embodiment of the invention;
Fig. 53 is a side view showing a supporting structure for wheel having an elastic body to the rotation axis according to the second embodiment of the invention;
Fig. 54 is a rear view showing the supporting structure for wheel having the elastic body to the rotation axis according to the second embodiment of the invention;
Fig. 55 is an illustration showing the second embodiment of the invention in which a protrusion is formed at the guide groove;
Fig. 56 is a side view showing a supporting structure for wheel having a rotary body on a side of the wheel according to the second embodiment of the invention;
Fig. 57 is a rear view showing a supporting structure for wheel having a rotary body on a side of the wheel according to the second embodiment of the invention;
Fig. 58 is a rear view showing a supporting structure for wheel depicting an example of rotation limiting mechanism having a rotary body on a side of the wheel according to the second embodiment of the invention;
Fig. 59 is a side view showing a supporting structure for wheel having a flange of a rotary body on a side of the wheel according to the second embodiment of the invention;
Fig. 60 is a rear view showing a supporting structure for wheel having the flange of the rotary body on the side of the wheel according to the second embodiment of the invention;
Fig. 61 is a side view showing a supporting structure for wheel structured as supporting a dual wheel caster according to the second embodiment of the invention;
Fig. 62 is a rear view showing the supporting structure for wheel structured as supporting the dual wheel caster according to the second embodiment of the invention;
Fig. 63 is a side view showing a supporting structure for wheel structured as sliding the holding body holding the wheel according to the second embodiment of the invention;
Fig. 64 is a rear view showing the supporting structure for wheel structured as sliding the holding body holding the wheel according to the second embodiment of the invention;
Fig. 65 is a cross section showing in an enlarged manner an upper portion of the holding body and the holding body supporting member;
Fig. 66 is a schematic side view showing a supporting structure for wheel structured as sliding the holding body holding the wheel according to the second embodiment of the invention;
Fig. 67 is an illustration showing the second embodiment of the invention in which a rotary member is formed inside the holding body supporting member;
Fig. 68 is a side view showing a supporting structure for wheel having an elastic body for urging the holding body to be returned forward according to the second embodiment of the invention; and
Fig. 69 is a side view showing a supporting structure for wheel structured as moving the stopper with a stopper moving apparatus according to the second embodiment of the invention.

### Description of Reference Numbers

In the drawings, numeral P1 is a reference position; numeral P2 is an associated movement position; numeral R is a track; numeral 1 is a supporting structure for wheel; numeral 2 is a wheel; numeral 3 is a frame; numeral 5 is a gear; numeral 8 is a rotation axis; numeral 17 is rotation axis; numeral 25 is a guide groove; numeral P1' is a reference position; numeral P2' is a contact position; numeral R' is a track; numeral 201 is a supporting structure for wheel; numeral 202 is a wheel; numeral 203 is a wheel chair body; numeral 204 is a frame; numeral 205 is a rotary body; numeral 207 is a rotation limiting mechanism; numeral 208 is a rotation axis; numerals 212A, 212B are stoppers; numeral 213 is an inclined surface; number 225 is a guide groove.

### Best Embodiments to Use the Invention

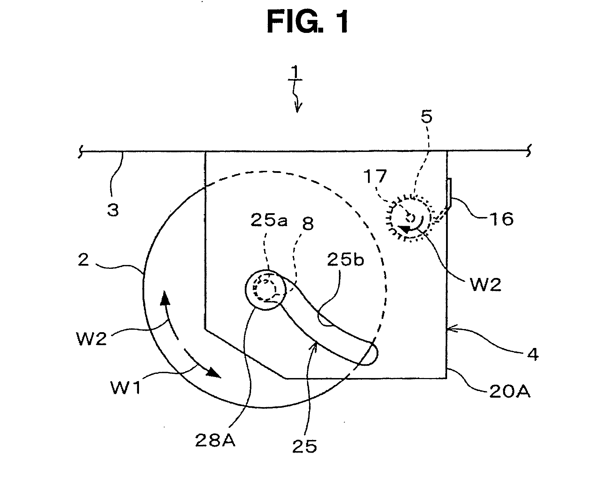

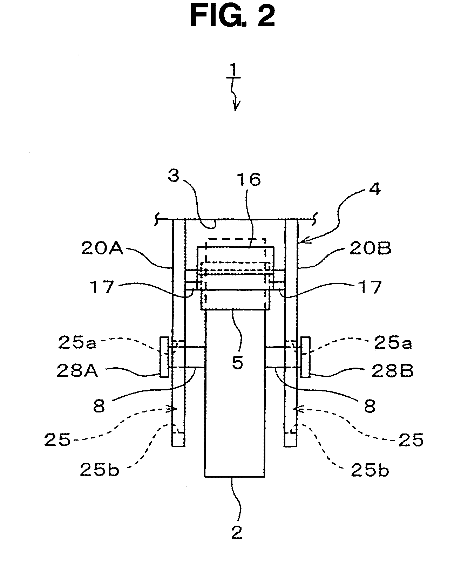

Hereinafter, preferred embodiments of the invention are described. A supporting structure for wheel 1 according to a first embodiment of the invention as shown in Fig. 1 and Fig.2 supports a wheel 2 formed in a substantially disc shape. The wheel 2 is a front wheel of a wheel chair as an example of a vehicle body, and rotates as grounding while supporting a front portion of the wheel chair body 3. As shown in Fig. 1, the supporting structure for wheel 1 has a frame 4 securely supported to the wheel chair body 3, and a gear 5 as a rotary body. The wheel 2 is mounted around a rotation axis 8, as a center, positioned at a center of the wheel 2 in a rotatable manner in a rotational direction W1 (in a counterclockwise direction in Fig. 1) according to proceeding (forward) of the wheel chair body 3 to a front side of the wheel chair body 3 (to a left side in Fig. 1) and in a rotational direction W2 (in a clockwise direction in Fig. 1) according to receding (backward) of the wheel chair body 3 to a rear side of the wheel chair body 3 (to a right side in Fig. 1). The gear 5 is disposed at rear of and over the wheel 2 (a right and upper side in Fig. 1) with respect to the proceeding direction of the wheel chair body 3, and is supported with the frame 4.

An engaging plate 16 is formed at rear of as an engaging member for rotating the gear 5 only in one direction. The gear 5 is rotatable around a rotation axis 17 as a center located at a center of the gear 5. The rotation axis 17 is disposed as extending in substantially parallel to the rotation axis 8 of the wheel 2 and disposed at rear of and above the rotation axis 8 of the wheel 2 with respect to the proceeding direction of the wheel 2, and is supported by the frame 4. The frame 4 also supports the engaging plate 16. A lower portion of the engaging plate 16 is formed as more inclined downward as going to the front side, and is disposed as to contact with a lower end of the engaging plate 16 below the rotation axis 17 between teeth of the gear 5. That is, the gear 5 is rotatable along a lower surface of the engaging plate 16 in the rotational direction W2 in the same direction as the wheel 2 at a time of receding, but if rotated in the rotational direction W1 in the same direction as the wheel 2 at a time of proceeding, the gear 5 cannot be rotataed because the teeth are suppressed by the lower end of the engaging plate 16. The gear 5 can therefore rotate in the rotational direction W2 as the opposite direction to the rotational direction W1.

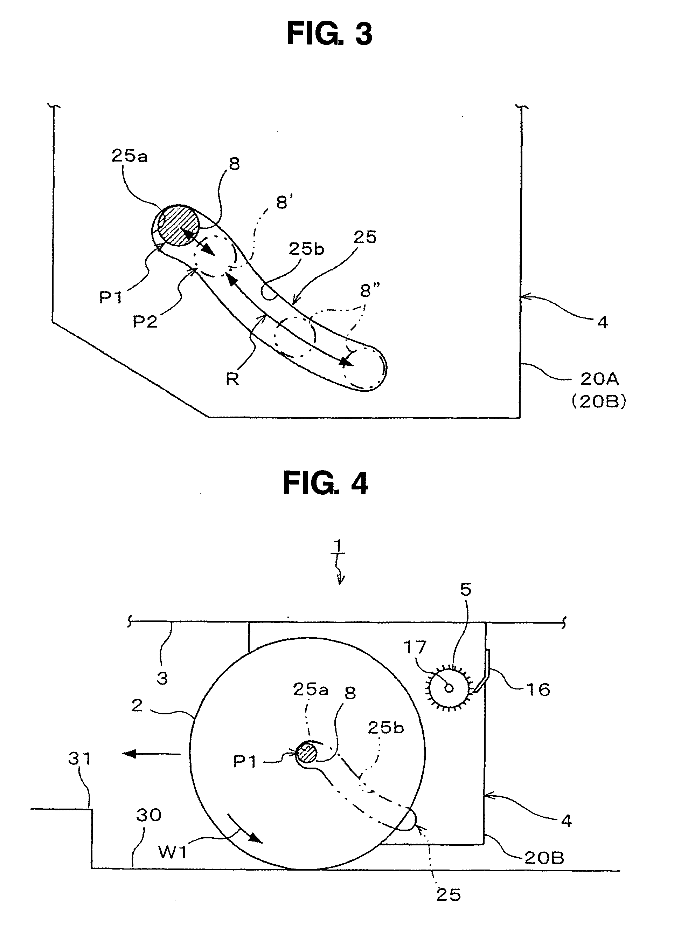

As shown in Fig. 3, the rotation axis 8 is movable between a reference position P1 at which the rotation axis 8 is moved forward in the proceeding direction of the wheel chair body 3 up to a position that the wheel 2 and the gear 5 do not move in an associated manner and an associated movement position P2 at which a circumferential surface of the wheel 2 and a circumferential surface of the gear 5 are contacted to each other and moved in an associated manner. The rotation axis 8 is movable along a track R extending in an arc shape around the rotation axis 17 of the gear 5 as a center, toward a rear side and a lower portion with respect to the associated movement position P2 as the wheel 2 and the gear 5 are moved in the associated manner. The track R is a track extending long an arc whose radius has a length of summation of the radius of the gear 5 and the radius of the wheel 2 around the rotation axis 17 of the gear 5 as a center.

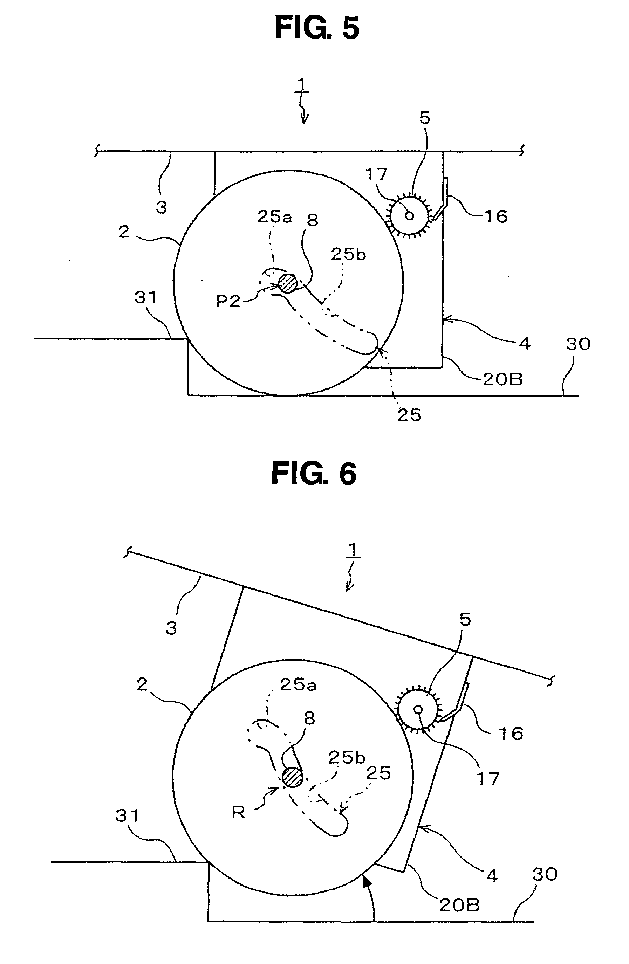

As shown with a solid line in Fig. 3, where the rotation axis 8 is located at the reference position P1, the circumferential surface of the wheel 2 is separated from the teeth formed on the circumferential surface of the gear 5 as shown in Fig. 4, and the wheel 2 and the gear 5 are in a state that not moving in the associated manner. As shown with a single dotted chain line in Fig. 3, where the rotation axis 8' is located at the associated movement position P2, the wheel 2 and the gear 5 move in the associated manner and become rotatable upon contact between the circumferential surface of the wheel 2 and the teeth of the gear 5 as shown in Fig. 5. As shown with a single dotted chain line in Fig. 3, where the rotation axis 8" moves along the track R, the wheel 2 rotates around the gear 5 as a center, as in a state that the wheel 2 and the gear 5 move in the associated manner and become rotatable upon contact between the circumferential surface of the wheel 2 and the teeth of the gear 5 as shown in Fig. 6.

As shown in Fig. 2, the frame 4 has plate members 20A, 20B disposed parallel to each other. The plate members 20A, 20B are disposed upright to a flat surface (ground) on which the wheel chair body 3 drives, along a direction directing the proceeding direction of the wheel chair body 3, and are arranged respectively on right and left sides of the wheel 2. The rotation axis 17 of the gear 5 as described above is supported by the plate members 20A, 20B, respectively at each of right and left ends.

A guide groove 25 is formed at the plate members 20A, 20B, respectively for guiding the rotation axis 8 of the wheel 2 so as to move along the reference position P1, the associated movement position P2, and the track R. As shown in Fig. 2, the guide groove 25 of the plate member 20A guides a left end of the rotation axis 8, whereas the guide groove 25 of the plate member 20B guides a right end of the rotation axis 8. The respective guide grooves 25, as shown in Fig.3, are composed of a first guide portion 25a for guiding the left or right end of the rotation axis 8 between the reference position P1 and the associated movement position P2, and a second guide portion 25b for guiding the left or right end of the rotation axis 8 from the associated movement position P2 rearward along the track R formed in the arc shape.

The second guide portion 25b is formed, along the track R, in the arc shape curving downward as going rearward. The rear end of the first guide portion 25a and the upper end of the second guide portion 25b are continuous, and the rotation axis 8 is moveable from the first guide portion 25a to the second guide portion 25b and from the second guide portion 25b to the first guide portion 25a. A top surface of the first guide portion 25a is formed as inclined more downward as approaching from the reference position P1 to the associated movement position P2. With this structure, where it is in a state that the wheel chair body 3 is on the flat surface, because force produced by the self weight of the wheel chair body 3 is exerted to a top surface of the rotation axis 8 from an upper inclined surface of the first guide portion 25a, the rotation axis 8 is pushed forward by the upper inclined surface of the first guide portion 25a, and is pressed by the top end of the first guide portion 25a. Therefore, where the wheel chair body 3 is proceeding on the flat surface, the rotation axis 8 is prevented from moving rearward from the reference position P1 to the associated movement position P2. The rotation axis 8 can be moved smoothly from the reference position P1 to the track R. It is desirable to locate the rear end of the second guide portion 25b at a position in front of the position immediately below the rotation axis 17 of the gear 5. This structure surely prevents the wheel 2 from moving to the rear side of the gear 5. If the rear end of the second guide portion 25b is located at rear of the position immediately below the rotation axis 17 of the gear 5, where the rotation axis 8 moves to a rear side of the rotation axis 17 of the gear 5 to render the wheel 2 move to a rear side of the gear, force produced by the self weight of the wheel chair body 3 is exerted to an upper surface of the rotation axis 8 from the upper surface of the second guide portion 25b, and the rotation axis 8 is pushed rearward by the upper surface of the rear portion of the second guide portion 25b and pressed by the rear end of the second guide portion 25b, thereby rendering difficult returning of the wheel 2 to the front side of the gear 5. Such a situation can be avoid by arrangement of the rear end of the second guide portion 25b to a front side of the position immediately below the rotation axis 17. It is also desirable to form the widths of the first guide portion 25a and the second guide portion 25b slightly wider than the diameter of the rotation axis 8 to render the rotation axis 8 move and revolve smoothly with a margin inside the first guide portion 25a and the second guide portion 25b. The first guide portion 25a and the second guide portion 25b of the plate members 20A, 20B are formed in a shape and at a position symmetric with respect to a plane, and the rotation axis 8 is supported in an upright fashion with respect to the plate members 20A, 20B.

As shown in Fig.1 and Fig. 2, flange portions 28A, 28B are formed on outer sides of the plate members 20A, 20B, respectively, on right and left sides of the rotation axis 8 of the wheel 2. Where the wheel 2 is attached to the frame 4, the wheel 2 is disposed between the plate members 20A, 20B in a state that the rotation axis 8 is oriented upright to the respective plate members 20A, 20B, and the rotation axis 8 is formed so that right and left ends penetrate inner sides of the first guide portion 25a and the second guide portion 25b of the plate members 20A, 20B. The flange portions 28A, 28B are disposed on outer sides of the first guide portion 25a and the second guide portion 25b of the plate members 20A, 20B. Accordingly, the rotation axis 8 is prevented from detaching from the inner sides of the first guide portion 25a and the second guide portion 25b of the plate members 20A, 20B, and the rotation axis 8 is surely held at the inner sides of the first guide portion 25a and the second guide portion 25b of the plate members 20A, 20B.

Next, operation of the supporting structure for wheel 1 according to the first embodiment of the invention thus structured is described. As shown in Fig. 4, where the wheel chair body 3 is proceeding on a flat surface extending substantially horizontally, the rotation axis 8 is located at the reference position P1, and the left and right ends of the rotation axis 8 are placed in the first guide portion 25a of the plate members 20A, 20B, thereby isolating the outer peripheral surface of the wheel 2 and the teeth of the gear 5. The wheel 2 moves forward as rotating in the rotational direction W1 around the rotation axis 8 as a center. The upper edge of the first guide portion 25a of the plate members 20A, 20B is in contact with the upper portion of the left and right ends of the rotation axis 8, and the wheel chair body 3 is supported to the wheel 2 via the frame 4 and the rotation axis 8. The rotation axis 8 is pushed forward by the upper inclined surface of the first guide portion 25a and is secured to the upper end of the first guide portion 25a, and never leave from the reference position P1. Therefore, the wheel 2 is held stably to the frame 4, thereby traveling the wheel chair body 3 smoothly.

If a step portion 31 as an obstacle is projecting from the flat surface 30 in front of the wheel 2, a front lower portion of the outer circumferential surface of the wheel 2 hits a corner of the step portion 31. Where the level of the step portion 31 is adequately lower than the size of the wheel 2, the wheel 2 is not stopped by hitting to the step portion 31, and can move forward upon riding over the step portion 31 as in a state that the left and right ends of the rotation axis 8 are positioned in the first guide portion 25a.

On the other hand, in a case where the level of the step portion 31 is comparatively higher than the size of the step portion 31 to stop the proceeding of the wheel 2, the wheel chair body 3 and the frame 4 move forward as the wheel 2 is in contact wit the step portion 31. The wheel 2 moves correlatively rearward with respect to the wheel chair body 3 and the frame 4, and the rotation axis 8 moves from the reference position P1 to the associated movement position P2. The left and right ends of the rotation axis 8 move to a connecting portion of the first guide portion 25a and the second guide portion 25b. The left and right ends of the rotation axis 8 can move smoothly toward the second guide portion 25b upon guided with the first guide portion 25a of the respective plate members 20A, 20B. Where the rotation axis 8 moves to the associated movement position P2, the outer circumferential surface of the wheel 2 contacts to the teeth of a front lower portion of the gear 5. The wheel 2 enters in a state that the wheel 2 is rotatable around the gear 5 as a center and in a state that the wheel 2 is placed between a corner of the step portion 31 and the gear 5.

Thereafter, where the wheel chair body 3 and the frame 4 further move forward, the gear 5 pushes the outer circumferential surface of the wheel 2 in a proceeding direction. As shown in Fig. 6, the wheel 2 then starts moving and rotating in a direction toward an upper surface of the step portion 31 around the corner of the step portion 31 by force that the gear 5 pushes the outer circumferential surface of the wheel 2. Because the gear 5 herein rotates only in the rotational direction W2 as one way, the gear 5 does not rotate by opposite force out of the gear 5 even where the wheel 2 is pushed by the front lower portion of the gear 5, thereby suppressing the revolution of the wheel 2, and thereby transmitting surely propelling force of the wheel chair body 3 in the proceeding direction to the outer circumferential surface of the wheel 2 via the gear 5. The gear 5 therefore can push up the wheel 2 certainly.

The wheel 2, while moving as rotating in a direction going up to the upper surface of the step portion 31, moves as rotating in the rotational direction W1 around the gear 5 as a center correlatively when viewed from the gear 5. The rotation axis 8 of the wheel 2 can move smoothly along the track R in the second guide portion 25b, where the left and right ends are guided with the second guide portion 25b of the plate members 20A, 20B, and moves as rotating in the rotational direction W1 around the rotation axis 17 of the gear 5 as a center. While the right and left ends of the rotation axis 8 move in the second guide portion 25b, the right and left ends of the rotation axis 8 are separated from the edge of the second guide portion 25b and are in a floated state at the inner side of the second guide portion 25b. The wheel chair body 3 moves forward and upward as supported to the wheel 2 via the frame 4 and the gear 5.

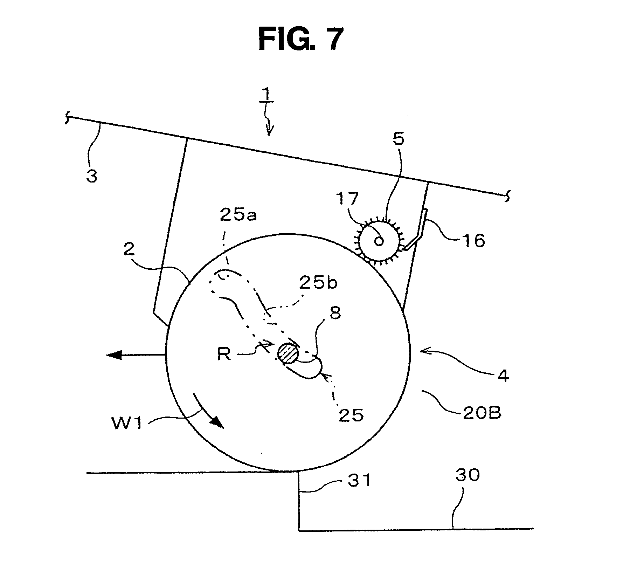

Thus, the wheel 2 can move up on the upper surface of the step portion 31 as shown in Fig. 7 around the corner of the step portion 31 as a center by force that the gear 5 pushes the outer circumferential surface of the wheel 2. Advantages of the supporting structure for wheel 1 according to the first embodiment of the invention is described herein in comparison with an ordinary supporting structure for wheel, or namely a structure in which the rotation axis 8 is secured to the frame 4. The propelling force in the proceeding direction of the wheel chair body 3 is ordinarily transmitted to a center portion of the wheel 2 via the frame 4 and the rotation axis 8, and the wheel 2 moves up by using the corner of the step portion 31 as a fulcrum according to the force exerted by the rotation axis 8. To the contrary, with the supporting structure for wheel 1 according to the first embodiment of the invention, the wheel 2 moves up by using the corner of the step portion 31 as a fulcrum according to the force that the gear 5 pushes the outer circumferential surface of the wheel 2. Because the gear 5 is located at a higher position than the rotation axis 8, the level of a force application point becomes higher than the ordinary situation. That is, because in this embodiment the distance between the force application point and the fulcrum are longer than the ordinary situation, the wheel 2 can be moved to the upper portion of the step portion 31 with small force. Accordingly, the wheel 2 can be moved up on the step portion 31 smoothly. Form a macroscopic view, a virtual wheel having a radius of the distance between the rotation axis 17 and the corner of the step portion 31 with the gear serving as a rotational center is thought to be in a state moving to the upper surface of the step portion 31. This virtual wheel has a size adequately large with respect to the level of the step portion 31 capable of riding over the step portion 31 easily. With such operation, the supporting structure for wheel 1 as a whole can be easily moved up on the step portion 31.

Where the wheel 2 moves to the upper side of the step portion 31, the wheel 2 rotates in the rotational direction W1 as shown in Fig. 7 around the rotation axis 8 and moves forward, and the gear 5, the frame 4, and the wheel chair body 3 move down by the self weight. The gear 5 moves downward as sliding along the outer circumferential surface of the wheel 2 while rotated in the rotational direction W2 around the rotation axis 17 as a center. The wheel 2 rotates in the rotational direction W1 by pushing from the gear 5 and moves forward. After the wheel 2 moves up on the step portion 31, the wheel 2 can be started proceeding smoothly.

While the wheel 2 proceeds and while the gear 5, the frame 4, and the wheel chair body 3 move down, the wheel 2 rotates in the rotational direction W2 around the gear 5 as a center and moves when seen correlatively from the gear 5. The rotation axis 8 of the wheel 2 can be moved smoothly along the track R in the second guide portion 25b as guided with the second guide portion 25b, and the axis 8 rotates and moves in the rotational direction W2 around the rotation axis 17 of the gear 5 as a center. While the right and left ends of the rotation axis 8 move in the second guide portion 25b, the right and left ends of the rotation axis 8 separates from the edge of the second guide portion 25b, and is in a state floating in the second guide portion 25b. The wheel chair body 3 moves forward as supported by the wheel 2 via the frame 4 and the gear 5 and moves downward.

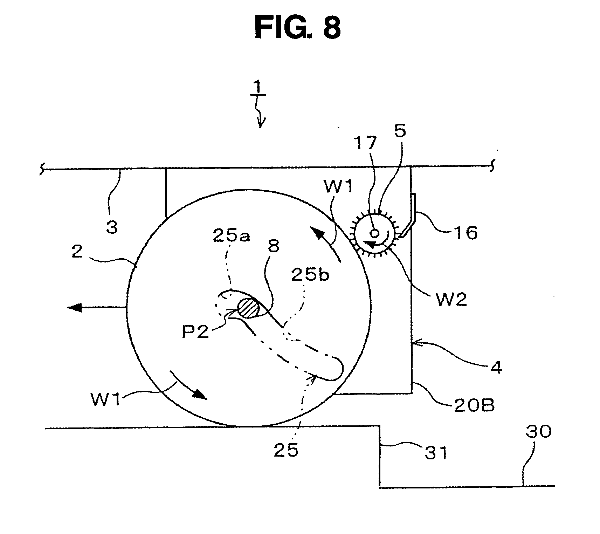

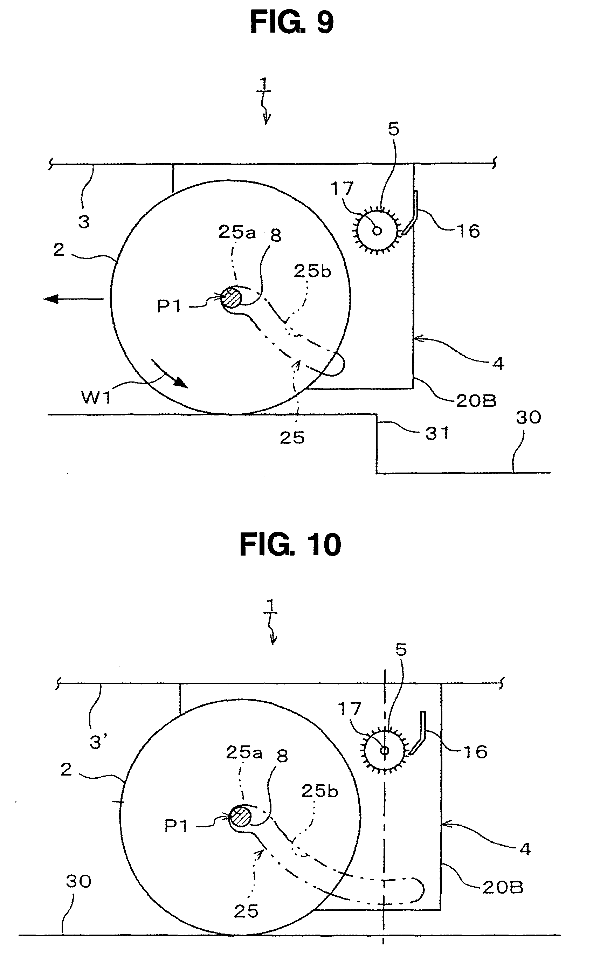

Then, as shown in Fig. 8, the rotation axis 8 reaches the associated movement position P2, and as shown in Fig. 9, the wheel 2 moves forward correlatively to the frame 4 and the wheel chair body 3, and the rotation axis 8 moves from the associated movement position P2 to the reference position P1, thereby moving the left and right ends of the rotation axis 8 from the inner side of the first guide portion 25a to the inner side of the first guide portion 25a, and thereby isolating the outer circumferential surface of the wheel 2 from the gear 5. The wheel 2 thus enters in a state rotatable in the rotational directions W1, W2 around the rotation axis 8 as a center in substantially the same way as the state before hitting the step portion 31, and the upper edge of the first guide portion 25a of the plate members 20A, 20B contacts with the upper portion of the right and left ends of the rotation axis 8, so that the wheel chair body 3 enters in a state supported by the wheel 2 via the frame 4 and the rotation axis 8.

It is to be noted that although the right and left ends of the rotation axis 8 may contact to the rear end of the second guide portion 25b, the rotation axis 8 does not move at rear of the gear 5 because the rear end of the second guide portion 25b is located on a front side of the gear 5. Accordingly, the gear 5 may not move to the front side of the wheel 2 correlatively, and the gear 5 surely pushes the wheel 2 in the proceeding direction. Where it is in a state that the right and left ends of the rotation axis 8 contacts to the rear end of the second guide portion 25b, the wheel 2 can be moved easily to the upper portion of the step portion 31 because the gear 5 pushes the rear upper portion of the outer circumferential surface of the wheel 2, and because the rear end of the second guide portion 25b lifts up the right and left ends of the rotation axis 8.

According to the supporting structure for wheel 1 of the first embodiment of this invention, since the gear 5 pushes the wheel 2 from the rear upper portion to the front side, the wheel 2 can be moved up on the step portion 31 smoothly. The wheel 2 can be moved forward surely and quickly upon moving down the gear 5 quickly after the wheel 2 is moved up on the step portion 31 by the structure that the gear 5 rotates only in the rotational direction W2. The wheel 2 therefore can travel smoothly even where the step portion 31 exists. Furthermore, even where obstacles such as step portions 31 are located continuously or successively, the wheel 2 can be smoothly moved up, and the proceeding can be started quickly, so that smooth traveling can be done. This structure is simple and may not be broken where an arm or auxiliary members hit obstacles, so that it is safe.

As described above, though an example of preferred embodiments of the supporting structure for wheel 1 according to the first embodiment of the invention is exemplified, this invention is not limited to the feature described herein. For example, although in Fig. 1 to Fig. 9 the supporting structure for wheel 1 supports the front wheel of the wheel chair body 3 as the wheel 2, the supporting structure for wheel 1 according to the first embodiment of the invention is applicable to the rear wheel of the wheel chair so that the step portion at rear of the wheel chair body 3 is moved over smoothly when the wheel chair body 3 recedes. Moreover, this invention is applicable to anything supporting the wheels such as various transporting devices, moving devices, transporting apparatuses, and moving apparatuses other than wheel chairs, for example, carts, wheel chairs, baby strollers, stretchers, automobile, work machines, etc.

Although in Fig. 1 to Fig. 9 the supporting structure for wheel 1 according to the first embodiment of the invention is exemplified as that the rotary body is the gear 5, this invention is not limited to these and is applicable to any structure rotatable in one way. The shape of the rotary body can be, e.g., discs, rings, cylinders, cylinders with hallow, and spheres, and plates, rings, pillars, and cylinders in a shape of polygons having a certain number of corners, as well as polygon bodies having a certain number of planes, and discs, rings, cylinders, cylinders with hallow, and spheres having many projections or recesses on outer peripheral surfaces.

A control mechanism may be formed for controlling the rotation speed of the rotary body. In this structure, it is conceivable that frictional resistance or the like is used as the controlling mechanism to control the rotational speed of the rotary body to be at an excessively high rate. With the installation of such a control mechanism, the rotation of the rotary body (i.e., gear 5) is controlled when the wheel 2 rotates in the rotational direction W1 around the rotation axis 8 as a center as shown in Fig. 7 after the wheel 2 moves up on the step portion 31, so that this mechanism can suppress the frame 4 and the wheel chair body 3 from abruptly moving downward due to the self weight. This allows impacts and vibrations occurring when the wheel chair body 3 moves down due to the self weight after moving up on the wheel 2, to be absorbed. To improve feelings when riding, an elastic means such as a spring or rubber between the wheel chair body 3 and the wheel 2 may be arranged advantageously. With or in lieu of impact absorbing means, attenuating means such as air suspensions, hydraulic cylinders, and the like may be provided.

Although in Fig. 1 to Fig. 9 the supporting structure for wheel 1 according to the first embodiment of the invention is exemplified as that the frame 4 is secured to the wheel chair body 3, the frame 4 can be made movable with respect to the wheel chair body 3. In this structure, this invention is applicable to a caster pivotally movable around an axis extending substantially upright with respect to a flat surface. That is, for example, a vertically extending axis disposed substantially upright with respect to a flat surface may be attached to the wheel chair body 3, and a rotary member rotatable around the vertically extending axis as a center may be arranged to secure the frame 4. This structure makes the wheel 2, the rotary body 5, and the rotation axis 8 rotatable around the vertically extending axis and allows the proceeding direction of the wheel chair body 3 to change smoothly.

Although in Fig. 1 to Fig. 9 the supporting structure for wheel 1 according to the first embodiment of the invention is exemplified as that the right and left ends of the rotation axis 8 move in the floating state at the inner side of the second guide portion 25b upon separating from the edge of the second guide portion 25b, the ends can move as contacting to the edge of the second guide portion 25b as a matter of course. In this situation, the right and left ends of the rotation axis 8 can be surely guided, and it is safe.

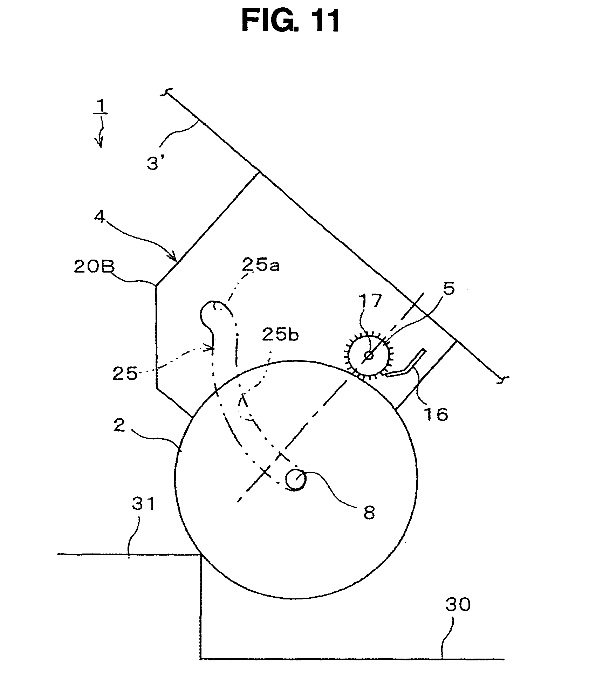

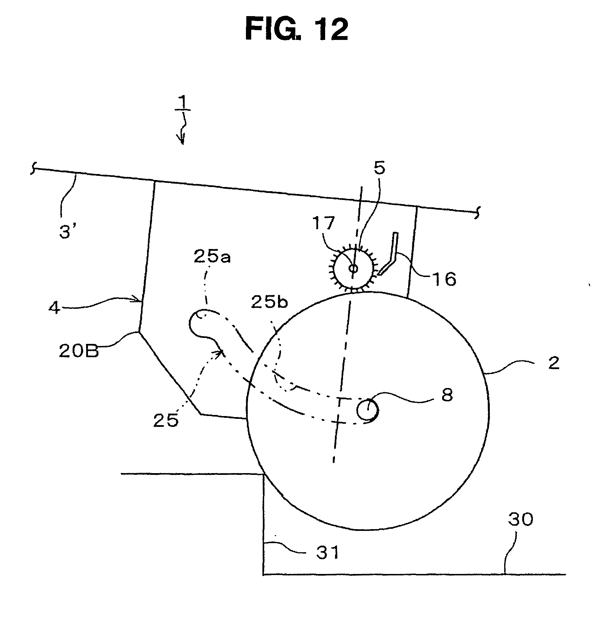

Although in Fig. 1 to Fig. 9 the supporting structure for wheel 1 according to the first embodiment of the invention is exemplified as that the rear end of the second guide portion 25b is disposed at a front side of the position immediately below the rotation axis 17 of the gear 5, such a structure is not necessarily provided. As shown in Fig. 10, the rear end of the second guide portion 25b may be provided at a rear side of the position immediately below the rotation axis 17 of the gear 5. In this structure, a vehicle body 3' may be slanted largely as moving up as going on in the proceeding direction when moving over the step portion 31 as shown in Fig. 11. In Fig. 11, when seen from the vehicle body 3', the rotation axis 8 moves to the rear side of the rotation axis 17, and the wheel 2 moves to the rear side of the gear 5, but when seen with the perpendicular direction as a reference, the rotation axis 8 is located on a front side of the rotation axis 17 whereas the wheel 2 is located on a front side of the gear 5. Thus, by adjusting the inclined angle of the vehicle body 3', the wheel 2 can be adjusted to be located always on a front side of the gear 5, and the wheel 2 can be pushed by the gear 5 in the proceeding direction. Where the structure is that the vehicle body 3' cannot be inclined adequately or it is undesired that the vehicle body 3' is inclined largely, or where it is difficult to adjust the inclined angle smoothly, however, the wheel 2 moves to the rear side of the gear 5 at a time that the inclined angle of the vehicle body 3' is small as shown in Fig. 12, so that the rotation axis 8 is pushed rearward by the upper surface of the guide portion 25b and pressed by the rear end of the second guide portion 25b, thereby rendering difficult returning of the wheel 2 to the front side of the gear 5, and so that it is conceivable that the wheel 2 may not be pushed forward due to the gear 5. In such a situation, by disposing the rear end of the second guide portion 25b in front of the position immediately below the rotation axis 17 of the gear 5, movement of the wheel 2 to the rear side of the gear 5 is surely prevented, so that the vehicle body 3' is smoothly driven.

Although in Fig. 1 to Fig. 9 the supporting structure for wheel 1 according to the first embodiment of the invention is exemplified as that the second guide portion 25b is in an arc shape, this invention is not limited to such a structure, and the guide portion can be in, e.g., a fan shape having an edge in a shape extending along the arc shaped track R. Although in Fig. 1 to Fig. 9 the supporting structure for wheel 1 according to the first embodiment of the invention is exemplified as that the rear end of the second guide portion 25b is located in front of the gear 5, another mechanism may be used which can prevent the gear 5 from moving in front of the wheel 2 correlatively, in lieu of such a structure. For example, a protrusion may be provided to contact and stop the right and left ends of the rotation axis 8 at a position in front of the gear 5 at a midway of the second guide portion 25b. A stopper may be formed at the frame 4 to contact with the wheel 2 and to prevent the wheel 2 from moving at rear of the gear 5.

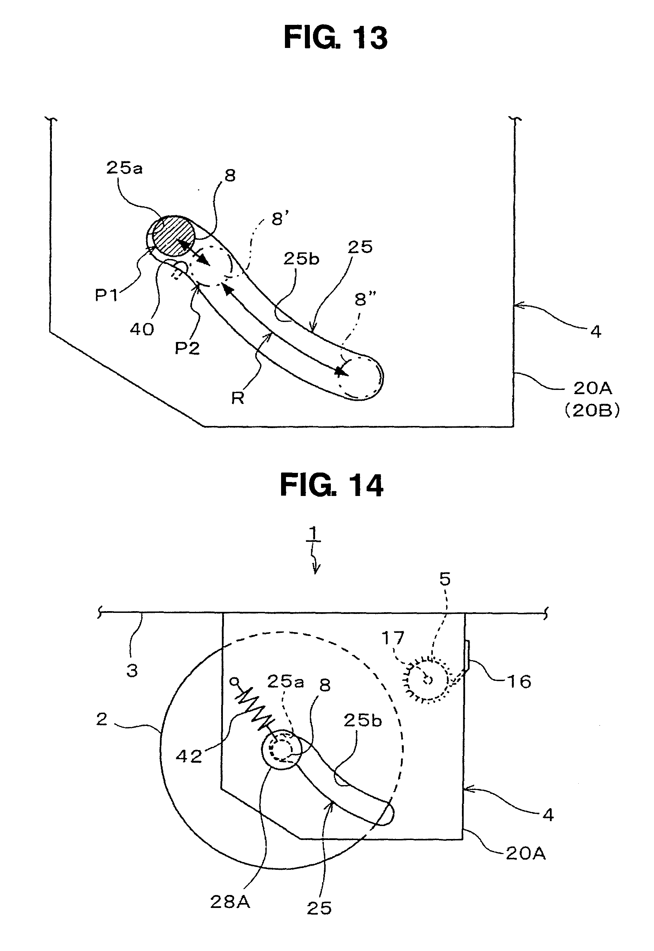

As shown in Fig. 13, a protrusion 40 may be formed at a lower suffice of the first guide portion 25a. In Fig. 13, the protrusion 40 is arranged at a rear portion of the first guide portion 25a as to project from a lower edge toward an upper portion. The right and left ends of the rotation axis 8 of the wheel 2 are to move from the reference position P1 to the associated movement position P2 in the first guide portion 25a over the protrusion 40. The material of the protrusion 40 is preferably, e.g., a rubber or the like. With the structure thus formed, the rotation axis 8 moves to the associated movement position P2 to avoid the wheel 2 from contacting to the gear 5 when the structure moves over a small step portion or when, e.g., the wheel chair body 3 moves back. The wheel chair body 3 therefore can stably move back and forth.

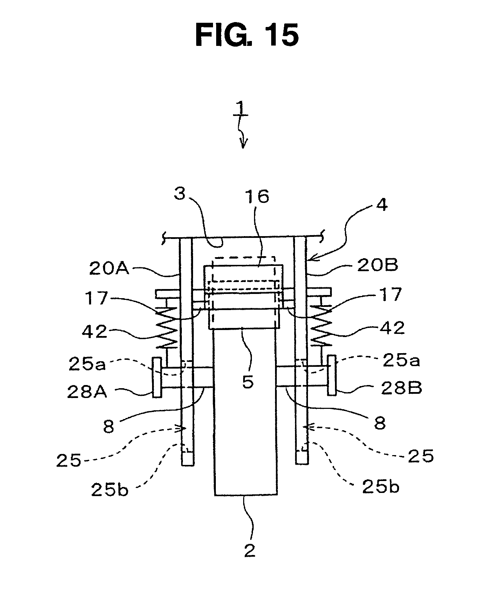

An elastic body can be connected for urging the rotation axis 8 of the wheel 2 from the associated movement position P2 to the reference position P1. For example, as shown in Fig. 14 and Fig. 15, a spring 42 serving as an elastic body is arranged on an outer side of the plate members 20A, 20B, respectively. In Fig. 14 and Fig. 15, the upper end of the respective springs 42 is secured to the plate members 20A, 20B at a position in front of and above the rotation axis 8 located at the reference position P1. The lower ends of the springs 42 are secured to the right and left ends of the rotation axis 8. When the right and left ends of the rotation axis 8 move from the first guide portion 25a to the second guide portion 25b, the spring 42 extends to exert force returning the right and left ends of the rotation axis 8 toward the first guide portion 25a. With such a structure, the rotation axis 8 moves to the associated movement position P2 to avoid the wheel 2 from contacting to the gear 5 when the structure moves over a small step portion or when, e.g., the wheel 2 moves back. The wheel 2 therefore can stably move back and forth. The rotation axis 8 can be easily returned from the associated movement position P2 to the reference position P1 after the wheel 2 moves to an upper portion of the step portion 31. It is to be noted that where an end of the spring 42 is secured not to a position in front of and above the rotation axis 8 but to a position at rear of and below the rotation axis 8, the spring 42 may be contracted at a time that the right and left ends of the rotation axis 8 move from the first guide portion 25a to the second guide portion 25b to exert force returning the right and left ends of the rotation axis 8 toward the first guide portion 25a. As an elastic body, any material having an extendibility such as rubber or the like, other than the spring, may be used.

Although in Fig. 1 to Fig. 9 the supporting structure for wheel 1 according to the first embodiment of the invention is exemplified as that the upper surface of the first guide portion 25a is inclined downward as going from the reference position P1 to the associated movement position P2, the upper surface of the first guide portion 25a may be horizontally flat or inclined upward as going from the reference position P1 to the associated movement position P2 in a case where an elastic body is provided for urging the rotation axis 8 to return the rotation axis 8 from the associated movement position P2 to the reference position P1. In such a structure, the force exerted from the elastic body can prevent the rotation axis 8 from moving from the reference position P1 to the associated movement position P2 where the wheel 2 travels on the flat surface.

Although in Fig. 1 to Fig. 9 the supporting structure for wheel 1 according to the first embodiment of the invention is exemplified as that the wheel 2 and the gear 5 are moved in the associated manner upon contacting the outer circumferential surface of the wheel 2 with the teeth of the gear 5, the structure associating the wheel 2 with the gear 5 is not limited to the above structure. For example, the wheel 2 and the gear 5 may be moved in an associated manner upon contacting a peripheral surface of a small wheel formed on a side surface of the wheel 2 with a circumferential surface of the rotary body. The number of the rotary body moved in association with the wheel can be two or more.

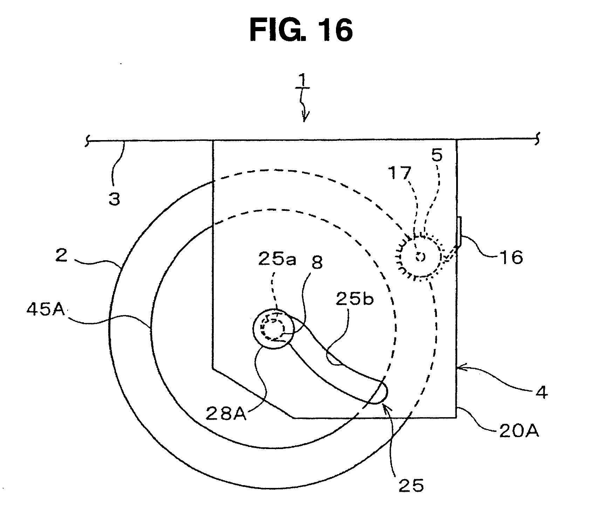

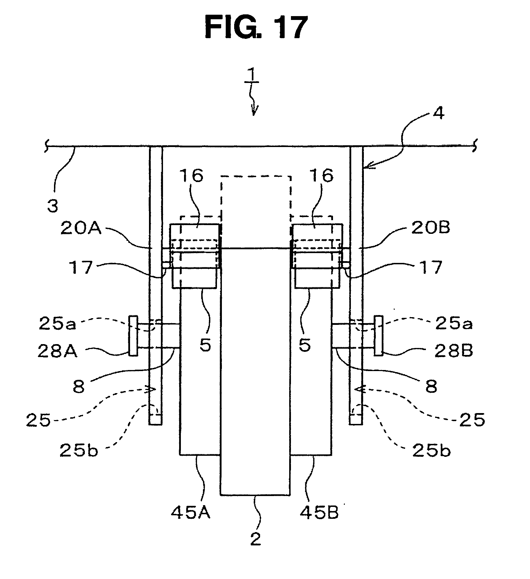

For example, as shown in Fig. 16 and Fig. 17, small wheels 45A, 45B formed in a disc shape are formed on right and left sides of the wheel 2. The small wheels 45A, 45B are projecting from the right and left side surfaces of the wheel 2 toward the outer side, and are formed with a smaller diameter than that of the wheel 2. The rotation axis of the small wheels 45A, 45B is the same as the rotation axis 8 of the wheel 2. In a meanwhile, a gear 5 serving as a rotary body and an engaging plate 16 are provided at an inner side of the plate members 20A, 20B in substantially the same way as exemplified in the above embodiments. Each gear 5 is disposed at rear of and above the outer circumferential surface of the small wheels 45A, 45B. The rotation axis 17 of each gear 5 is disposed substantially parallel to the rotation axis 8 of the wheel 2 and at rear of and above the rotation axis 8 of the wheel 2 with respect to the proceeding direction of the wheel 2, and is supported to the plate members 20A, 20B of the frame 4.

Where the rotation axis 8 is located at the reference position, the outer circumferential surface of the small wheels 45A, 45B separates from the teeth of the gear 5, thereby entering in a state that the wheel 2 and the gear 5 are not moving in an associated manner. The right and left ends of the rotation axis 8 are located in the first guide portion 25a. Where the rotation axis 8 moves to the associated movement position, the outer circumferential surfaces of the small wheels 45A, 45B and the teeth of the gear 5 come in contact with each other, thereby rendering the wheel 2 and the gear 5 rotatable in an associated manner. The right and left ends of the rotation axis 8 move to the connection portion of the first guide portion 25a and the second guide portion 25b. In a case where the rotation axis 8 is moved along the track extending in an arc shape, the wheel 2 can be rotated around the respective gears 5 as a center while the outer circumferential surfaces of the small wheels 45A, 45B are in contact with the teeth of the gear 5, or namely while the wheel 2 and the gear 5 are moved in the associated manner. The right and left ends of the rotation axis 8 move in the second guide portion 25b. With such a structure, the wheel 2 can be moved up on the step portion smoothly with force less than an ordinary situation by means of the gears 5 upon pushing the small wheels 45A, 45B from the upper rear portion to the front side, respectively.

It is to be noted that the wheel 2 can be moved up on the step portion with force less than an ordinary situation even where the small wheel and the gear 5 are set only on one side of the left and right of the wheel 2, or where the gear 5 pushes only one of the small wheels 45A, 45B, but the wheel 2 can be pushed up in a further stable manner by pushing at the same time the small wheels 45A, 45B on the right and left sides of the wheel 2.

As the small wheel formed on a side surface of the wheel 2, a wheel in a disc shape, cylinder shape, polygon shape having a certain number of corners, and the like can be used. A gear rotating in mesh with the gear 5 as a rotary body may be formed on a peripheral surface of the small wheel, the wheel can be pushed upon meshing the gear 5 of the rotary body with the gear of the small wheel.

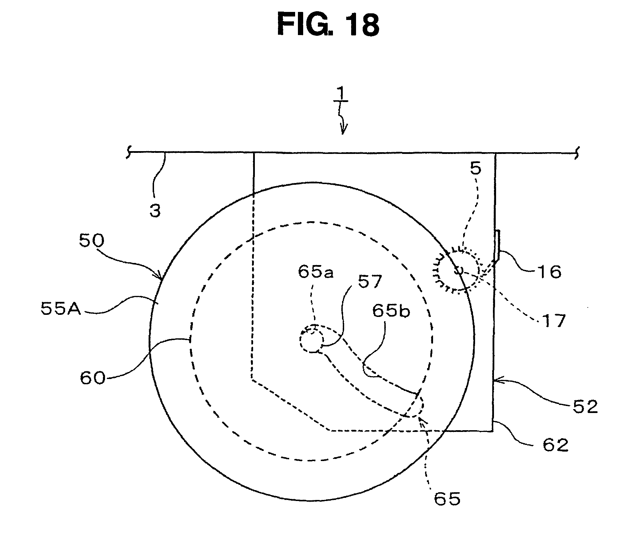

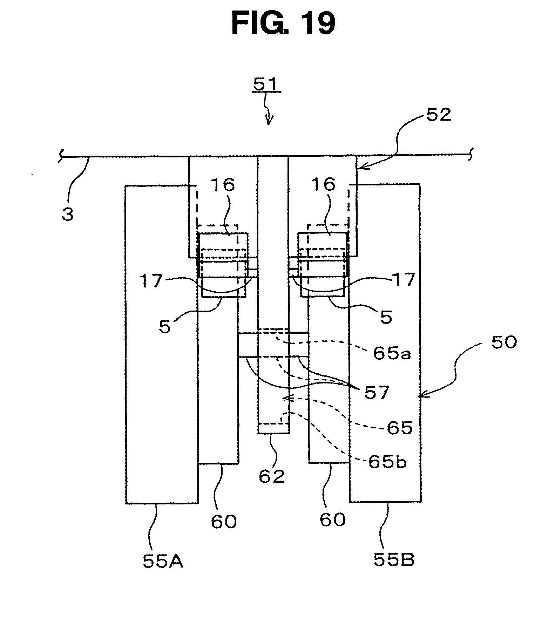

The wheel can be a dual wheel caster 50 as shown in Fig. 18 and Fig. 19. In Fig. 18 and Fig. 19, the supporting structure for wheel 51 for the dual wheel caster 50 has a frame 52. The dual wheel caster 50 has a rotation axis 57 connecting center portions of respective wheels 55A, 55B between the two wheels 55A, 55B having the same diameter, and the wheels 55A, 55B rotate around the rotation axis 57 as a center. A small wheel 60 in a disc shape is formed at each inner surface of the wheels 55A, 55B. The small wheel 60 is formed projecting from the inner surfaces of the wheels 55A, 55B, or surfaces at which the wheels 55A, 55B face to each other, and is formed with a smaller diameter than that of the wheels 55A, 55B. The rotation axis of the respective small wheels 60 is the rotation axis 57 which is the same as the wheels 55A, 55B. The frame 52 includes a plate member 62 disposed in a way perpendicular to the flat surface, and is formed with a guide groove 65 formed in substantially the same manner as the guide groove 25 shown in the above embodiments. That is, the first guide portion 65a and the second guide portion 65b are formed in substantially the same way as the first guide portion 25a and the second guide portion 25b. The wheels 55A, 55B are disposed on left and right sides of the plate members 62. The rotation axis 57 is formed as penetrating an inner side of the guide groove 65.

The gear 5 and the engaging member 16, substantially the same as those shown in the above embodiments, are arranged on right and left sides of the plate member 62. The respective gears 5 are disposed at rear of and above the outer circumferential surface of the small wheel 60 formed at the respective wheels 55A, 55B. The rotation axis 17 of the gears 5 is disposed substantially parallel to the rotation axis 57 and disposed at rear of and above the rotation axis 57 with respect to the proceeding direction of the dual wheel caster 50, and is supported to the left and right surfaces of the plate member 62.

Where the rotation axis 57 is located at the reference position, the outer circumferential surface of the small wheel 60 formed the respective wheels 55A, 55B and the teeth of the gears 5 are separated from one another. The center portion of the rotation axis 57 is in the first guide portion 65a. Where the rotation axis 57 moves to the associated movement position, the outer circumferential surface of the small wheel 60 and the teeth of the respective gears 5 come in contact with each other, thereby rendering the dual wheel caster 50 and the gears 5 movable in an associated manner. The center portion of the rotation axis 57 moves to a connection portion of the first guide portion 65a and the second guide portion 65b. When the rotation axis 8 is moved along the track extending in the arc shape, the dual wheel caster 50 can be rotated around the respective gears 5 while the outer circumferential surfaces of the small wheels 60 are in contact with the teeth of the gears 5, or namely while the dual wheel caster 60 and the gear 5 are moved in the associated manner. The center portion of the rotation axis 57 moves in the second guide portion 65b. In this situation, the dual wheel caster 50 can be moved up on the step portion smoothly with force less than an ordinary situation by means of the gears 5 upon pushing the small wheels 60 from the upper rear portion to the front side, respectively.

It is to be noted that the respective gears 5 may contact not to the small wheel 60 formed at the wheels 55A, 55B but to the outer circumferential surfaces of the wheels 55A, 55B. A dual wheel caster may be arranged between the two plate members to project the rotation axis 57 out of the respective wheels 55A, 55B and to dispose the right and left ends of the rotation axis 57 at an inner side of the supporting groove of the plate members and the guide groove, and the respective gears 5 may be supported at the inner side of the respective plate members.

As the small wheel formed on a side of the wheels 55A, 55B, a, cylinder shape, polygon shape having a certain number of corners, and the like, other than a wheel in a disc shape can be used. A gear rotating in mesh with the gear serving as the rotary body may be formed on a peripheral surface of the small wheel, and the wheel may be pushed upon meshing the gear serving as the rotary body with the gear of the small wheel.

Although in Fig. 1 to Fig. 9 the supporting structure for wheel 1 according to the first embodiment of the invention is exemplified as a structure in which the gear 5 rotates only in one direction upon contacting the engaging plate 16 between the teeth of the gears 5, for example, a small wheel on a peripheral surface of which gears are formed may be formed on a left or right side surface of the gear 5, and the engaging plate 16 may be in contact with gears at the gears of the small wheel.

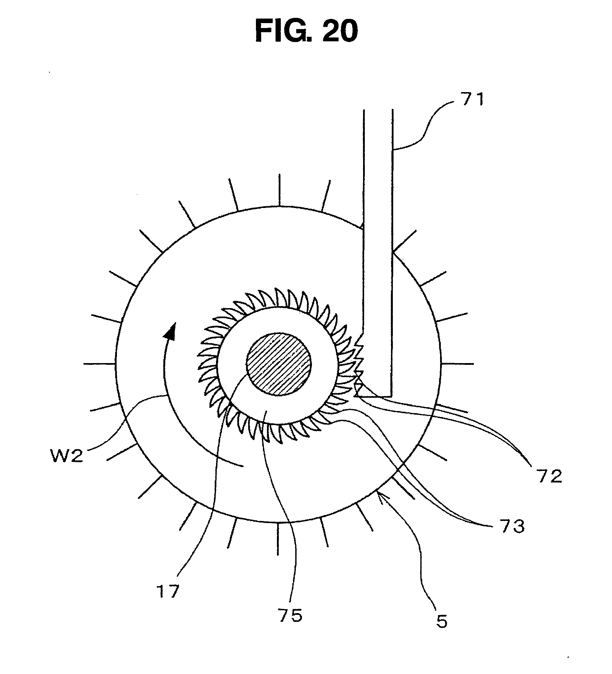

Although in Fig. 1 to Fig. 9 the supporting structure for wheel 1 according to the first embodiment of the invention is exemplified with the engaging plate 16, serving as an engaging member, for contacting the lower end thereof between the teeth of the gears 5, the shape of the engaging member is not limited to this, and for example, as shown in Fig. 20, the shape can be with plural protrusions. In Fig. 20, an engaging member 71 has plural nails 72 arranged in a row in the up and down direction. The respective nails 72 are projecting forward from a front edge of the engaging member 71, and have a shape inclined more downward as the upper surface of the respective nails 72 approaches to the front side. A small wheel 73 formed with plural nails 73 in a gear shape on a peripheral surface is formed on a right side surface of the gear 5. The respective nails 73 are in a shape curved outward as going to the opposite side to the rotational direction W2. That is, when the nail 73 moves to the rear portion of the small wheel 75 according to the rotation of the gear 5, it is formed such that the top end of the nail 73 orients toward a top portion. A surface of the nail 73on a front side with respect to the rotational direction W2 is a smooth curved surface curving in a convex shape toward a periphery of the small wheel 75. The engaging member 71 is disposed at rear of the small wheel 75, and the top end of the nail 72 is disposed between the nails 73 moved rearward.

With such a structure, when the gear 5 is to be rotated in the rotational direction W2, the surface of the nail 73 on the front side with respect to the rotational direction W2 moves down smoothly along the upper surface of the nail 72 at the rear side of the small wheel 75. The top end of the nail 73 enters in a space between the nails 72, and moves down upon escaping from the space between the nails 72. Accordingly, if the gear5 is to be rotated in the rotational direction W1, the top end of the nail 73 is sandwiched between the nails 72 at rear of the small wheel 75, and is pressed by the lower surface of the nail located on the nail 73. Therefore, the nail 73 cannot escape from the space between the nails 72 and cannot move upward. The gear 5 therefore cannot be rotated in the rotational direction W1.

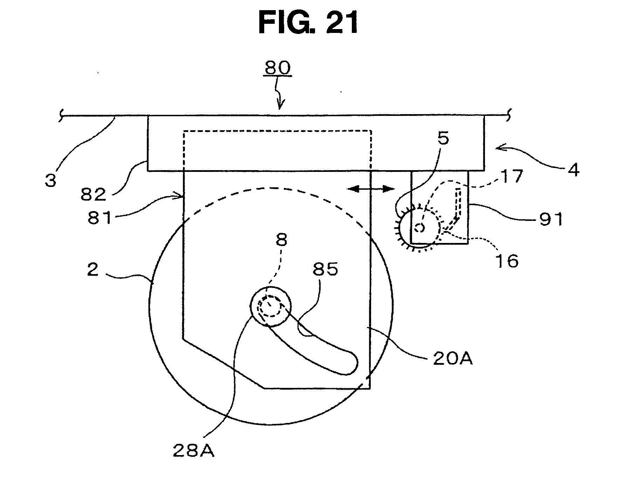

Although in Fig. 1 to Fig. 9 the supporting structure for wheel 1 according to the first embodiment of the invention is exemplified as that the wheel 2 moves so that the rotation axis 8 of the wheel 2 moves from the reference position P1 to the associated movement position P2 in the first guide groove 25a to render the wheel 2 and the gear 5 move in an associated manner upon contacting the wheel 2 with the gear 5, a structure switching the state that the wheel and the gear move in an associated manner and the state that they move not in an associated manner is not limited to this structure. For example, as shown in Fig. 21, where the plate members 20A, 20B are formed movable back and forth, the wheel 2 and the gear 5 can be in contact with each other and can enter in a state moving in an associated manner upon moving rearward the wheel 2 together with the plate members 20A, 20B toward the gear 5 while making the rotation axis 8 of the wheel 2 stable with respect to the guide groove 85.

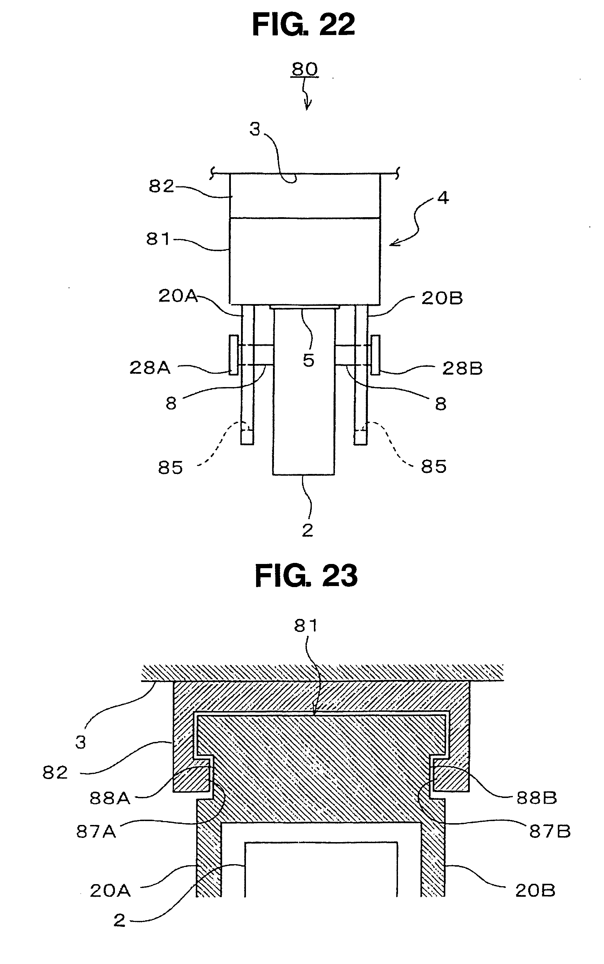

In the supporting structure for wheel as shown in Figs. 21 and 22, since the wheel 2, the gear 5 and the engaging plate 16 each has such structure indicated respectively in the embodiments, explanation thereof is omitted here. The frame 4 has a holding body 81 for holding the wheel 2, and a holding body supporting member 82 for sliding the holding body 81 from back to front along a traveling direction of the wheel chair body 3.

The holding body 81 is formed with plate-like members 20A, 20B explained in the embodiments. The plate-like members 20A, 20 each is formed thereon a guide groove 85. This guide groove 85, alike the second guide portion 25b of the guide groove 25 explained in the embodiments, is formed along the track R and has an arc shape curved downwardly as extending backward.

The upper portion of the holding body 81 is disposed on the inner side of the holding body supporting member 82. As shown in Fig. 23, both sides of an inner surface of the holding body supporting member 82 are equipped with rails 87A, 87B formed in a convex shape facing inside of the holding body supporting member. The rails 87A, 87B are formed so as to extend back to front along the traveling direction. Also, both sides of the holding body 81 is formed with concave portions 88A, 88B, each of which being engaged with the corresponding one of the rails 87A, 87B, respectively. The concave portions 88A, 88B are formed so as to extend back to front along the traveling direction of the wheel chair body 3. The holding body 81 is supported by the holding body supporting member 82 under a condition that the concave portions 88A, 88B engage with the corresponding one of the rails 87A, 87B, respectively. The convex portions 88A, 88B are movable from back to front along the rails 87A, 87B, thereby enabling the holding body 81 to slide back to front, i.e., supporting structure for wheel having a structure allowing the plate-like members 20A, 20B to slide in the traveling direction of the wheel chair body 3.

The holding body supporting member 82 is fixedly supported on the wheel chair body 3. As shown in Fig. 21, The holding body supporting member 82 at its back portion is formed with a rotary body supporting body 91 which supports the gear 5 and the engaging plate 16. The gear 5 and the engaging plate 16 are fixedly supported through the rotary body supporting body 91 on the holding body supporting member 82.

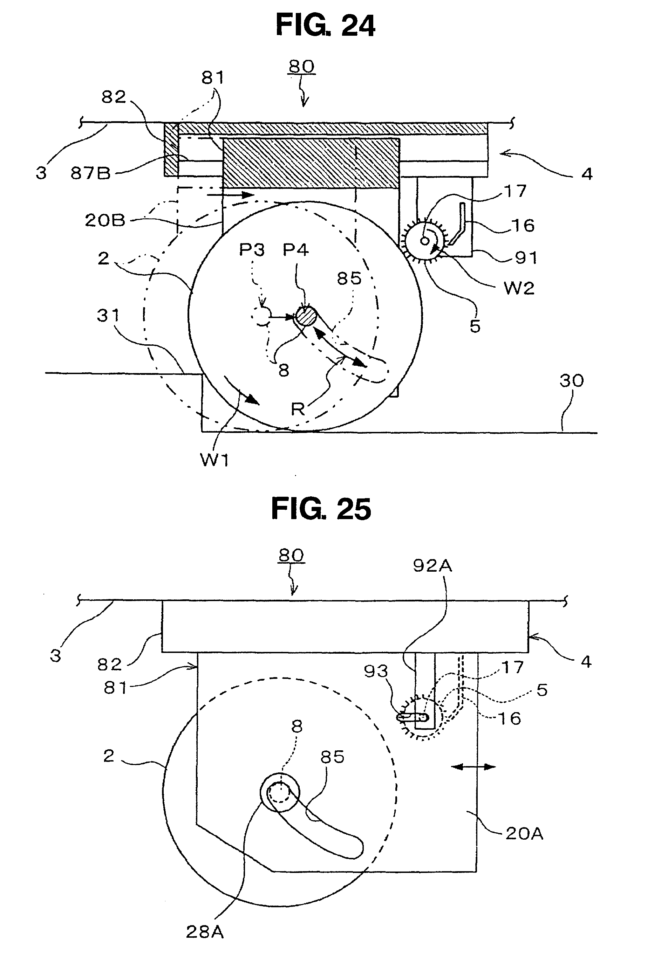

As shown in Fig. 24, the wheel 2 in association with the plate-like members 20A, 20B can be moved back to front. Further, back to front movement of the plate-like members 20A, 20B under a state that the rotary axis of the wheel 2 is disposed at an upper end of the guide groove 85 enables the movement of the rotary axis 8 between a reference position P3 where the wheel 2 and the gear 5 travel forward enough until they fail to establish an associated movement and an associated movement position P4 where the wheel 2 and the gear 5 travel backward until they establish the associated movement. In other words, the rotary axis 8 upon backward movement of the plate-like members 20A, 20B moves from the reference position P3 to the associated movement position P4, and upon forward movement of the plate-like members 20A, 20B moves from the associated movement position P4 to the reference position P3.

In the supporting structure for wheel 80 having the above-stated composition, when the wheel chair body 3 proceeds, the holding body 81 is at a position in a front portion of the holding body supporting member 82, and therefore the wheel 2 and the gear 5 are separated to each other, i.e., fails to establish associated movement therebetween. The rotary axis 8 is at the reference position.

When the wheel 2 contacts the step portion 31, as shown in Fig. 24, while the wheel 2 contacts the step portion 31, the wheel chair body 3 and the holding body supporting member 82 proceed. The wheel 2 and the holding body 81 move backward with respect to the wheel chair body 3 and the holding body supporting member 82. The holding body 81 travels backward along the rails 87A, 87B of the holding body supporting member 82 with respect to the holding body supporting member 82. The wheel 2, in a state that the rotary axis 8 is disposed at the upper end of the guide groove 85, travels associating with the holding body with respect to the holding body supporting member 82. Accordingly, an outer periphery of the wheel 2 contacts the gear 5. The rotary axis 8 moves from the reference position P3 to the associated movement position P4. The wheel 2, in this manner, comes to be rotatable around the gear 5, and the rotary axis 8, while establishing associated movement between the wheel 2 and the gear 5, comes to be travelable along the arc shaped track R. Then, in a similar manner explained in the embodiments, the wheel can step up on the step portion 31.

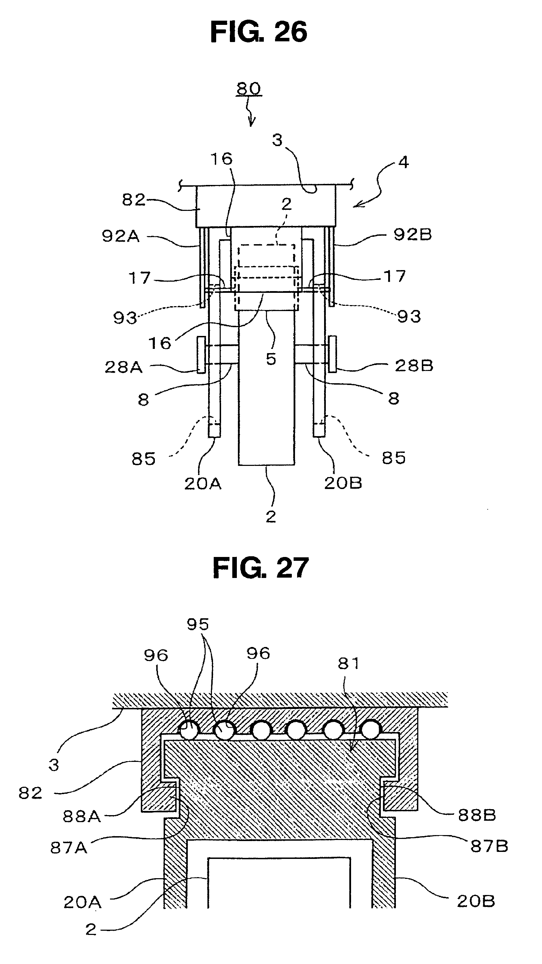

Meanwhile, in the supporting structure for wheel 80 as shown in Figs. 21 and 22, a structure is employed in which the rotary body supporting body 91 disposed backward of the holding body 81 fixes the gear 5 and the engaging plate 16, however, such structure is not limited to those which are exemplified herein. For example, such structure is also applicable like the supporting structure for wheel 80 of Figs. 25 and 26 that the rotary body axis supporting body 92A, 92B for supporting right and left ends of the rotary axis of the holding body 81 is disposed at each corresponding side of the holding body 81, and the rotary body axis guide groove 93 for guiding both end of the rotary axis 17 is formed on each of the plate-like member 20A, 20B. The gear 5 through the rotary body rotary axis supporting body 92A, 92B is fixedly supported on the holding body supporting member 82. The engaging plate 16 is fixedly supported at rear portion of the holding body supporting member 82. Namely, while allowing the right and left ends of the rotary axis 17 to travel relatively within the rotary body axis guide grooves 93, the holding body 81 is caused to be slid.

The structure in which the holding body 81 and the holding body supporting member 82 are caused to be slid is not limited to the one in which sliding action is caused by the rails 87A, 87B and the concave portions 88A, 88B as shown in Fig. 23. To ease the sliding action of the holding body 81, rotary members which rotate between the holding body 81 and the holding body supporting member 82 may be utilized. For instance, as shown in Fig. 27, the inner side of the holding body supporting member 82 at its upper surface is provided with a plurality of rotary members 95. In Fig. 27, each rotary member 95 is formed in a spherical shape. Each rotary member 95 is held in a hole 96 formed with an upper surface of the inner side of the holding body supporting member 82, and therefore the rotary member is free to rotate within the hole 96. Lower ends of the rotary members 95 project downward more than the upper surface of the inner side of the holding body supporting member 82, and set at height where the lower ends of the rotary members 95 contact the upper surface of the holding body 81. The upper surface of the holding body 81 is formed as a flat surface along a direction the holding body 81 slides. With such structure, when the holding body 81 slides, each rotary member 95 rotates along the direction the holding body 81 slide, thereby allowing the holding body 81 smooth slide with respect to the holding body supporting member 82.

The rotary member may be any shape other than the above described spherical shape, for example, it may be a disc shape having a rotary axis for rotating along the direction the holding body 81 slides. Also, any place is available to place the rotary members without being limited to the upper surface of the inner side of the holding body supporting member 82. For example, such place may be the upper surface of the holding body 81.

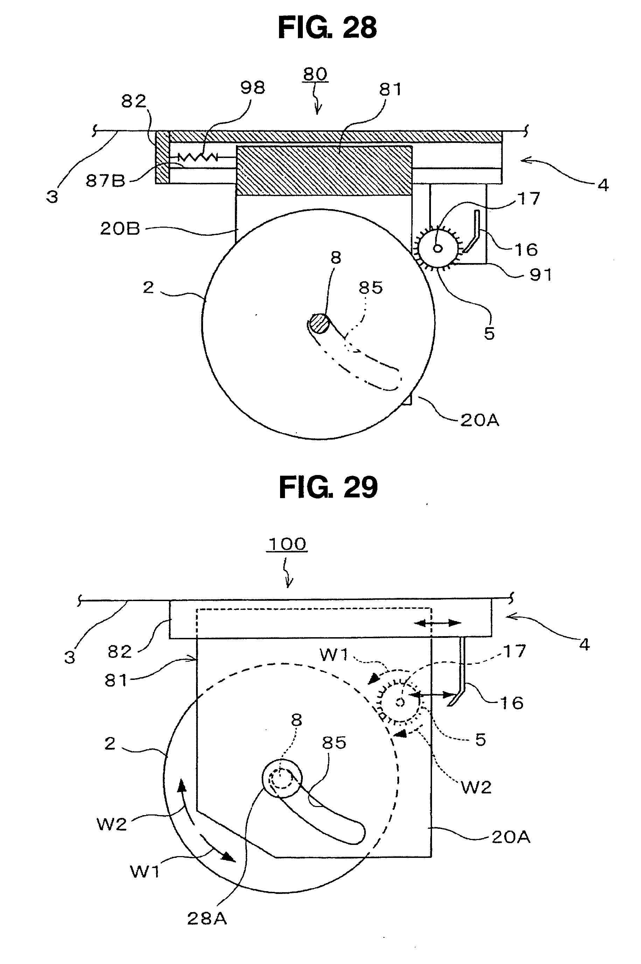

The rotary members may be equipped with the elastic body which presses the holding body 81 so as to restore it to the front portion of the holding body supporting member 82. For example, as shown in Fig. 28, the right and left ends inside the holding body supporting member 82 respectively has a spring 98 as the elastic body. In Fig. 28, the spring 98 is disposed forward portion of the holding body 81, a front end of the spring 98 being connected to the right and left sides inside the holding body supporting member 82, a rear end of the spring 98 being connected to a front edge of the holding body 81. When the holding body 81 travels backward with respect to the holding body supporting member 82, the spring 98 extends to act to restore the holding body 81 forward. With such structure, in a case where a vehicle is driving on a flat surface and stepping up on a small step, or in like cases, it is possible to avoid a recede of the holding body 81, thereby avoiding the associated movement of the wheel 2 and the gear 5. Accordingly, a stable drive of the wheel can be realized. Also, with such structure, in a case where the wheel 2 steps up on the step portion 31, the holding body 81 is pressed so as to be restored forward, resulting in that the wheel 2 and the gear 5 being brought into a state not to associate each other with ease. Another structure is applicable to place the spring 98 rearward of the holding body 81, the front end of the spring 98 is connected to the rear edge of the holding body 81, and the rear end of the spring 98 is connected to the right and left ends inside the holding body supporting member 82, so that the spring 98 is compressed when the holding body 81 moves backward with respect to the holding body supporting member 82, thereby a forward restoring force is exerted on the holding body 81. Still another structure is applicable to place the spring 98 in forward and rearward of the holding body 81 respectively, to press the holding body 81 to be restored forward by two springs 98. An example of the elastic body other than a spring may be the one having retractility such as rubber.

In the supporting structure for wheel 1 according to the above-stated embodiments of the present invention, there is described that the structure in which a state where the wheel is contacted to the rotary body is switched to a state where the wheel is separated from the rotary body; however, another structure in which a state where the rotary body is rotatable only in one direction is switched to a state where the rotary body is rotatable in free direction may also be applicable. For instance, if a structure is made in such a manner that the engaging member and the rotary body are movable to each other, a contact between the engaging member and the rotary body can create the state where the rotary body is rotatable only in one direction, and a separation between the engaging member and the rotary body can create the state where the rotary body is rotatable in free direction.

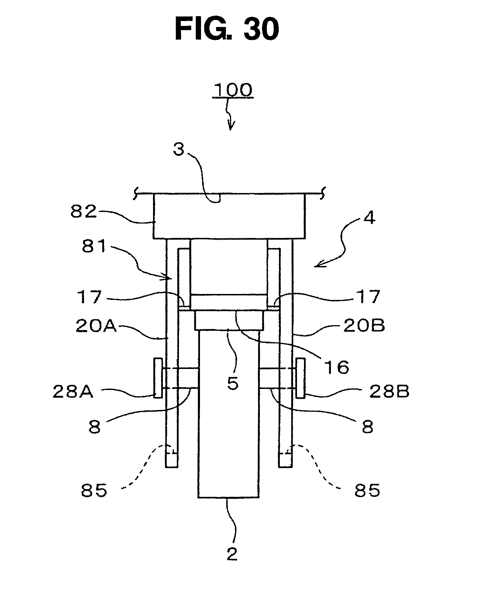

In the supporting structure for wheel 100 as shown in Figs. 29 and 30, the wheel 2 and the gear 5 held by the holding body 81 are supported movably with respect to the engaging plate 16 that is supported by the holding body supporting member 82. The wheel 2 and the gear 5 are in a state where they are associating each other, i.e. a state where the outer periphery of the wheel 2 and the tooth of the gear 5 contact each other, and the wheel and the gear are held by the holding body 81. The engaging plate 16 is fixedly supported on the holding body supporting member 82.

In this supporting structure for wheel 100, if the holding body 81 is receded rearward with respect to the holder body supporting member 82, the wheel 2 and the gear 5 move together with the holding body 81 to bring the engaging plate 16 contact into the gear 5, resulting in the gear 5 being rotatable only in the rotating direction W2. If the holding body 81 is moved forward with respect to the holding body supporting member 82, the wheel 2 and the gear 5 move together with the holding body 81 to have the engaging plate 16 separate from the gear 5, resulting in the gear 5 being rotatable freely in the rotating directions W1, W2 in accordance with the rotating direction of the wheel 2.

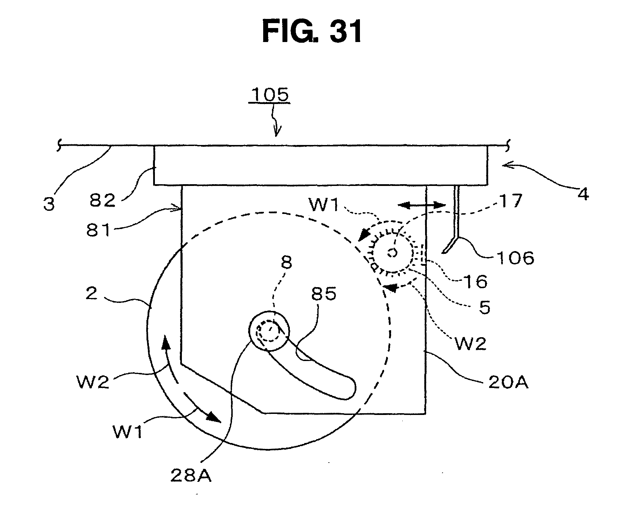

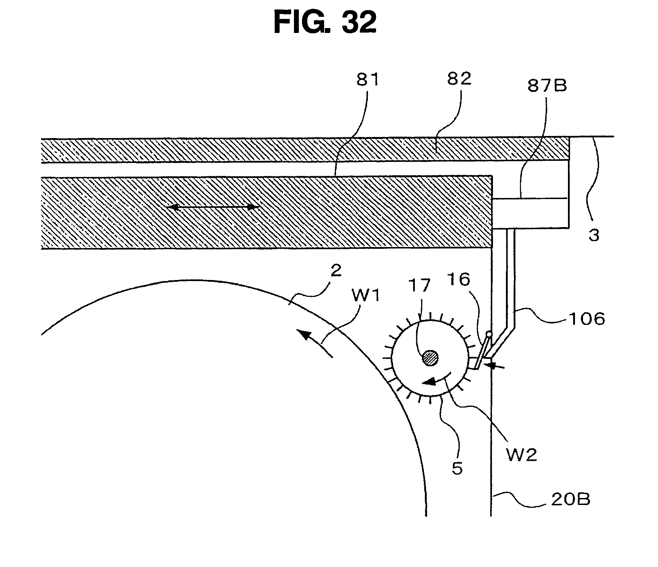

As the structure in which the state where the engaging member contacts the rotary body is switched to the state where the engaging plate 16 is separated from the rotary body, another structure such as supporting structure for wheel 105 as shown in Fig. 31 is available that an engaging member mover 106 for pushing the engaging plate 16 from behind to move it is provided in order to move the engaging plate 16 with respect to the engaging member mover 106. In Figs. 31 and 32, the wheel 2 and the gear 5 are placed in a state where they are associating each other, namely the outer periphery surface of the wheel 2 and the tooth of the gear 5 contact each other, and are held by the holding body 81. The engaging plate 16 is held by the holding body 81 under a condition pivotable in back and forth direction with the upper edge thereof being centered. The engaging member mover 106 is fixedly supported on the holding body supporting member 82 and placed rearward of the engaging plate 16.

In this supporting structure for wheel 105, if the wheel 2, the gear 5, the engaging plate 16 and the holding body 81 are moved rearward with respect to the holding body supporting member 82 and the engaging member mover 106, the engaging plate 16 contacts the engaging member mover 106 from the front. That is, the engaging plate 16 is pushed from the behind by the engaging member mover 106 to rotate, and a lower edge of the engaging plate 16 moves forward. Then, as shown in Fig. 32, the lower edge of the engaging plate 16 contacts the gear 5 to have the gear 5 be rotatable only in the rotating direction W2. When the wheel 2, the gear 5, the engaging plate 16 and the holding body 81 move forward with respect to the wheel chair body 3, holding body supporting member 82 and the engaging body moving body 106, the engaging plate 16 is separated from the engaging member mover 106 resulting in that the lower edge of the engaging plate 16 is restored rearward. In other words, the engaging plate 16 is separated from the gear 5 to be placed in a condition where the gear 5 is freely rotatable in the rotating directions W1, W2 in accordance with the rotating direction of the wheel 2.

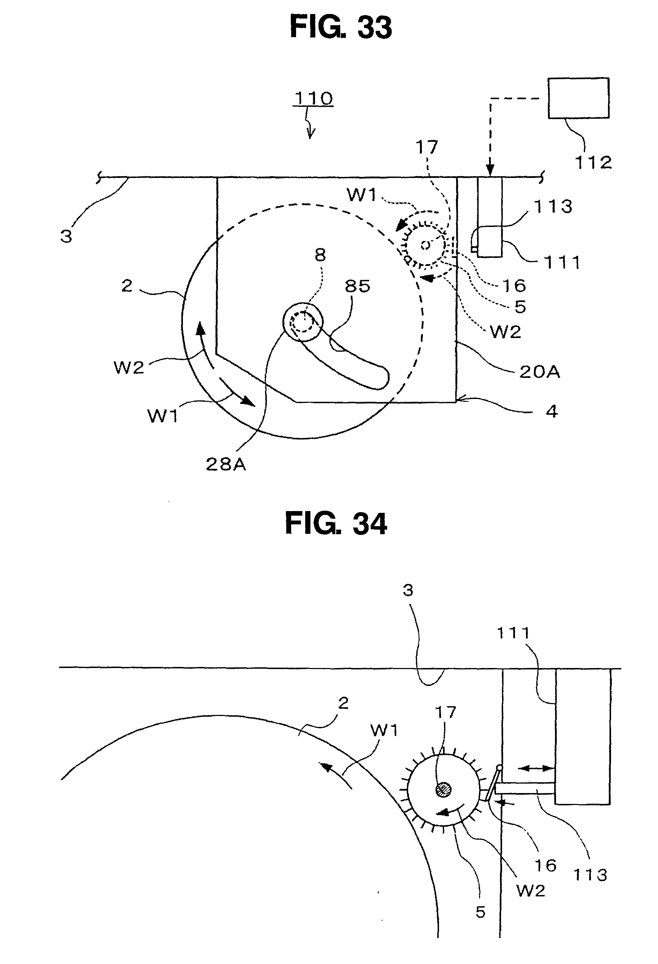

As the structure in which the state where the engaging plate contacts the rotary body is switched to the state where the engaging member is separated from the rotary body, still another structure such as the supporting structure for wheel 110 in Fig. 33 can be applicable that the engaging member moving apparatus 111 may be provided in order to move the engaging plate 16 in such a manner to contact and separate from the gear 5. In the supporting structure for wheel 110 of Fig. 33, the plate-like members 20A, 20B and the engaging member moving apparatus 111 are fixedly supported with respect to the wheel chair body 3. The wheel 2 and the gear 5 are left in a state where they are associating each other, i.e. the outer periphery surface of the wheel 2 contacts the tooth of the gear 5, and are held by the plate-like members 20A, 20B. The engaging plate 16 being freely pivotable in back and forth direction around the upper edge thereof is held by the plate-like members 20A, 20B. Also, the engaging plate 16 is equipped with a controller 112 for controlling driving of the engaging member moving apparatus 111. According to a signal control by the controller 112, the engaging member moving apparatus 11 is driven to move the engaging member mover 113 in back and forth direction. The operator of the wheel chair through an operation of the controller 112 can operate the predetermined movement of the engaging member mover 113 in back and forth direction.

In this supporting structure for wheel 110, signals controlled by the controller 112 drives the engaging member moving apparatus 111 to have the engaging member mover 113 project forward, then as shown in Fig. 34, the engaging plate 16 is pushed by the engaging member mover 113 from behind, thereby being moved, followed by the forward movement of the lower edge of the engaging plate 16. Then, the lower edge of the engaging plate 16 contacts the gear 5 and the gear 5 thus becomes rotatable only in the rotating direction W2. Further, when the controlling signals from the controller 112 drive the engaging member moving mechanism 97 and recede the engaging member mover 113, the engaging member mover 113 is separated from the engaging plate 16 as shown in Fig. 33 and therefore the lower edge of the engaging plate 16 is restored rearward. That is to say, the engaging plate 16 is separated from the gear 5, thereby being placed in a condition freely rotatable in the rotating directions W1, W2 in accordance with the rotating direction of the wheel 2. Consequently, the operator of the wheel chair through the operation of the controller 112 can drive the engaging member moving apparatus 111, move the engaging plate 16 in back and forth direction, and switch from the state where the gear 5 is rotatable only in the rotating direction W2 to the state the gear 5 is freely rotatable in the rotating directions W1, W2. With such structure, the operator of the wheel chair at his own discretion switches a condition to the state where the gear 5 is rotatable only in the rotating direction W2, which enables a smooth operation of stepping up on the step portion by the wheel 2 explained in the embodiments. For instance, if the operator can place the gear 5 in such state that it is rotatable in the rotating direction W2 only for a case to step up on the step portion, as well as if the operator can place the gear 5 in such state that it is freely rotatable in the rotating direction W1, W2 for a case to drive on a flat surface, smooth stable proceeding and receding of the wheel 2 on the flat surface can be achieved.

Here, the engaging member moving apparatus is not limited to the engaging member moving apparatus 111 which moves the engaging member mover 113 in back and forth direction; however, can be structured, for example, that the engaging plate 16 is supported by the engaging member moving apparatus, thereby allowing the engaging plate 16 to move back and forth by driving the engaging member moving apparatus. The engaging member moving apparatus also can be structured, for example, alike a caliper brake which is commonly used as a front wheel brake device for bicycles, to be equipped with a lever and a wire rope, thereby to move the engaging plate 16. More specifically, in such structure, the lever and the engaging plate 16 are connected to each other via the wire rope, and if the wire rope is pulled by the operation of the lever the engaging plate 16 moves forward to the gear 5, and if the lever is restored the engaging plate 16 restored rearward to be separated from the gear 5.

Still another structure having the lever and the wire rope which can move the engaging member mover 113 can also be applicable. Namely, the lever and the engaging member mover 113 are connected each other through the wire rope. When the operation the wire rope, the engaging member mover 113 moves forward, and the engaging plate 16 pushed by the engaging member mover 113 moves forward toward the gear 5, and if the lever is restored the engaging member mover 113 moves rearward, thereby the engaging plate 16 being restored rearward to be separated from the gear 5.

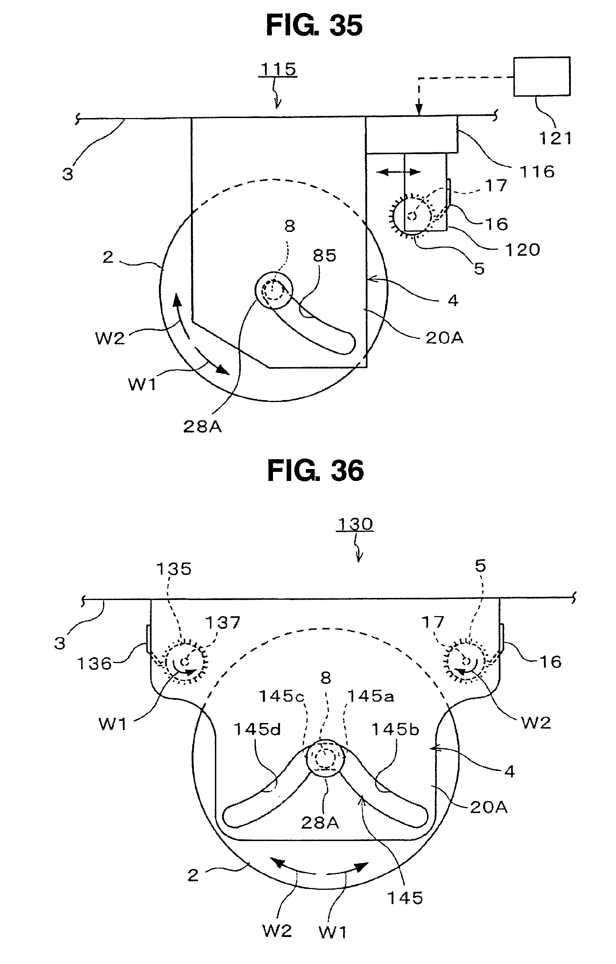

The switching between the state where the wheel 2 and the gear 5 associate each other and the state where they fails to associate, for example, alike the supporting structure for wheel 115 as shown in Fig. 35, can be conducted by the rotary body moving apparatus 116 which is capable of moving the gear 5 and the engaging plate 16. In the supporting structure for wheel 115 as shown in Fig. 35, the plate-like members 20A, 20B and the rotary body moving apparatus 116 are fixedly supported with respect to the wheel chair body 3. The rotation axis 8 of the wheel 2 is supported by the guide grooves 85 of the plate-like members 20A, 20B. The rotary body moving apparatus 116 is supported rearward of the plate-like members 20A, 20B, and supports the rotary body supporting body 120 which supports the gear 5 and the engaging plate 16. The gear 5 and the engaging plate 16 in the state of contacting each other, i.e., the state where the gear 5 is rotatable only in the rotation direction W2, are supported by the rotary body supporting body 120. Also, there is provided the controller 121 for controlling driving of the rotary body moving apparatus 116. The controlling signals from this controller 121 drives the rotary body moving apparatus 116 and thereby moves the rotary body supporting body 120 in back and forth direction, resulting in that the gear 5 being moved rearward with respect to the proceeding direction of a vehicle body to a position not contacting to the wheel 2 and is moved forward with respect to the proceeding direction of the vehicle body to a position contacting and associating with the wheel 2. The operator of the wheel chair through the operation of the controller 121 can operates to move the gear 5 at his own discretion.

In this supporting structure for wheel 115, the controlling signals from the controller 121 drives the rotary body moving apparatus 116 and moves the rotary body supporting body 120 forward to bring the gear 5 into contact with the wheel 2, then the wheel 2 and the gear 5 come into association movement. Also, controlling signals from the controller 121 drives the rotary body moving apparatus 116 and moves the rotary body supporting body 120 rearward to separate the gear 5 from the wheel 2, then the wheel 2 and the gear 5 come into non-association movement. Therefore, the operator of the wheel chair drives the rotary body moving apparatus 116 through the operation of the controller 121 and moves the gear 5 in back and forth, thereby being able to switch the state of the wheel 2 and the gear 5 between association and non-association. With such structure, own discretion is allowed for the operator of the wheel chair to switch the state to where the wheel 2 contact the gear 5, thereby achieving the smooth step up operation of the wheel 2 on the step portion. For example, if the gear 5 is brought into contact with the wheel 2 for associated movement only when stepping up on the step portion, as well as if the gear 5 is separated from the wheel for non-associated movement when driving on the flat surface, the stable and smooth proceeding and receding of the wheel 2 on the flat surface can be achieved.

In the meantime, the rotary body moving apparatus, for example, alike the caliper brake that is commonly used as the front wheel brake device for bicycles, may be structured to have the lever and the wire rope by which the rotary body supporting body 120 is moved. Namely, the lever and the engaging plate 16 are connected to each other via the wire rope, and therefore, if the lever is operated to pull the wire rope, the rotary body supporting body 120 moves forward to the wheel 2 to allow the gear 5 to contact with the wheel 2, and if the lever is restored, the rotary body supporting body 120 is restored rearward to allow the gear 5 be separated from the wheel 2.

In the supporting structure for wheel 1 according to the first embodiment of the present invention as shown in Figs. 1-9, the structure is illustrated that comprises a rotary body rearward of the wheel to step up on the step portion with ease when the wheel proceeds. On the other hand, as exemplified in Fig. 36, the structure may comprise the second rotary body forward of the wheel 2, while associating the wheel with the second rotary body, to have the rotation axis of the wheel freely move forward around the rotation axis of the second rotary body along the arc shaped track, thereby allowing the wheel 2 upon proceeding and/or receding to step up on the step portion located forward or rearward of the wheel with ease. The supporting structure for wheel 130 as shown in Fig. 36 comprises rearward of the wheel 2 with respect to the proceeding direction of the wheel the gear 5 and the engaging plate 16 having the structure as explained in the embodiments. Also, the gear 135 as the second rotary body is disposed forward (i.e., rearward of the wheel 2 with respect to the receding direction of the wheel chair body 3) and above the wheel 2 with respect to the proceeding direction of the wheel chair body 3. There is provided the engaging plate 136 as an engaging member for making the gear 135 rotate only one direction forward of the gear 5.

The gear 135 and the engaging plate 136 have the similar structures as the gear 5 and the engaging plate 16, respectively. Namely, the gear 135 is rotatable around the rotation axis 137 positioned at a center of the gear 135. The rotation axis 137 is disposed such that the rotation axis is in parallel with the rotation axis 8 of the wheel 8 and is placed forward and above of the rotation axis 8 of the wheel 2 with respect to the proceeding direction of the wheel 2. The rotation axis 137 is supported by the frame 4. The engaging plate 136 is also supported by the frame 4. The lower portion of the engaging plate 136 is so formed that the lower portion declines as going rearward, and is disposed such that the lower edge of the engaging plate 136 contacts between the teeth of the gear 135 below the rotation axis 137. In other words, the gear 135 is capable of rotating in the rotating direction W1 that is identical to the rotating direction of the wheel 2 when it proceeds along the surface of the lower portion of the engaging plate 136; however, even attempting to do so, the gear 135 is not capable of rotating in the rotating direction W2 that is identical to the rotating direction of the wheel 2 when it recedes because the lower edge of the engaging plate 136 holds down the teeth. Accordingly, the gear 135 is rotatable only in the rotating direction W1 that is reverse to the rotation direction W2.

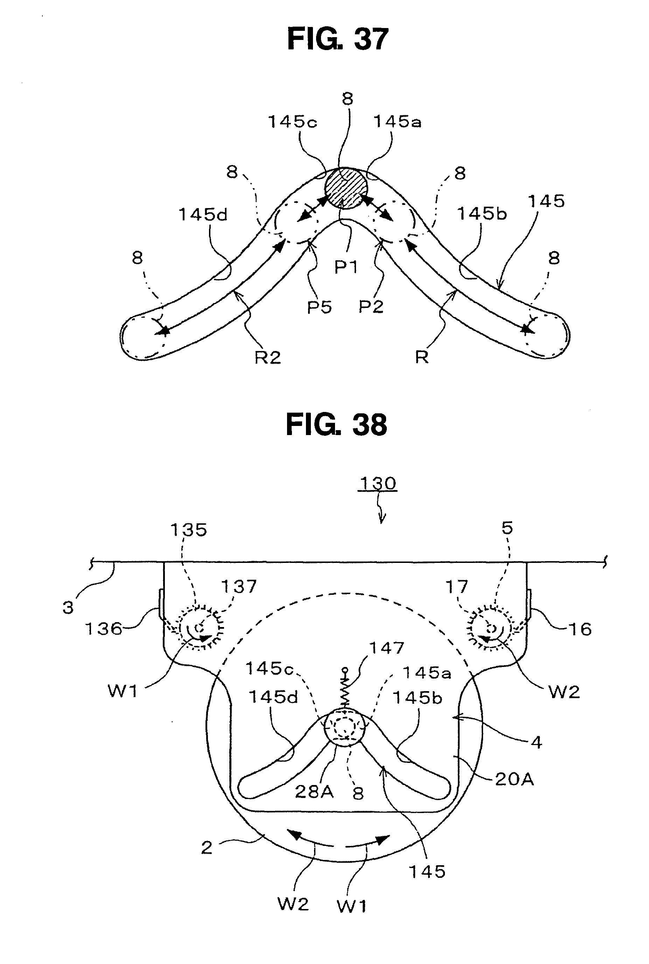

As shown in Fig. 37, the rotation axis 8 is movable between the reference position P1 where the wheel 2 does not associate with the gear 5 and the wheel 2 does not associate with the gear 135 and the associated movement position P2 where the periphery of the wheel 2 contacts the periphery of the gear 5 to associate each other. The reference position P1 is positioned in the middle of the gear 5 and the gear 135. The rotation axis 8, while under the condition that the wheel 2 is in associate with the gear 5, is movable rearward and downward of the associated movement position P2 and along the arc shaped track R around the rotation axis 17 of the gear 5.

The rotation axis 8 is movable between the reference position P1 and the associated movement position P5 where the periphery of the wheel 2 and the periphery of the gear 135 contact each other for associated movement. Further, the rotation axis 8, while under the condition that the wheel 2 and the gear 135 are associated, is movable forward and below of the associated movement position P2 and along the arc shaped track R2 around the rotation axis 137 of the gear 135. The track R2 goes along an arc of which radius is defined by adding the lengths of a radius of the gear 135 and the wheel 2, around the rotation axis 137 of the gear 135. When the rotation axis 8 is at the associated movement position P5, the periphery of the wheel 2 and the teeth of the gear 135 contact each other, and therefore become rotatable due to the associated movement between the wheel 2 and the gear 135. When the rotation axis 8 moves along the track R2, the periphery of the wheel 2 contacts the teeth of the gear 135, thereby allowing the wheel 2 to rotate around the gear 135, while the wheel 2 and the gear 135 are kept in associated rotatable condition.

The plate-like members 20A, 20B are formed of the guide grooves 145 for guiding the rotation axis of the wheel 2 along the reference position P1, the associated movement potion P2 and the track R and along the reference position P1, the associated movement position P5 and the track R2. Each guide groove is composed of a first guide portion 145a for guiding the left end or the right end of the rotation axis 8 between the reference position P1 and the associated movement position P2, a second guide portion 145b for guiding the left end or the right end of the rotation axis 8 rearward from the associated movement position P2 on the arc shaped track R, a third guide portion 145c for guiding the left end or the right end of the rotation axis 8 between the reference position P1 and the associated movement position P5, and a fourth guide portion 145d for guiding the left end or the right end of the rotation axis rearward from the associated movement position P5 on the arc shaped track R2.

The first guide portion 145a and the second guide portion 145b each is formed in the similar shape as the first guide portion 25a and the second guide portion 25b as described in the embodiments. The fourth guide portion 145d is formed in an arc shape that curves below as extending forward along the track R2. A front end of the third guide portion 145c and the upper end of the fourth guide portion 145d are continuous, and the rotation axis 8 is movable from the third guide portion 145c to the fourth guide portion 145d and vice versa. The front end of the first guide portion 145a and the rear end of the third guide portion 145c are continuous, and the rotation axis 8 is movable from the first guide portion 145a to the third guide portion 145c and vice versa.

An upper surface of the third guide portion 145c declines as it goes from the reference position P1 to the associated movement position P5. When the wheel chair body 3 is on the flat surface, the rotation axis 8 is held down between the upper inclined surface of the first guide portion 145a and the upper inclined surface of the third guide portion 145c. Consequently, when the wheel chair body is proceeding or receding on the flat surface, the movement of the rotation axis 8 from the reference position P1 to the associated movement positions P2, P5 can be prevented. Also, when stepping up on the step portion, the rotation axis 8 can be moved smoothly from the reference position P1 to a side of the track R or a side of the track R2. Preferably, the front end of the fourth guide portion 145d is positioned rearward of the rotation axis 137 than immediate below thereof. With such structure, it can be prevented that the wheel 2 moves forward of the gear 135. If the front end of the fourth guide portion 145d is positioned forward rather than the immediate below of the rotation axis 137 of the gear 135, a force resulting from the self-weight of the wheel chair body 3 is exerted from the upper surface of the fourth guide portion 145d onto the upper surface of the rotation axis 8 when the rotation axis 8 moves forward of the rotation axis 137 of the gear 135 and the wheel 2 also moves forward of the gear 135, thereby the rotation axis 8 being pushed forward due to the upper surface of the front portion of the fourth guide portion 145d to be held down by the front edge of the fourth guide portion 145d, resulting in difficult situation in restoring the wheel 2 rearward of the gear 135, whereas, if the front end of the fourth guide portion 145d is placed rearward rather than the immediate below of the rotation axis 137, such situation may be avoidable. It is further preferred that widths of the third guide portion 145c and the fourth guide portion 145d each is formed slightly larger than the diameter of the rotation axis 8, such that the rotation axis 8 can move and self-rotate smoothly within each of the third guide portion 145c and the fourth guide portion 145d.

The first guide portion 145a, the second guide portion 145b, the third guide portion 145c and the fourth guide portion 145d of the each of the plate-like members 20A, 20B are formed in plane symmetrical shape and symmetrical position each other, and the rotation axis 8 is supported vertically with respect to the plate-like members 20A, 20B. The right and left flange portions 28A, 28B of the rotation axis 8 each is disposed outside of the first guide portion 145a, the second guide portion 145b, the third guide portion 145c and the fourth guide portion 145d of the each of the plate-like members 20A, 20B.

In this supporting structure for wheel 130, in a case where the front lower portion of the wheel 2 steps up on the step portion 31 that is projecting forward of the wheel 2 while the wheel chair body 3 proceeds, the behavior similar to that described in the embodiments is performed, thereby achieving to get over the step portion 31. Initially, the rotation axis 8 moves from the reference position P1 to the associated movement position P2 while being guided by the first guide portion 145a, resulting in the wheel 2 contacting with the gear 5. Then, the gear 5 holds up the wheel 2 upon the upper surface of the step portion 31. Accordingly, the wheel 2 can step up on the step portion 31 with ease. While the gear 5 holds up the wheel 2, the rotation axis 8 moves along the track R, with being guided by the second guide portion 145b. After the wheel 2 gets over the step portion 31, the gear 5 which rotates only in the rotating direction W2 pushes the wheel 2 to allow the wheel to proceed while rotating in the rotating direction W1. The rotation axis 8 moves along the track R while being guided by the second guide portion 145b to move to the associated movement position P2. Then, the wheel 2 is separated from the gear 5 and the rotation axis 8 is restored from the associated movement position P2 to the reference position P1 while being guided by the first guide portion 145a.

On the other hand, in a case where the lower rear portion of the wheel 2 bump into the step portion 31 that is projecting rearward of the wheel 2 while the wheel chair body 3 recedes, the behavior similar to that described in the embodiments is performed, thereby achieving to get over the step portion 31. Initially, the rotation axis 8 moves from the reference position P1 to the associated movement position P5 while being guided by the third guide portion 145c, resulting in the wheel 2 contacting with the gear 135. Then, the gear 135 holds up the wheel 2 upon the upper surface of the step portion. Accordingly, the wheel 2 can step up on the step portion with ease. While the wheel 2 is held up by the gear 135, the rotation axis 8 moves along the track R2, with being guided by the fourth guide portion 145d. After the wheel 2 gets over the step portion 31, the gear 135 which rotates only in the rotating direction W1 pushes the wheel 2 to allow the wheel to recede while rotating in the rotating direction W2. The rotation axis 8 moves along the track R2 while being guided by the fourth guide portion 145d to move to the associated movement position P5. Then, the wheel 2 is separated from the gear 135 and the rotation axis 8 is restored from the associated movement position P5 to the reference position P1 while being guided by the third guide portion 145c. As stated above, the wheel 2 can step up on the step portion 31 with ease also when the wheel chair body 3 recedes.

Meantime, the structure to switch to the state where the wheel 2 associates with the gear 5 as the rotary body that rotates only one way is not limited to the above structure, that is, the rotation axis 8 of the wheel 2 is moved within the first guide portion 145a from the reference position P1 to the associated movement position P2 to bring the wheel 2 contact with the gear 5, thereby establishing the associated movement therebetween. Also, the structure to switch to the state where the wheel 2 associates with the gear 135 as the second rotary body that rotates only one way is not limited to the above structure, that is, the rotation axis 8 of the wheel 2 is moved within the third guide portion 145c from the reference position P1 to the associated movement position P5, thereby causing the wheel 2 to contact the gear 135 to establish the associated movement. As the structure to switch to the state where the wheel 2 associates with the gear 5 or the gear 135 rotatable only in one way, other various structures such as described above is applicable as the other embodiment. For example, the following structures are also applicable: the supporting structure for wheel 80 as shown in Figs. 21 and 22, the supporting structure for wheel 80 as shown in Figs. 25 and 26 in which holding body 81 holding the wheel 2 is slid, thereby establishing the associated movement between the wheel 2 and the gear 5, the supporting structure for wheel 100 as shown in Figs.29 and 30 in which the holding body 81 supporting the wheel 2 and the gear 5 is slid, thereby establishing a contact between the gear 5 and the engaging plate 16 to make the gear 5 rotary body rotatable only in rotation direction W2, the supporting structure for wheel 105 in Fig. 31 in which the holding body holding the wheel 2, the gear 5a and the pivotable engaging plate 16 is slid to push the engaging plate 16 by the engaging member mover 106, thereby establishing contact between the engaging plate 16 and the gear 5 to make the gear 5 rotatable only in rotating direction W2, the supporting structure for wheel 110 as shown in Fig. 33 in which the engaging member moving apparatus 111 moves the engaging plate 16 to contact with the gear 5, thereby making the gear 5 be rotatable only in rotating direction W2, and the supporting structure for wheel 115 as shown in Fig. 35 in which the rotary body moving apparatus 116 moves the gear 5 toward the wheel 2 to establish contact between the wheel 2 and the gear 5. In the meantime, in the structure to switch the state between where the wheel 2 and the gear 5 contact each other to establish the associated movement and where they do not contact nor establish the associated movement, it is possible to replace the gear 5 to the gear 135 and the engaging plate 16 to the engaging plate 136, and to change to the approximately symmetrical structure at the vertical plane in connection with the above described each structure as the structure for getting over the forward step portion when the wheel chair body 3 proceeds. Further, the structure to switch to the state where the wheel 2 associates with the gear 5 rotatable only in one way, and the structure to switch to the state where the wheel and the gear 135 roatable only in one way can be replaced with other structures.

When the supporting structure for wheel 130 comprises elastic body for urging the rotation axis 8 of the wheel 2 from the associated movement positions P1, P5 to the reference position P1, as shown in Fig. 38, the elastic body is preferably be placed immediately above the rotation axis 8. For example, each plate-like members 20A, 20B at their outsides has a spring 147 as the elastic body and an upper end of the spring 147, above the rotation axis 8 positioned at the reference position P1, is fixed to the plate-like members 20A, 20B, respectively. When right and left ends of the rotation axis 8 moves from the first guide portion 145a to the second guide portion 145b, the spring 147 extends to pull the right and left ends of the rotation axis 8 upward attempting to restore the right and left ends to the first guide portion 145a. When the right and left ends of the rotation axis 8 move from the third guide portion 145c to the fourth guide portion 145d, the spring 147 extends to pull the right and left ends upper-rearward, attempting to restore the right and left ends to the third guide portion 145c. Accordingly, in occasions such as getting over a small step portion or receding of the wheel 2, the rotation axis 8 moves from the reference position P1 to the associated movement positions P2, P5 to prevent the contact between the wheel2 and the gear 5, as well as to achieve a stable proceeding and receding of the wheel 2. After the wheel 2 moves up on the step portion, the rotation axis tends to be restored from the associated movement position P2 or P5 to the reference position P1 without difficulty.

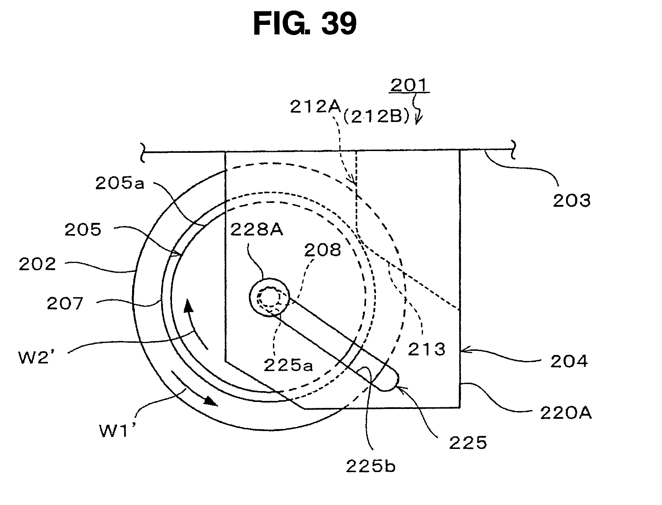

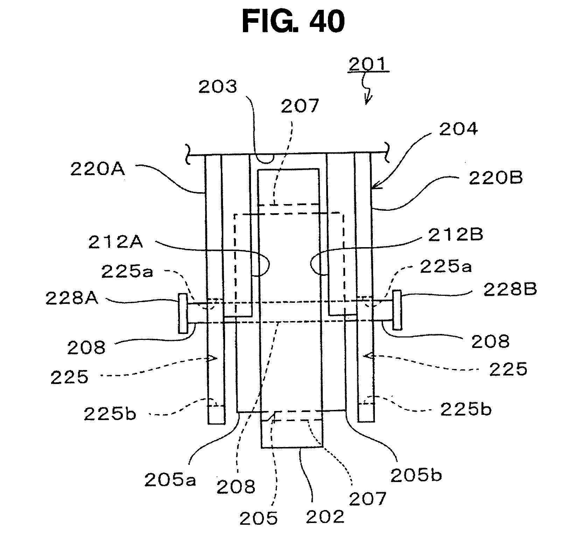

A supporting structure for wheel according to the second embodiment is described next. A supporting structure for wheel 201 shown in Fig. 39 and Fig. 40 is provided on a front portion of the wheel chair as an example of a vehicle body, and supports a wheel 202 serving as a front wheel of the wheel chair. The supporting structure for wheel 201 has a frame 204 and a rotary body 205 having an outer diameter smaller than that of the wheel 202.

The wheel 202 is provided on an outer circumference of the rotary body 205. A rotation limiting mechanism 207 allowing the rotation of the wheel 202 only in one direction correlatively to the rotary body 205. A rotation axis 208 is attached to the rotary body 205. With the aforementioned structure, the wheel 202 is rotatable along the outer circumferential surface of the rotary body 205, around the rotation axis 208 as a center, correlatively to the rotary body 205, only in one rotational direction W1' (a counterclockwise direction in Fig. 39). On the other hand, the rotary body 205 is rotatable around the rotation axis 208 as a center, correlatively to the wheel 202, in a rotational direction W2' (a clockwise direction in Fig. 39) opposite to the rotational direction W1'. The wheel 202 and the rotary body 205 rotate integrally in the rotational direction W1' around the rotation axis 208 as a center in a case of proceeding (forward) of the wheel chair body 203 to a front side (to a left side in Fig. 39) whereas rotating integrally in the rotational direction W2' around the rotation axis 208 as a center in a case of receding (backward) of the wheel chair body 203 to a rear side (to a right side in Fig. 39). In the meanwhile, a ratchet mechanism, a one-way clutch mechanism, or the like, for example, can be used as the rotation limiting mechanism 207.

As shown in Fig. 40, a width of the rotary body 205 is formed as wider than that of the wheel 202 and a left end 205a and a right end 205b of the rotary body 205 are in a state of being projected from left and right sides of the wheel 202, respectively. A stopper 212A is disposed rearward and upward with respect to the left end 205a of the rotary body 205. A stopper 212B is disposed rearward and upward with respect to the right end 205b of the rotary body 205. Each of the stoppers 212A, 212B is formed with an inclined surface 213 which is more inclined downward as proceeding to a rear side, as shown in Fig. 39.

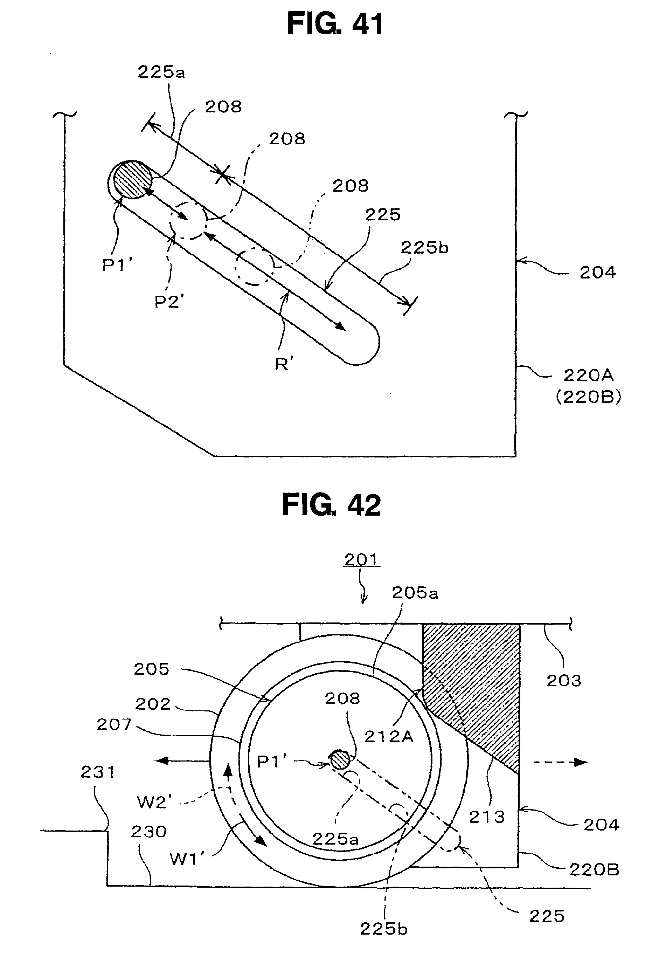

As shown in Fig. 41, the rotation axis 208 is movable between a reference position P1' (the rotation axis 208 shown with a solid line in Fig. 41) at which the rotation axis 208 is moved forward up to a position that the rotary body 205 and the stoppers 212A, 212B do not contact to each other and a contact position P2' (the rotation axis 208 shown with a single dotted chain line in Fig. 41) at which the left end 205a and the right end 205b of the rotary body 25 respectively contact to the inclined surfaces of the stoppers 212A, 212B. Furthermore, the rotation axis 208 is movable rearward and downward with respect to the proceeding direction of the wheel chair body 204 from the contact position P2'. Therefore, the wheel 202 and the rotary body 205 are movable rearward and downward with respect to the proceeding direction of the wheel chair body 203 as moving the rotation axis 208, and the inclined surfaces 213 of the stoppers 212A, 212B respectively come in contact with the outer circumferential surfaces of the left end 205a and the right end 205b of the rotary body 205 where the rotary body 205 is moved rearward. Furthermore, the rotary body 205 can move rearward and downward with respect to the proceeding direction of the chair wheel body 203, as in contact with each of the inclined surfaces 213 of the stoppers 212A, 212B while moving the rotation axis 208 rearward and downward with respect to the contact position P2'. Where the rotary body 205 is moved along the stoppers 212A, 212B, the rotation axis 208 is to be moved behind the contact position P2', along the track R' in a linear shape distant from the inclined surface 213 as much as length approximately equal to a radius of the rotary body 205, in substantially parallel to the inclined surface 213.

The frame 204 has plate members 220A, 220B disposed in substantially parallel to each other, as shown in Fig. 40. The plate members 220A, 220B are disposed upright to a flat surface (ground) on which the wheel chair body 203 drives, along a direction directing the processing direction of the wheel chair body 203, and are arranged respectively on right and left sides of the rotary body 205.

A guide groove 225 is formed at each of the plate members 220A, 220B, for guising the rotation axis 208 so as to move along the reference position P1', the contact position P2', and the track R'. As shown in Fig. 40, the guide groove 225 of the plate member 220A guides a left end of the rotation axis 208, whereas the guide groove 225 of the plate member 220B guides a right end of the rotation axis 208. The guide grooves 225 of the plate members 220A, 220B are formed in a shape and at a position symmetric each other with respect to a plane.

Each of the guide grooves 225 is formed linearly in substantially parallel with the inclined surface 213. It is desirable to form a width of each guide groove 225 slightly wider than a diameter of the rotation axis 208 so the rotation axis 208 as to be movable and rotatable smoothly with a space inside each guide groove 225. As shown in Fig. 41, each of the guide grooves 225 includes an upper portion serving as a first guide portion 225a for guiding the rotation axis 208 between the reference position P1' and the contact position P2' and a portion below the first guide portion 225a, serving as a second guide portion 225b for guiding the rotation axis 208 along the trace R'.

As shown in Fig. 39, and Fig. 40, the wheel 202 and the rotary body 205 are disposed between the plate members 220A, 220B, and the rotation axis 208 is disposed in a manner to make the left and right ends penetrate inner sides of the guide portions 225 of the plate members 220A, 220B, respectively and to be in a state of being upright to each of the plate members 220A, 220B. In a state that the wheel chair body 203 is on the flat surface, because the force produced by the self weight of the wheel chair body 3 is exerted to a top surface of the rotation axis 208 from an upper inclined surface of each of the guide grooves 225, the rotation axis 208 is pushed forward by the upper inclined surface of each of the guide grooves 225, thereby being disposed at an upper end of each of the guide grooves 225.

Flange portions 228A, 228B are formed at left and right sides of the rotation axis 208. The flange portions 228A, 228B are respectively disposed at outer sides of the guide grooves 225 of the plate members 220A, 220B. Thus, the rotation axis 208 can be prevented from detaching from the guide groove of each of the plate members 220A, 220B, thereby being surly held at the inner sides of the guide grooves 225.

Next, operation of the supporting structure for wheel 201 according to the second embodiment thus structured is described. As shown in Fig. 42, where the wheel chair body 203 drives on a flat surface extending substantially horizontally, the rotation axis 208 is located at the reference position P1'. The left and right ends of the rotation axis 208 are in contact with the upper edges of the first guide portions 225a at the inner sides of the guide grooves 225 of the plate members 220A, 220B, respectively. That is, the plate members 220A, 220B are respectively supported by the rotation axis 208, and the wheel chair body 203 is supported by the wheel 202 through the frame 204, the rotation axis 208, the rotary body 205, and the rotation limiting mechanism 207. The left end 205a and the right end 205b of the rotary body 205 are separated from the inclined surfaces 213 of the stoppers 212A, 212B. The wheel 202 moves forward as rotating in the rotational direction W1' around the rotation axis 208 as a center integrally with the rotary body 205 where the wheel chair body 203 moves forward. Furthermore, the wheel 202 moves rearward as rotating in the rotational direction W2' around the rotation axis 208 as a center integrally with the rotary body 205 where the wheel chair body 203 moves rearward.

If a step portion 231 as an obstacle is projected from a flat surface 230 to an upper side in front of the wheel 202, a front lower portion of the outer circumferential surface of the wheel 202 hits a corner of the step portion 231. Where the level of the step portion 231 is adequately lower than a size of the wheel 202, the wheel 202 is not stopped by hitting to the step portion 231, and can move forward upon riding over the step portion 31 as in a state that the left and right ends of the rotation axis 208 are positioned inside the first guide portions 225a.

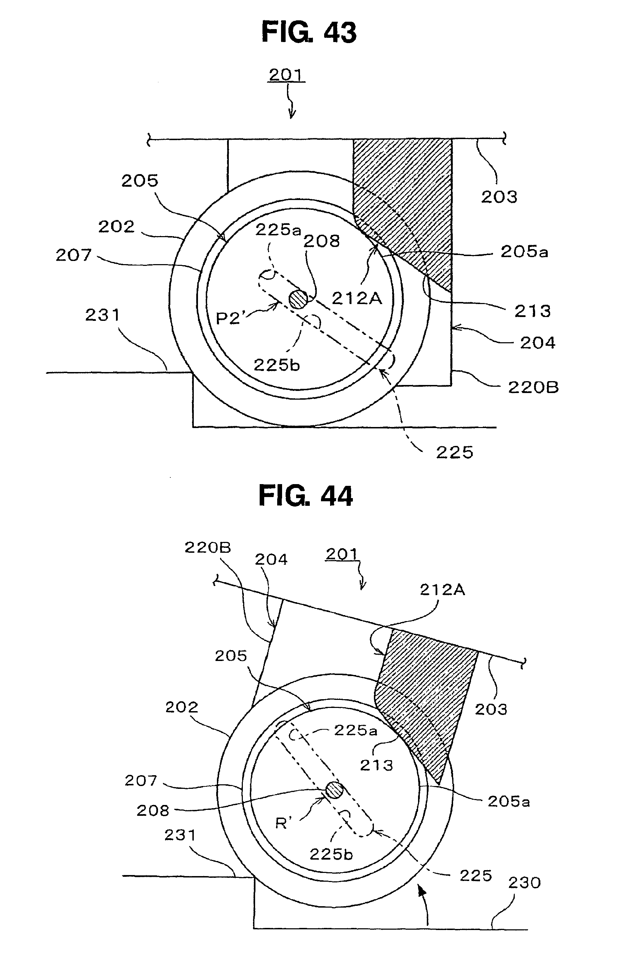

On the other hand, in a case where the level of the step portion 231 is comparatively higher than a size of the wheel 202 to stop the proceeding of the wheel 202, the wheel chair body 203, the frame 204, and the stoppers 212A, 212B move forward as the wheel 202 is in contact with the step portion 231, as shown in Fig. 43. The wheel 202, the rotary body 205, and the rotation axis 208 move correlatively rearward with respect to the wheel chair body 203, the frame 204, and the stoppers 212A, 212B. The rotation axis 208 moves correlatively rearward and downward with respect to the reference position P1' inside the first guide portion 225a of each of the plate members 220A, 220B. Where the rotation axis 208 moves to the contact position P2', an upper end of the inclined surface 213 of the stopper 212A comes in contact with the left end of the rotary body 205 rearward and upward with respect to the rotation axis 208, whereas an upper end of the inclined surface 213 of the stopper 212B comes in contact with the right end 205b.

Thereafter, where the wheel chair body 203, the frame 204, and the stoppers 212A, 212B further move forward, the outer circumferential surfaces of the left end 205a and the right end 205b of the rotary body 205 are respectively pushed forward by the inclined surfaces 213 of the stoppers 212A, 212B. Herein, the rotary body 205 cannot rotate in the rotational direction W1' correlatively to the wheel 202 stopped by the step portion 231 even where pushed by the stoppers 212A, 212B from the rearward and upward side with respect to the rotation axis 208 because the rotary body 205 is rotatable only in one rotational direction W2' with respect to the wheel 202 awing to operation of the rotation limiting mechanism 207 formed between the rotary body 205 and the wheel 202. Therefore, the rotary body 205 is pushed up by the stoppers 212A, 212B, together with the wheel 202, toward the forward and upper side. Thus, propelling force in the proceeding direction of the chair wheel body 203 is transmitted via the stoppers 212A, 212B to the rotary body 205. As shown in Fig. 44, the rotary body 205 and the wheel 202 then start moving rotationally around the corner of the step portion 231 as a center in a direction toward an upper surface of the step portion 231.

The rotary body 205 moves toward a rear portion of the inclined surface 213 of each of the stoppers 212A, 212B as moving along the inclined surface 213 of each of the stoppers 212A, 212B in the rotational direction W1' correlatively when viewed from the stoppers 212A, 212B while rotationally moving in a direction of moving up on the upper surface of the step portion 231. The rotation axis 208 moves rearward along the track R' correlatively to each of the plate members 220A, 220B while both of the left and right ends move inside the second guide portions 225b at the guide grooves of the plate members 220A, 220B, respectively. In the meanwhile, while the rotation axis 208 moves along the track R' , the left and right ends of the rotation axis 208 are separated from the edges of the second guide portions 225b and are in a floated state inside the second guide portions 225b. The rotation axis 208 therefore can be smoothly moved inside the second guide portions 225b.

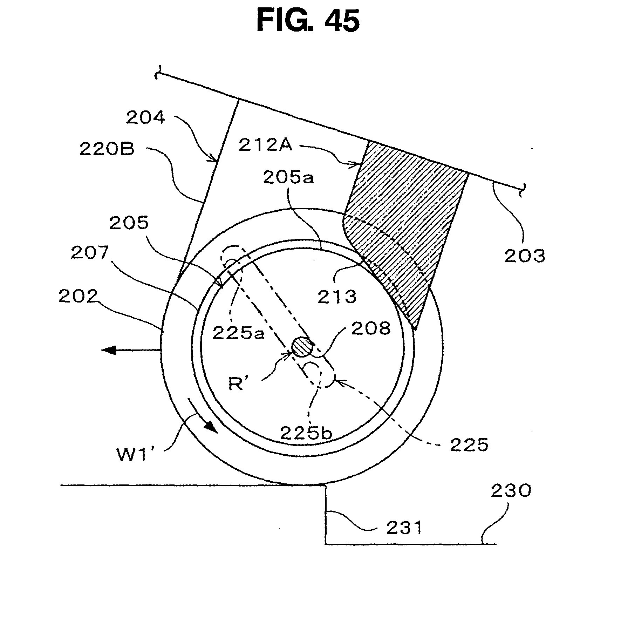

Thus, the wheel 202 and the rotary body 205 move around the corner of the step portion 231 as a center with force that the stoppers 212A, 212B push the outer circumferential surface of the rotary body 205 and can move up on the upper surface of the step portion 231 as shown in Fig. 45. The wheel chair 203 then moves forward and upward while supported by the wheel 202 through the stoppers 212A, 212B, the rotary body 205 and the rotation limiting mechanism 207.

Herein, the effect of the wheel supporting mechanism 201 according to the second embodiment of this invention is described in comparison with a case where an ordinary supporting mechanism for the wheel 202, or namely the rotation axis 208 is secured to the frame 204. Propelling force in the proceeding direction of the wheel chair body 23 is generally transmitted via the frame 204 and the rotation axis 208, and the wheel 202 moves up by using the corner of the step portion 231 as a fulcrum according to the force exerted to the rotation axis 208. To the contrary, with the supporting structure for wheel 201 according to the second embodiment of this invention, the wheel 202 and the rotary body 205 move up by using the corner of the step portion 231 as a fulcrum according to the force that the stoppers 212A, 212B push the outer circumferential surface of the rotary body 205. Because a contact position between each of the stoppers 212A, 212B and the rotary body 205 is located at a higher position than the rotation axis 208, the level of a force application point becomes higher than the ordinary situation. That is, because the distance between the force application point and the fulcrum is longer than the ordinary situation, the wheel 202 can be moved to the upper portion of the step portion 231 with small force. Therefore, the wheel 202 can be easily moved up on the step position 231.

Where the wheel 202 moves to the upper portion of the step portion 231, the wheel 202 and the rotary body 205 move forward, whereas the stoppers 212A, 212B, the frame 204, and the chair wheel body 203 move down by the self weight of the wheel chair body 203. The inclined surfaces of the stoppers 212A, 212B move down as sliding along the outer circumferential surface of the rotary body 205 while pushing the rotary body 205 to the front side. Herein, the rotary body 205 is rotated around the rotation axis 208 as a center in the rotational direction W2' according to the movement of the stoppers 212A, 212B toward the rearward and downward side because the rotary body 205 is structured as rotating around the rotation axis 208 as a center in the rotational direction W2' according to the operation of the rotation limiting mechanism 207. The stoppers 212A, 212B can slide down smoothly while rotating the rotary body 205. Furthermore, the rotary body 205 can move forward smoothly along the inclined surfaces 213 of the stoppers 212A, 212B correlatively upon rotating in the rotational direction W2'. On the other hand, the wheel 202 can rotate around the rotation axis 208 as a center in the rotational direction W1' when viewed from the ground even when the rotary body 205 rotates in the rotational direction W2' owing to the operation of the rotation limiting mechanism 207. Therefore, the wheel 202 pushed to the front side via the stoppers 212A, 212B, the rotary body 205, and the rotation limiting mechanism 207 moves forward as rotating in the rotational direction W1'. As described above, the wheel 202 and the rotary body 205 can start moving forward smoothly after moved up on the step portion 231.

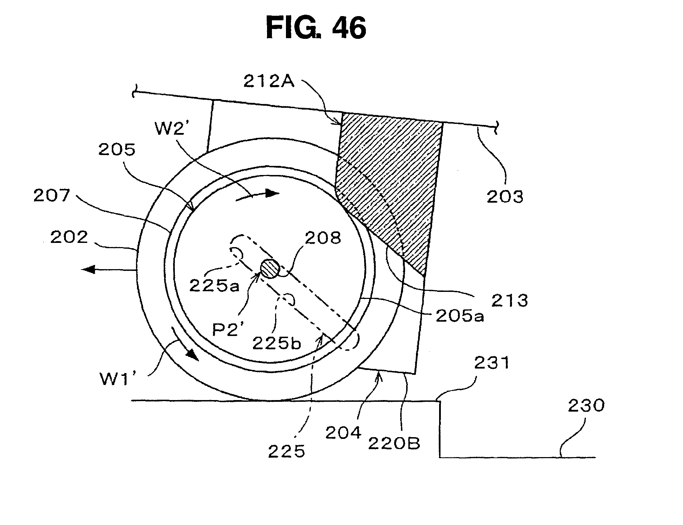

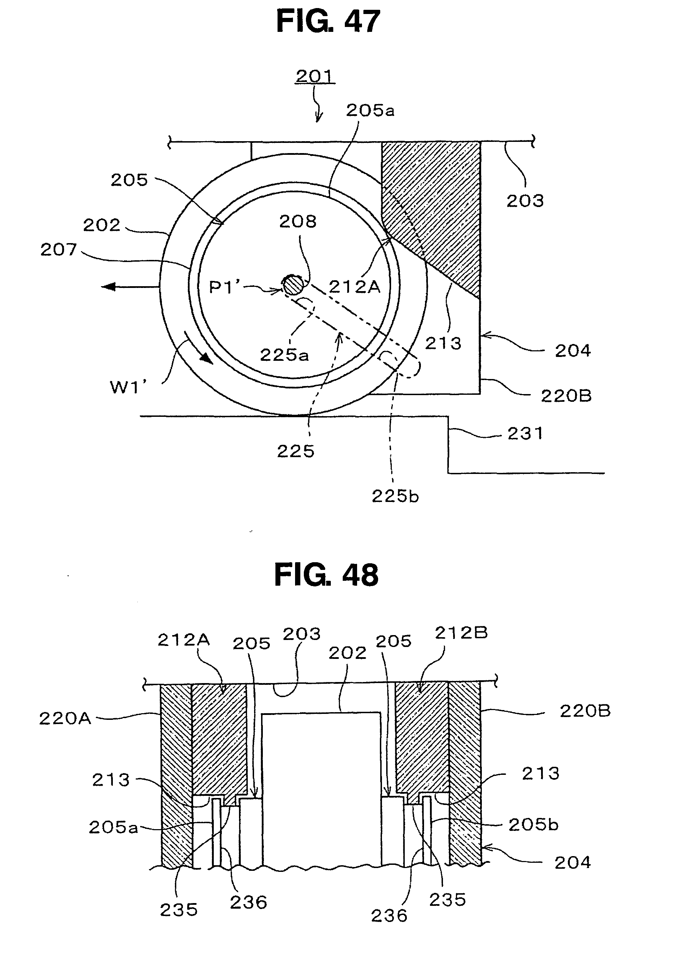

The rotation axis 208 moves along the track R' as guided by the second guide portion 225b of each of the guide grooves 225 while the wheel 202 and the rotary body 205 move forward on the step portion 231 and the stoppers 212A, 212B, the frame 204, and the wheel chair body 203 move down. The wheel chair body 203 moves forward and downward while supported by the wheel 202 through the stoppers 212A, 212B, the rotary body 205, and the rotation limiting mechanism 207. Subsequently, as shown in Fig. 46, the rotation axis 208 reaches the contact position P2', and furthermore as shown in Fig. 47, the wheel 202, the rotary body 205, and the rotation axis 208 move forward correlatively to the stoppers 212A, 212B, the frame 204, and the wheel chair body 204, and the rotation axis 208 moves from the contact position P2' to the reference position P1' correlatively, so that the rotary body 205 is separated from the stoppers 212A, 212B. Thus, in substantially the same manner as the situation before the wheel 202 hits the step portion 231, the upper edges of the first guide portions 225a come in contact with the upper portions of the left and right ends inside the guide grooves 225 of the plate members 220A, 220B, and the wheel chair body 203 is in a state of being supported by the wheel 202 through the frame 204, the rotation axis 208, the rotary body 205, and the rotation limiting mechanism 207.

With the supporting structure for wheel 201 according to the second embodiment of this invention, the stoppers 212A, 212B push the rotary body 205 from the rearward and upward side to the front side, so that the wheel 202 can be moved up on the step portion 231 smoothly with smaller force than the ordinary situation. The stoppers 212A, 212B is quickly moved down after moving the wheel 202 up on the step portion 231 by making the structure that the rotary 205 rotates only in the rotational direction W2' correlatively to the wheel 202, thereby being able to move the wheel 202 and the rotary body 205 forward surely and quickly. Therefore, the wheel chair body 203 can drive smoothly even where the step portion 231 exists. Because the wheel 202 can be moved up on the obstacles so the wheel chair body 203 as to start moving forward quickly, the wheel chair body 203 can drive even where the obstacles such as, e.g., the step portion 231 or the like, exist in succession. Furthermore, this embodiment has a simple structure, so that it will never happen that members such as an arm or auxiliary member hit any obstacle to break down the structure, and so that this embodiment is very safe.

An example of the supporting structure for wheel 201 according to the second embodiment of this invention is described as above but this invention is not limited to the above explained embodiment. For example, with the supporting structure for wheel 201 according to the second embodiment of this invention, explained in reference with Fig. 39 to Fig. 47, the supporting structure for wheel 1 is to support the front wheel of the wheel chair body 203 as the wheel 202 but the supporting structure for wheel 201 according to the second embodiment of this invention may be applied to a rear wheel of the wheel chair so that the wheel chair body 203 can ride over smoothly the step portion at the rear side of the wheel chair body 203 where moving backward. Furthermore, the supporting structure for wheel 201 according to the second embodiment of this invention can be applied to, other than the wheel chairs, a supporting structure for wheel attached to various transporting or traveling apparatuses such as, e.g., wheel chairs, baby strollers, stretchers, and the like, or to various transporting or traveling machines such as, e.g., vehicles, machine tools, and the like.

Furthermore, a controlling mechanism for controlling rotational velocity of the rotary body 205 may be formed. In this case, it is considered to control the rotational velocity of the rotary body 205 so as not to be excessively high, using frictional resistance as the controlling mechanism. Formation of the aforementioned controlling mechanism prevents the frame 204 and the wheel chair body 203 from moving downward swiftly by the self weight of the wheel chair body 203 because the rotation of the rotary body (gear 205) can be controlled where the wheel 202 rotates around the rotation axis 208 as a center in the rotational direction W1' as shown in Fig. 45 after the wheel 202 is moved up on the step portion 231. It is therefore possible to absorb such impact or oscillation as occurring at a time when the wheel chair body 203 moves downward by the self weight thereof after moving up on the step portion 231. It is also effective to place an elastic means such as, e.g., a spring, a rubber, or the like between the chair wheel body 203 and the wheel 202 to improve ride quality. Furthermore, it is also considered to form an attenuating means such as, e.g., an air suspension, a hydraulic cylinder, or the like, together with or instead of an impact absorbing means.

With the supporting structure for wheel 201 according to the second embodiment of this invention, described in reference with Fig. 39 to Fig. 47, the frame 204 and the stoppers 212A, 212B are secured to the wheel chair body 203 but may be movable with respect to the wheel chair body 203. In this case, this invention can be applied to such a caster as rotatable around an axis substantially perpendicular to the flat surface as a center. That is, it is only necessary, for example, to attach to the wheel chair body 203 a vertical axis disposed in a manner substantially perpendicular to the flat surface, to form such a rotary member as rotatable around the vertical axis as a center, and to secure the frame 204 and the stoppers 212A, 212B to the rotary member. Therefore, the wheel 202, the rotary body 204, and the rotation axis 208 become rotatable around the vertical axis as a center, so that the proceeding direction of the wheel chair body 203 can be changed smoothly.

As shown in Fig. 48, a rail 234 for guiding the rotary body 205 may be formed to each of the inclined surfaces 213 of the stoppers 212A, 212B. In an example shown in Fig. 48, a guide grooves 236 are respectively formed along the outer circumferential surface of the left end 205a and the outer circumferential surface of the right end 205b of the rotary body 205. The guide grooves 236 are to be moved along the rails 235 as guided by the rails 235 of the stoppers 212A, 212B, respectively. In this case, the rotary body 25 can be surely moved along the inclined surfaces 213 of the stoppers 212A, 212B.

With the supporting structure for wheel 201 according to the second embodiment of this invention, described in reference with Fig. 39 to Fig. 47, each of the left and right ends of the rotation axis 208 is moved in a floated state that each end is distant from the edge of the second guide portion 225b, at the inner side of the second guide portion 225b but may be moved as in contact with the edge of the second guide portion 225b. This case is safer because the left and right ends of the rotation axis 208 can be surely guided.

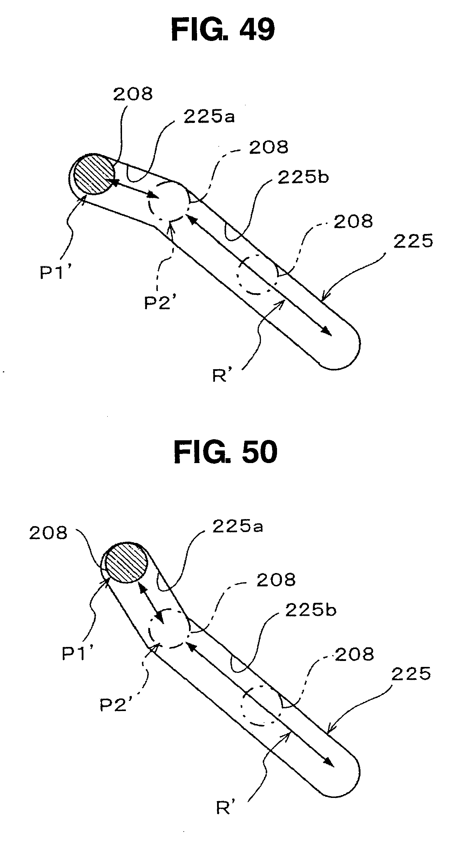

With the supporting structure for wheel 201 according to the second embodiment of this invention, described in reference with the Fig. 39 to Fig. 47, the inclined surfaces 213 are formed to the stoppers 212A, 212B and the guide grooves 225 are set linearly as inclined along the inclined surfaces 213, but the shapes of the stoppers 212A, 212B and the guide grooves 225 are not limited to the above. For example, the first guide portion 225a may be inclined downward with respect to the second guide portion 225b, as shown in Fig. 49. In this case, it becomes easy to move the rotation axis 208 from the reference position P1' to the contact position P2' smoothly at the first guide portion 225a. Furthermore, as shown in Fig. 50, the first guide portion 225a of the guide groove 225 may be inclined upward with respect to the second guide portion 225b. In this case, the rotation axis 208 is pushed to the upper inclined surface of the first guide portion 225a, thereby being held surely at the reference position P1'at the first guide portion 225a.

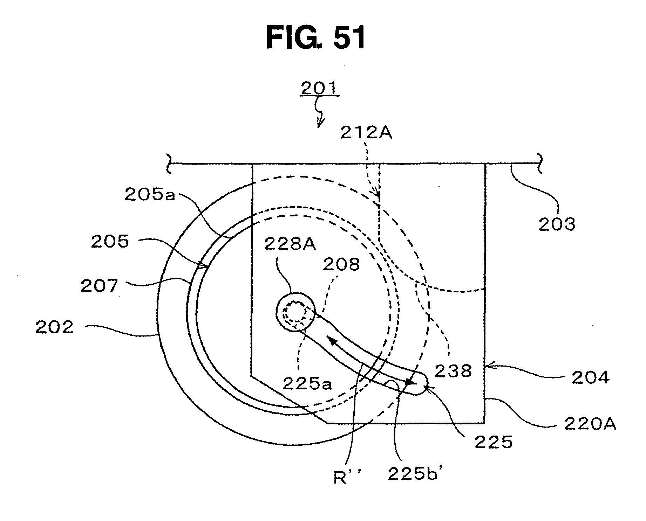

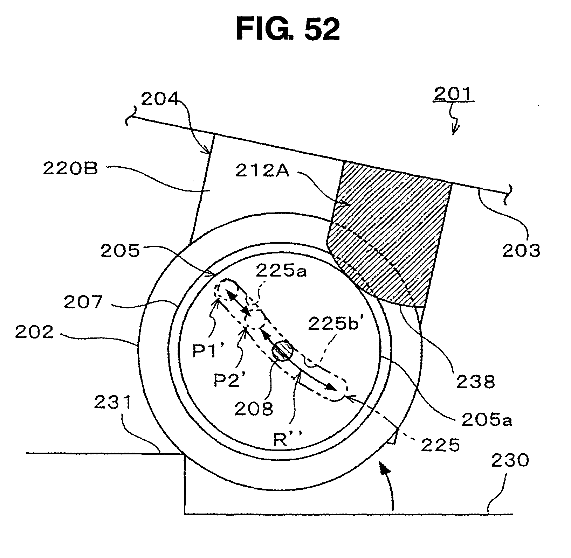

As shown in Fig. 51, each of the stoppers 212A, 212B may have, instead of the inclined surface 213, a curved surface 238 curved convexly downward with respect to the proceeding direction of the wheel 202, and the rotation axis 208 may be movable along the track R' curved along the curved surface 238. In this case, the second guide portion 225b' of the guide groove 225 of each of the plate members 220A, 220B is desirably formed as curved convexly downward in manner to guide the rotation axis 208 along a track R" from the contact position P' to the rear side. In an example shown in Fig. 51, each of the curved surface 238, the track R", and the second guide portion 225b' is in an arc shape at the first guide portion 225a. With the aforementioned structure, the rotary body 205 can move along the curved surfaces 238 of the stoppers 212A, 212B, and the rotation axis 208 can move along the track R" curved inside the second guide portion 225b, as shown in Fig. 52. In this case also, the wheel 202 and the rotary body 205 can be moved up on the step portion 231 upon pushing the rotary body 205 using the stoppers 212A, 212B.

In the meantime, the upper surface of the first guide portion 225a is desirably inclined in a manner to lower as approaching from the reference position P1'to the contact position P2'. Thus, force owing to the self weight of the wheel chair body 203 is exerted from the upper inclined surface of the first guide portion 225a to the upper surface of the rotation axis 208 where the wheel chair body 203 is located on the flat surface, the rotation axis 208 is pushed forward by the upper inclined surface of the first guide portion 225a, thereby being held by the upper end of the first guide portion 225a. Therefore, the rotation axis 208 can be prevented from separated from the reference position P1' and from moving rearward to the contact position P2'while the wheel chair body 203 moves forward on the flat surface. Furthermore, the rotation axis 208 can be moved smoothly from the reference position P1' to the track R' (R").

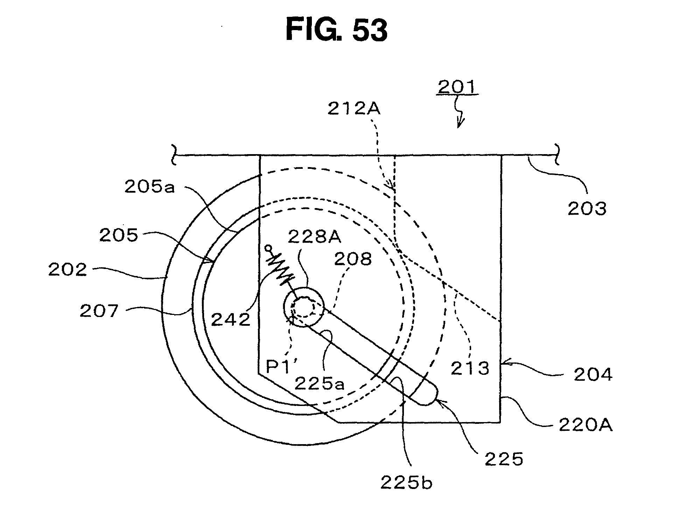

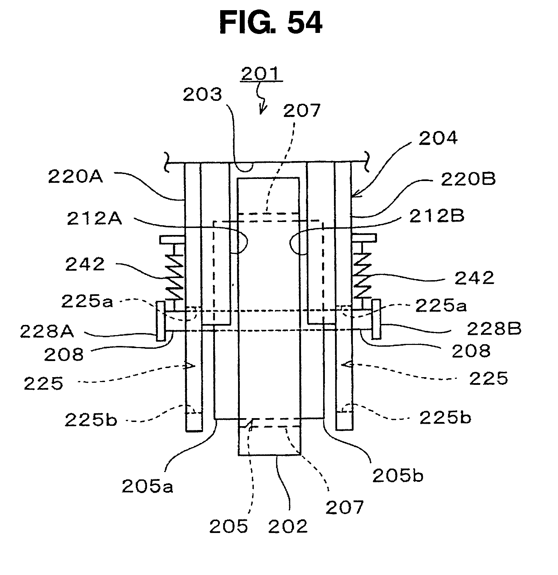

Furthermore, an elastic body for urging as replacing the rotation axis from the contact position P2' to the reference position P1' may be connected. For example, springs 242 are respectively provided to outsides of the plate members 220A, 220B, as shown in Fig. 53 and Fig. 54. In Fig. 53 and Fig. 54, upper ends of the springs 242 each is securely connected to the plate members 220A, 220B at the front side and the upper side with respect to the rotation axis 208 positioned at the reference position P1'. Lower ends of the springs 242 are connected to the left and right ends of the rotation axis 208, respectively. Where the left and right ends of the rotation axis 208 move from the guide portion 225a to the second guide portion 225b, the springs 242 stretch to exert force to replace the left and right ends of the rotation axis 208 to a side of the first guide portion 225a. With the structure as described above, the rotation axis 208 can be prevented from moving to the second guide portion 225b to be in contact with the stoppers 212A, 212B in a case where the wheel chair body 203 rides over the small step portion or where the front portion of the wheel chair body 203 is held up from the ground. The wheel 202 can therefore drive in a stable state. Furthermore, the rotation axis 208 is easily replaced from the contact position P2' to the reference position P1' after wheel 202 moves to the upper side of the step portion 231. In the meanwhile one end of a spring 242 may be secured to a rearward and downward side, not a forward and upward side with respect to the rotation axis 208 so the spring 242 as to be compressed in a case where each of the left and right ends of the rotation axis 208 moves from the first guide portion 225a to the second guide portion 225b and so replacing force toward a side of the first guide portion 225a as to be exerted to each of the left and right ends of the rotation axis 208. Furthermore, other than the spring, such a material as having extendability, e.g., a rubber or the like, or the air suspension, the hydraulic cylinder, or other damper mechanisms of various types may be used as the elastic body.

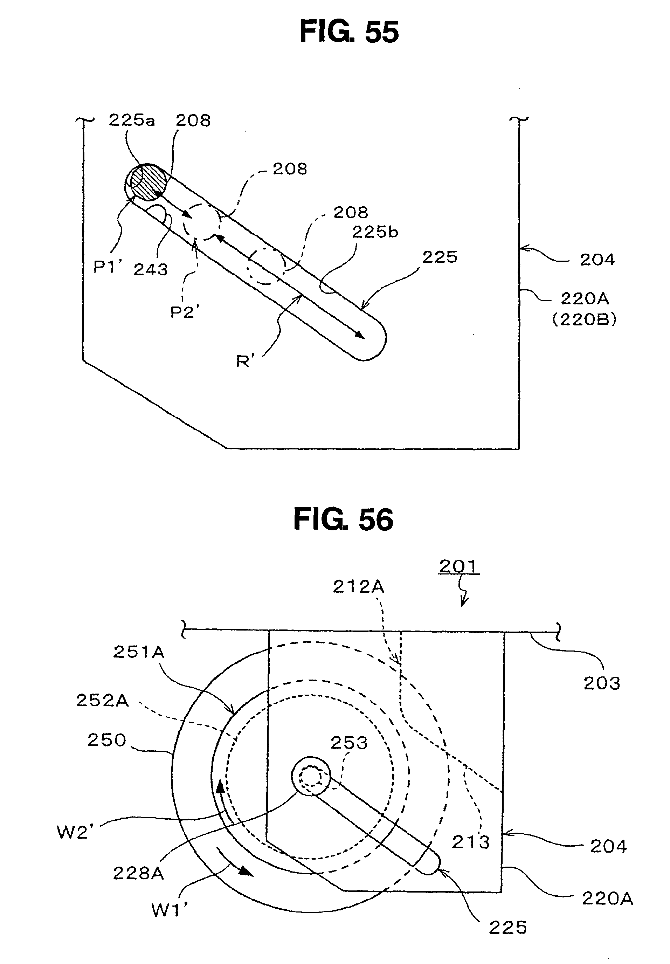

A protrusion 243 may be formed at the lower surface of the first guide portion 225a, as shown in Fig. 55. In Fig. 55, the protrusion 243 is formed at the rear portion of the first guide portion 225a as projected from the lower end to the upper side. The left and right ends of the rotation axis 208 of the wheel 202 are moved over the protrusion 243 from the reference position P1' inside the first guide position 225a to the contact position P2'. A material of the protrusion 243 is preferably a rubber or the like, for example. With the structure as described above, where the wheel chair body 203 rides over a small step portion or the front portion of the chair wheel body 203 is held up from the ground, such a situation can be prevented that the rotation axis 208 moves to the second guide portion 225b and the rotary body 205 comes in contact with the stoppers 212A, 212B. The wheel 202 can therefore drive in a stable state.

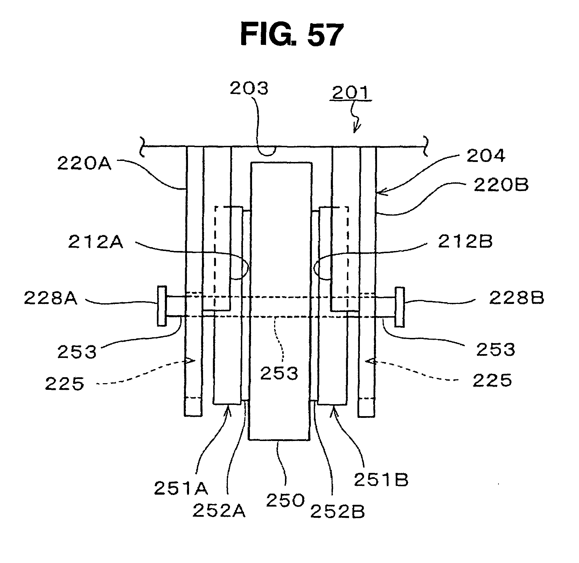

With the supporting structure for wheel 201 according to the second embodiment of this invention, described in reference with Fig. 39 to Fig. 47, the wheel 202 is provided to the outer circumference of the rotary body 205 and the rotation limiting mechanism 207 is formed between the inner circumferential surface of the wheel 202 and the rotary body 205, but disposal of the wheel 202, the rotary body 205, and the rotation limiting mechanism is not limited to the above. For example, rotary bodies 251A, 251B may be respectively disposed to left and right ends of a wheel 250, as shown in Fig. 56 and Fig. 57, and a rotation limiting mechanism 251A may be provided between a left side surface of the wheel 250 and the rotary body 251A, whereas a rotation limiting mechanism 251B may be provided between a right side surface of the wheel 250 and the rotary body 251B. In Fig. 56 and Fig. 57, the rotation axis 253 is provided as penetrating in the wheel 250 and the rotary bodies 251A, 251B. The wheel 250 is rotatable around the rotation axis 253 as a center only in one rotational direction W1' (in a counterclockwise direction in Fig. 56) correlatively to the rotary bodies 251A, 251B according to the operation of the rotation limiting mechanisms 252A, 252B. The rotary bodies 251A, 251B are rotatable around the rotation axis 253 as a center only in one rotational direction W2' (in a clockwise direction in Fig. 56) correlatively to the wheel 250 according to the operation of the rotation limiting mechanism 252A, 252B. The inclined surfaces 213 of the stoppers 212A, 212B are to come in contact with the outer circumferential surfaces of the rotary bodies 251A, 251B. In this case also, the rotary bodies 251A, 251B are pushed by the stoppers 212A, 212B, and the rotary bodies 251A, 251B are respectively moved along the stoppers 212A, 212B so that the wheel 250 and the rotary bodies 251A, 251B can be made to ride over the step portion.

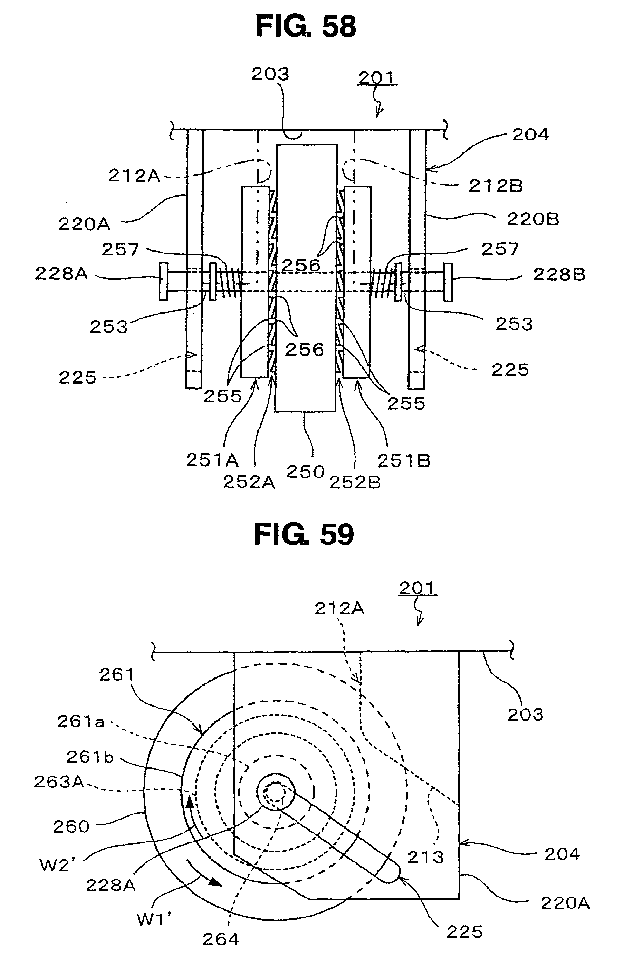

In the meanwhile, the ratchet mechanism, the one-way clutch mechanism, or the like, for example, can be used as the rotation limiting mechanisms 252A, 252B. Furthermore, tooth forms are respectively formed at a side surface of the wheel 250 and side surfaces of the rotary bodies 251A, 251B to make such a structure as rotatable only in one direction, as shown in Fig. 58. In Fig. 58, the rotation limiting mechanism 252A is composed of a plurality of tooth forms 255 formed along a peripheral edge of a left side surface of the wheel 250 and a plurality of tooth forms 256 formed at a right side surface of the rotary body 251A. Each of the tooth forms 255 is formed in a manner to be more projected toward a side as approaching in the rotational direction W2'. A spring 257 as an elastic body is formed at a left side of the rotary body 251A. The rotary body 251A can be rotated correlatively to the wheel 250 while making tooth forms 255A, 256A in mesh with each other by urging as pushing the rotary body 251A toward the wheel 250 according to elastic force of the spring 257. In the meanwhile, other than the spring, such a material as having extendability, e.g., a rubber or the like may be used as an elastic body. The rotation limiting mechanism 252B also has a structure symmetrically to and substantially the same as that of the rotation limiting mechanism 252A, and the spring 257 is formed at a right side of the rotary body 251B. The tooth forms 256A can be respectively moved along the tooth forms 255A in the rotational direction W2' with the rotation limiting mechanisms 252A, 252B, so that the rotary bodies 251A, 251B can be rotated in the rotational direction W2' with respect to the wheel 250. On the other hand, because the tooth forms 256A are respectively engaged in end portions of the tooth forms 255A where respectively moved along the tooth forms 255A in the rotational direction W1', the rotary bodies 251A, 251B cannot be rotated in the rotational direction W1' with respect to the wheel 250. As described above, limitation of the rotary body in the rotational direction can be realized with a simple structure.

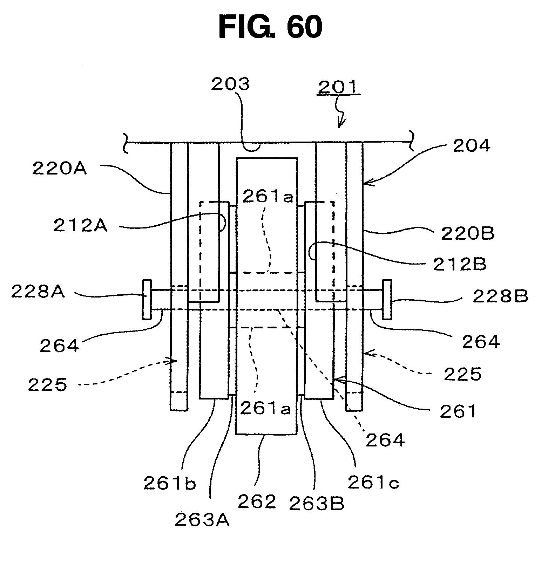

As shown in Fig. 59 and Fig. 60, a rotary body 261 may be structured as having a cylinder portion 261a, flanges 261b, 261c extending from both ends to an outer circumference of the cylinder portion 261a, and a wheel 262 may supported by the outer circumferential surface of the cylinder portion 261a of the rotary body 261, and the flanges 261b, 261c may be respectively disposed at left and right sides of the wheel 262, and a rotation limiting mechanism 263A may be provided between a left side surface of the wheel 262 and the flange 261b, and a rotation limiting mechanism 263B may be provided between a right side surface of the wheel 262 and the flange 261b. In Fig. 59, the rotation axis 264 is provided as penetrating in the cylinder portion 261a of the rotary body 261. The rotary body 261 is rotatable around the rotation axis 264 as a center only in one rotational direction W2' (in a clockwise direction in Fig. 59) correlatively to the wheel 262 according to operation of the rotation limiting mechanisms 263A, 263B. The inclined surfaces 213 of the stoppers 212A, 212B are respectively to come in contact with the outer circumferential surfaces of the flanges 261b, 261c. In this case also, the flanges 261b, 261c are pushed by the stoppers 212A, 212B to enable the wheel 262 and the rotary body 261 to move up on the step portion.

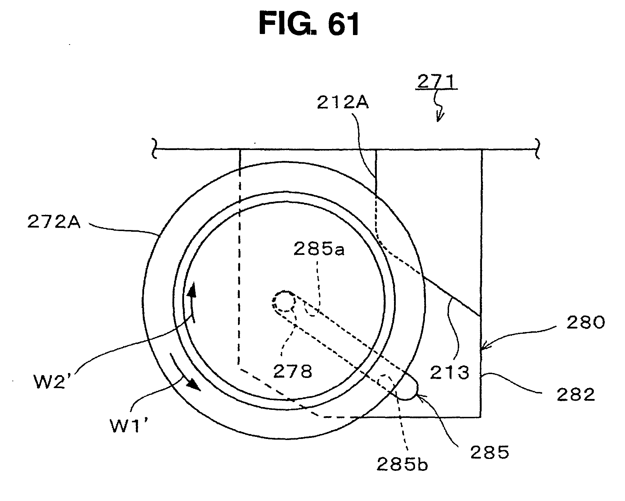

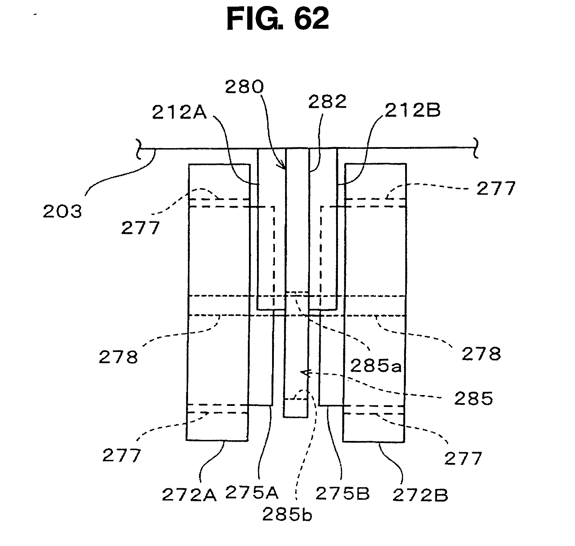

The supporting structure for wheel 201 according to the second embodiment of this invention, described in reference with Fig. 39 to Fig. 47 can be applied to a supporting structure for wheel 271 for a dual caster 270 such as shown in Fig. 61 and Fig. 62, for example. In Fig. 61 and Fig. 62, the dual caster 270 is composed of two wheels 272A, 272B having the same outer diameter. The wheels 272A, 272B are respectively provided to outer circumferential surfaces of rotary bodies 275A, 275B formed as having an outer diameter smaller than that of the wheels 272A, 272B. Rotation limiting mechanisms 277 are respectively provided between an inner circumferential surface of the wheel 272A and the outer circumferential surface of the rotary body 275A and between an inner circumferential surface of the wheel 272B and the outer circumferential surface of the rotary body 275B. One rotary body 275A is supported by a left side of a rotary axis 278, whereas the other rotary body 275B is supported by a right side of the rotary axis 278.

With the aforementioned structure, the wheels 272A, 272B are rotatable around the rotation axis 278 as a center in one rotational direction W1' (in a counterclockwise direction in Fig. 61) along the outer circumferential surface of the rotary body 275A or 275B correlatively to the rotary bodies 275A, 275B, respectively. On the other hand, the rotary bodies 275A, 275B are rotatable around the rotation axis 278 as a center only in one rotational direction W2' (in a clockwise direction in Fig. 61) opposite to the rotational direction W1' correlatively to the wheels 272A, 272B, respectively. Furthermore, the wheels 272A, 272B and the rotary body 275A or 275B rotate integrally around the rotation axis 278 as a center in the rotational direction W1' in a case of proceeding (forward) of the wheel chair body 203 to a front side (to a left side in Fig. 61), whereas rotating integrally around the rotation axis 278 as a center in the rotational direction W2' in a case of receding (backward) of the wheel chair body 203 to a rear side (to a right side in Fig. 61).

A flame 280 supported by the wheel chair body 203 with the supporting structure for wheel 271 has a plate member 282 disposed upright to the flat surface, and is formed with a guide groove 285 substantially the same as the guide groove 225 described in the embodiment. That is, a first guide portion 285a and a second guide portion 285b substantially the same as the first guide portion 225a and the second guide portion 225b are formed. As shown in Fig. 62, the rotation axis 278 is provided as penetrating in an inner side of the guide groove 285, and the wheel 272A and the rotary body 275A are disposed at a left side of the plate member 282, whereas the wheel 272B and the rotary body 275B are disposed at a right side of the plate member 282. A center portion of the rotary axis 278 is movable along the guide groove 285.

Furthermore, as shown in Fig. 62, the supporting structure for wheel 271 is in a state that a right end of the rotary body 275A is projected from a right side of the wheel 272A, whereas a left end of the rotary body 275B is projected from a left side of the wheel 272B. The stoppers 212A, 212B substantially the same as those described above are respectively provided to a rearward and upward side with respect to the right end of the rotary body 275A and to a rearward and upward side with respect to the left end of the rotary body 275B.

The right end of the rotary body 275A is separated from the inclined surface 213 of the stopper 212A and the left end of the rotary body 275B is separated from the inclined surface 213 of the stopper 212B where the rotation axis 278 is located at the reference position. A center position of the rotation axis 278 is located inside the first guide portion 285a. The right end of the rotary body 275A comes in contact with the inclined surface 213 of the stopper 212A and the left end of the rotary body 275B comes in contact with the inclined surface 213 of the stopper 212B where the rotation axis 278 is located at the contact position. The right end of the rotary body 275A moves along the inclined surface 213 of the stopper 212A and the left end of the rotary body 275B moves along the inclined surface 213 of the stopper 212B where the rotation axis 278 moves along a linear track. The center position of the rotation axis 278 moves inside the second guide portion 285a. In this case also, the rotary bodies 275A, 275B are respectively pushed from a rearward and upward side to a front side by the stoppers 212A, 212B, so that the wheels 272A, 272B can be smoothly moved up on the step portion with smaller force than the ordinary situation.

In the same manner as the supporting structure for wheel 201 according to the second embodiment described in reference with Fig. 39 to Fig. 47 the supporting structure for wheel 271 shown in Fig. 61 and Fig. 62 may have, two plate members and the wheels 272A, 272B and the rotary bodies 275A, 275B between these plate members, and the rotation axis 278 may be projected from each of out sides of the rotary bodies 275A, 275B and left and right ends of the rotation axis 278 may be respectively disposed at inner sides of the guide grooves of the plate members.

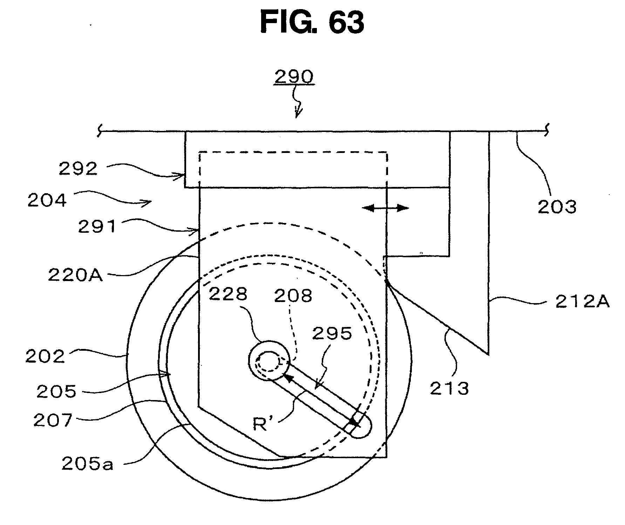

With the supporting structure for wheel 201 according to the second embodiment of this invention, described in reference with Fig. 39 to Fig. 47, the rotation axis 208 moves inside the guide groove 225, from the reference position P1' to the contact position P2' and the wheel 202 and the rotary body 205 recede correlatively to the plate members 220A, 220B to make the stoppers 212A, 212b in contact with the rotary body 205 but a structure to switch a state of the rotary body 205 and the stoppers 212A, 212B between a contact state and a non-contact state is not limited to above. For example, as shown in Fig. 63, the rotary body 205 and the stoppers 212A, 212B may be made in contact by moving the wheels 202, the rotary body 205, and the rotation axis 208 together with the plate members in a backward direction toward the stoppers 212A, 212B while making the rotation axis 208 in a stationary state with respect to the guide groove on the condition that the plate member is structured as movable backward and forward.

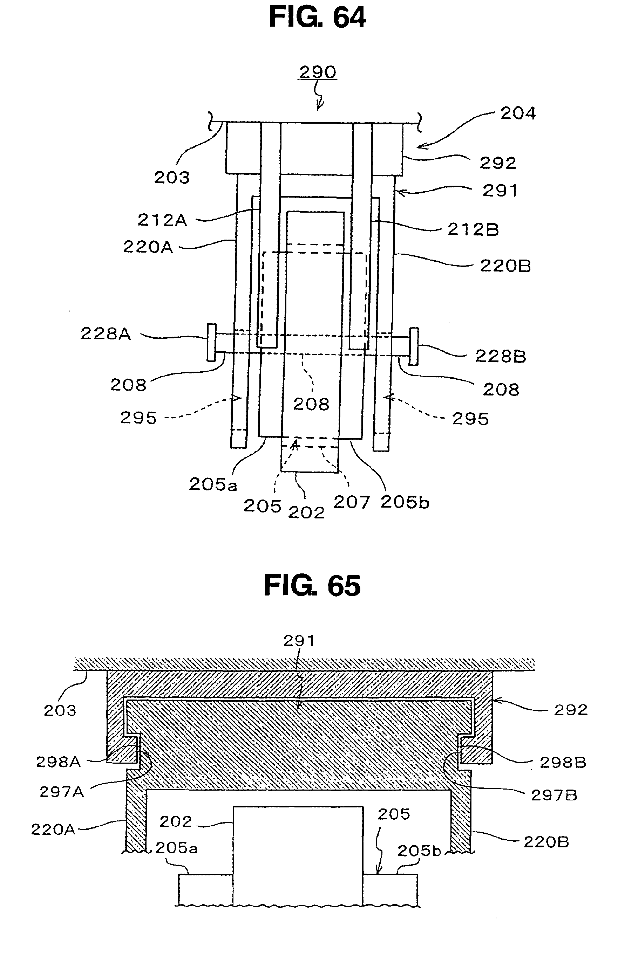

With a supporting structure for wheel 290 shown in Fig. 63, Fig. 64, the wheel 202, the rotary body 205, the rotation limiting mechanism 207, the rotation axis 208, the stoppers 212A, 212B have substantially the same structure as those with the supporting structure for wheel 201 according to the second embodiment of this invention, described in reference with Fig. 39 to Fig. 47, so that those duplicated explanations are emitted. The flame 204 has a holding body 291 for holding the wheel 202 and a holding body supporting member 292 for supporting the holding body 291 in a slidable manner backward and forward along the proceeding direction of the wheel chair body 203. The holding body 291 is formed with the plate members 220A, 220B as described in the embodiment. The plate members 220A, 220B are formed with the guide grooves 295, respectively. Those guide grooves 295 are formed along the track R' of the rotation axis 208 in substantially the same manner as the second guide portions 225b of the guide grooves 225 described in the embodiment.

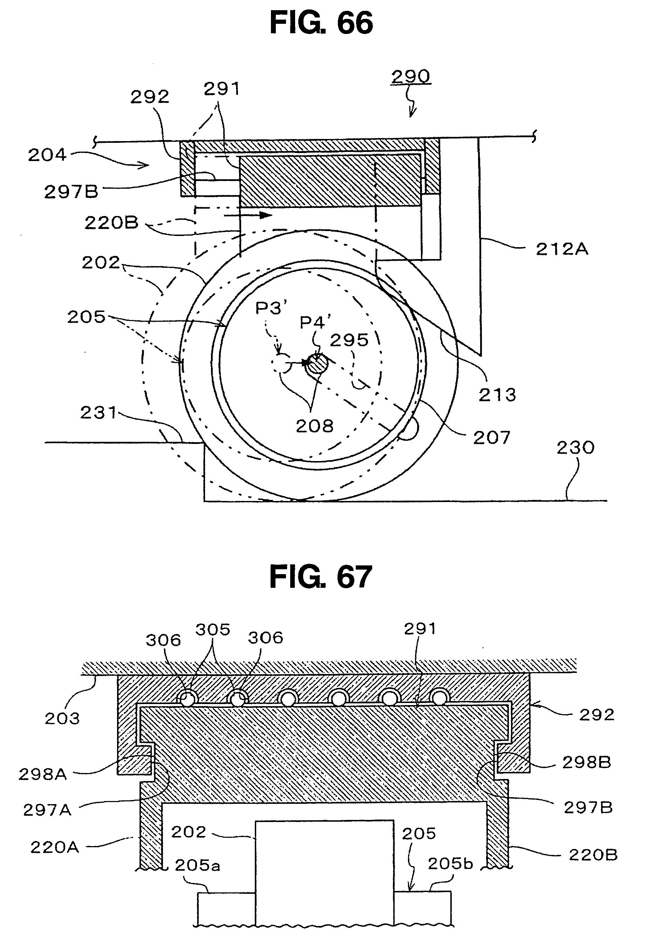

The holding body supporting member 292 is fixedly supported on the wheel chair body 203. The holding body supporting member 292 at its rear portion supports stoppers 212A, 212B. As shown in Fig. 65, the right and left sides of the inner surface of the holding body supporting member 292 is provided with rails 297A, 297B. The rails 297A, 297B are formed so as to extend back and forth along the proceeding direction of the wheel chair body 203. Also, the right and left sides of the upper portion of the holding body 291 are formed with concave portions 298A, 298B, each of which engages with the corresponding one of the rails 297A, 297B. The holding body 291, while the concave portions 298A, 298B each engages with the corresponding one of the rails 297A, 297B, is supported by the holding body supporting member 292. The concave portions 298A, 298B can be moved back and forth along the rails 297A, 297B, thereby being capable of sliding the holding body 291 in back and forth. Namely, the plate-like members 220A, 220B can slide along the proceeding direction of the wheel chair body 203. With such structure, the wheel 202, the rotary body 205 and the rotation axis 208 can move together with the plate-like members 220A, 220B in back and forth. Also, as shown in Fig. 66, with a state that the rotation axis 208 is disposed on an upper portion of the guide groove 295, the plate-like members 220A, 220B are moved back and forth, thereby being capable of moving the rotation axis between a reference position P3' moved forward to a position where the rotary body 205 and the stoppers 212A, 212B do not contact each other and the contacting position P4' moved rearward to a position where the rotary body 205 and the stoppers 212A, 212B contact each other.

In the supporting structure for wheel 290, while the wheel chair body 203 is proceeding, the holding body 291 positions front portion of the holding body supporting member 292 and therefore the rotary body 205 is separated from the stoppers 212A, 212B. The rotation axis 208 is at the reference position P3'. Once the wheel 202 contacts the step portion 231, while such condition is kept, the wheel chair body and the holding body supporting member 292 proceeds. The wheel 202, the rotary body 205, the rotation axis 208 and the holding body 291 relatively recedes with respect to the wheel chair body 203 and the holding body supporting member 292. Accordingly, the rotary body 205 and the stoppers 212A, 212B contacts each other. The rotation axis 208 moves from the reference position P3' to the contact position P4'. Thus, the rotary body 205 becomes movable along the stoppers 212A, 212B, and therefore the rotation axis 208 becomes movable along the track R'. According to the similar behavior as described in the embodiments, the step portion 231 can be stepped over.

The structure in which the holding body 291 and the holding body supporting member 292 are caused to slide is not limited to such structure as shown in Fig. 65 that the rails 297A, 297B and the concave portions 298A, 298B are caused to slide. To slide the holding body 291 with ease, there may be provided a rotating member which rotates between the holding body 291 and the holding body supporting member 292. For example, as shown in Fig. 67, the holding body supporting member 292 at its upper surface of the inner side has a plurality of rotating members 305. In Fig. 67, each rotating member 305 is formed in spherical. Each rotating member 305 is held inside a hole 306 formed in the upper surface of the inner side of the holding body supporting member 292 and at which the rotating member is freely rotatable. The rotating member 305 at its lower end projects downward than the upper surface of the inner side of the holding body supporting member 292, namely is disposed at a height where the lower end of the rotating member 295 and the upper surface of the holding body 291 contact. The upper surface of the holding body 291 forms a flat surface along the direction the holding body 291 slides. In such structure, when the holding body 291 is slid, each rotating member 305 rotates in the sliding direction of the holding body 291, so that the holding body 291 can slide smoothly with respect to the holding body supporting member 292.

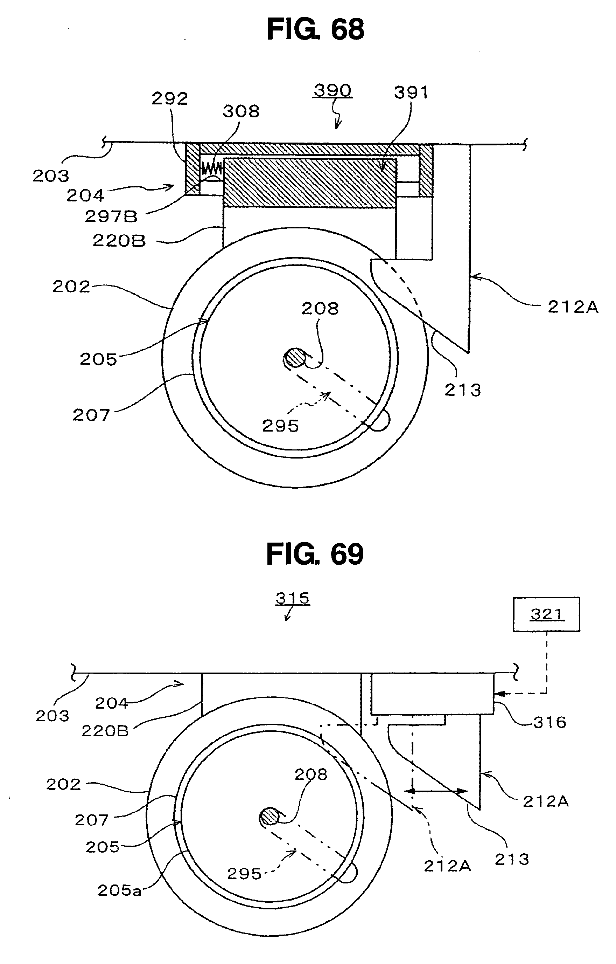

Such structure also may includes an elastic body which serves to restore the holding body 291 to the front portion of the holding body supporting member 292. For example, as shown in Fig. 68, the holding body supporting member 292 at its right and left sides of the inner side of the holding body supporting member comprises spring 308 as the elastic body, respectively. In Fig. 68, the spring 308 is disposed forward of the holding body 291, its front end is connected to the right and left side surfaces of the inner side of the holding body supporting member 292, and its rear end is connected to the front edge of the holding body 291. Once the holding body 291 moves rearward with respect to the holding body supporting member 292, the spring 308 extends to exert a force to restore the holding body 291 forward. With this structure, in the occasions such as driving on the flat surface and stepping up on a small step portion, the holding body 291 recedes to prevent a contact between the rotary body 205 and the stoppers 212A, 212B. Accordingly, stable driving of the wheel 202 can be assured. Also, after the wheel 202 moves upward of the step portion 231, the holding body 291 is urged to be restored forward, so that the rotary body 205 and the stoppers 212A, 212B can be restored to the state they do not contact each other with ease. Meantime, the spring 308 is placed rearward of the holding body 291 and the front end of the spring 308 is connected to the rear edge of the holding body 291 and the rear end of the spring 308 is connected to the right and left side surfaces of the inner side of the holding body supporting member 292, so that the spring 308 is compressed when the holding body 291 moves rearward with respect to the holding body supporting member 292, thereby causing the spring to exert a force for restoring the holding body 291 forward. The elastic body may includes, other than the spring, one having extendibility such as rubber.

Switching of the state between where the rotary body 205 and the stoppers 212A, 212B contact each other and where they do not contact each other, for example, as the supporting structure for wheel 315 shown in Fig. 69, may be performed by a stopper moving apparatus 316 capable of moving the stoppers 212A, 212B in back and forth. In the supporting structure for wheel 315 of Fig. 69, the plate-like members 220A, 220B are fixedly supported with respect to the wheel chair body 203. The rotating axis 208 is held by the guide grooves 295 of plate-like members 212A, 212B. The stopper moving apparatus 316 is fixedly supported with respect to the wheel chair body 203 rearward of the plate-like members 220A, 22B and supports stoppers 212A, 212B. Also, there is provided a controller 321 for controlling driving of the stopper moving apparatus 316. Controlling signals from this controller 321 drive the stopper moving apparatus 316, thereby moving the stoppers 212A, 212B rearward to a position where they do not contact the rotary body 205 with respect to the vehicle body proceeding direction as well as moving the stoppers 212A, 212B forward to a position where they contact each other with respect to the vehicle body proceeding direction.

The operator of the wheel chair can move the stoppers 212A, 212B at his discretion by operating the controller 321 to switch the rotary body 205 and the stoppers 212A, 212B to come to contact each other. For example, when driving on the flat surface, if the rotary body 205 and the stoppers 212A, 212B are operated so as to be separated, smooth proceeding and receding of the wheel 2 can be realized on the flat surface. When stepping up on the step portion, the operator of the wheel chair at his discretion can switch to the state where the rotary body 205 and the stoppers 212A, 212B come into contact each other, thereby achieving the smooth behavior to step up on the step portion by the wheel 202.

The stopper moving apparatus may have a structure in which a combination of the lever and the wire rope moves the stoppers 212A, 212B, alike the caliper brake used commonly as a brake device for a front wheel of bicycles. That is, the lever and the stoppers 212A, 212B are connected through the wire rope, and the operation of the lever to pull the wire rope causes the forward movement of the stoppers 212A, 212B respectively toward the rotary body 205 so as to contact each other, and the operation of the lever to restore causes the stoppers 212A, 212B to restore rearward so as to be separated respectively from the rotary body 205.

### Industrial Applicability

The present invention is applicable to supporting structure for wheel for the various conveyers, carriers and the like, more specifically to conveying devices or shifting devices, automobiles, machine tools and the like used in various industry and service businesses, etc., such as carriages, wheel chairs, baby cars, stretchers.

## Claims

1. A supporting structure for wheel comprising:
a wheel rotating as grounding and supporting a vehicle body; and
a rotary body rotatable only in the opposite direction to a rotating direction of the wheel in association with proceeding of the vehicle body,
wherein a rotation axis of the wheel is arranged in substantially parallel to a rotation axis of the rotary body,
wherein the rotation axis of the rotary body is arranged at a rear of and above the rotation axis of the wheel with respect to the proceeding direction of the vehicle body, and
wherein the rotation axis of the wheel is movable along an arc shaped track around the rotation axis of the rotary body as a center toward a rear side with respect to the proceeding direction of the vehicle body while the wheel and the rotary body move in association with each other.

2. The supporting structure for wheel according to claim 1, wherein the rotation axis of the wheel is movable between a reference position at which the rotation axis of the wheel moves forward with respect to the proceeding direction of the vehicle body and an associating movement position at which the wheel and the rotary body move in association with each other.

3. The supporting structure for wheel according to claim 2, wherein the wheel has a plate member on each side, wherein the plate member has a guide groove, and wherein the rotation axis of the wheel is moved in the guide groove.

4. The supporting structure for wheel according to claim 3, wherein the guide groove includes a first guide portion for guiding the rotation axis of the wheel between the reference position and the associating movement position, and a second guide portion for guiding the rotation axis from the associating movement position rearward along an arc-shaped track.

5. The supporting structure for wheel according to claim 4, wherein the first guide portion has a top surface inclined downward as proceeding from the reference position to the associating movement position.

6. The supporting structure for wheel according to claim 4, wherein the first guide portion is formed with a projection on a lower surface thereof, and wherein the rotation axis of the wheel is made movable between the reference position and the associating movement position over the projection.

7. The supporting structure for wheel according to claim 2, wherein an elastic body is formed for urging the rotation axis of the wheel from the associating movement position to the reference position.

8. The supporting structure for wheel according to claim 3, and further comprising a supporting member supporting the plate member in a movable manner in the proceeding direction of the vehicle body, wherein the rotary body is secured to the supporting member, and wherein the rotation axis of the wheel moves from the reference position to the associating movement position upon moving the plate member rearward with respect to the proceeding direction of the vehicle body and moves from the associating movement position to the reference position upon moving the plate member forward with respect to the proceeding direction of the vehicle body.

9. The supporting structure for wheel according to claim 1, wherein the wheel and the rotation axis are disposed as movable in association with each other, and further comprising an engaging member for rendering the rotary body rotatable only in the opposite direction to the rotational direction of the wheel in association with proceeding of the vehicle body upon contacting with the rotary body and rendering the rotary body freely rotatable in association with the rotation of the wheel upon separating from the rotary body.

10. The supporting structure for wheel according to claim 9, and further comprising a holding body for holding the wheel and the rotary body, and a holding body supporting member for supporting the holding body in a movable manner along the proceeding direction of the vehicle body,
wherein the engaging member is secured to the holding body supporting member, and
wherein the rotary body comes in contact with the engaging member by moving the holding body rearward with respect to the proceeding direction of the vehicle body and separates from the engaging member by moving the holding body forward with respect to the proceeding direction of the vehicle body.

11. The supporting structure for wheel according to claim 9, and further comprising an engaging member mover for rendering the engaging member contacting to the rotary body upon pushing the engaging member from a rear portion thereof and rendering the engaging member separating from the rotary body upon separating from the engaging member.

12. The supporting structure for wheel according to claim 11, and further comprising a holding body for holding the wheel, the rotary body and the engaging member, and a holding body supporting member for supporting the holding body in a slidable manner along the proceeding direction of the vehicle body,
wherein the engaging member mover is secured to the holding body supporting member,
wherein the engaging member is pushed from a rear portion thereof with the engaging member mover by moving the holding body rearward with respect to the proceeding direction of the vehicle body, and wherein the engaging member mover separates from the engaging member by moving the holding body forward with respect to the proceeding direction of the vehicle body.

13. The supporting structure for wheel according to claim 9, and further comprising an engaging member moving apparatus for moving the engaging member so as to contact to and separate from the rotary body.

14. The supporting structure for wheel according to claim 1, and further comprising a rotary body moving apparatus for moving the rotary body so as to contact to and separate from the wheel.

15. The supporting structure for wheel according to claim 9, and further comprising a plate member on each side of the wheel, wherein the plate member has a guide groove, and wherein the rotation axis of the wheel is moved in the guide groove.

16. The supporting structure for wheel according to claim 14, and further comprising a plate member on each side of the wheel, wherein the plate member has a guide groove, and wherein the rotation axis of the wheel is moved in the guide groove.

17. The supporting structure for wheel according to claim 10, wherein the holding body has a plate member disposed on each side of the wheel, wherein the plate member has a guide groove, and wherein the rotation axis of the wheel is moved in the guide groove.

18. The supporting structure for wheel according to claim 12, wherein the holding body has a plate member disposed on each side of the wheel, wherein the plate member has a guide groove, and wherein the rotation axis of the wheel is moved in the guide groove.

19. The supporting structure for wheel according to claim 3, wherein a rear end of the guide groove located in front of the rotary body with respect to the proceeding direction of the wheel.

20. The supporting structure for wheel according to claim 1, wherein the wheel and the rotary body move in association with each other by contacting a circumferential surface of the wheel with a circumferential surface of the rotary body.

21. The supporting structure for wheel according to claim 1, wherein a small wheel having the same rotation axis as the axis of the wheel is formed at a side surface of the wheel, and wherein the wheel and the rotary body move in association with each other by contacting a circumferential surface of the small wheel with a circumferential surface of the rotary body.

22. The supporting structure for wheel according to claim 1, wherein the wheel is a dual wheel caster.

23. The supporting structure for wheel according to claim 1, and further comprising a second rotary body rotatable only in the opposite direction to the rotary body,
wherein the rotation axis of the wheel and the rotation axis of the second rotary body is disposed substantially parallel to each other,
wherein the rotation axis of the second rotary body is disposed forward and upward from the rotation axis of wheel with respect to the proceeding direction of the vehicle body, and
wherein the rotation axis of the wheel is movable forward along an arc-shaped track extending around the rotation axis of the second rotary body as a center while moving the wheel and the second rotary body in an associated manner.

24. A supporting structure for wheel comprising:
a wheel rotating as grounding and supporting a vehicle body;
a rotary body having a radius smaller than a radius of the wheel; and
a rotation limiting mechanism allowing the rotation of the rotary body only in the opposite direction to the rotational direction of the wheel in accompany with proceeding of the vehicle body correlated to the wheel,
wherein the wheel and the rotary body rotate around the same rotation axis as a center,
and further comprising a stopper disposed rearward and downward from the rotation axis with respect to the proceeding direction of the vehicle body,
wherein the rotary body is movable rearward and downward with respect to the proceeding direction of the vehicle body as being in contact with the stopper, and
wherein the rotation axis is movable rearward and downward with respect to the proceeding direction of the vehicle body.

25. The supporting structure for wheel according to claim 24, wherein the wheel is arranged at an outer peripheral surface of the rotary body, wherein the rotation limiting mechanism is formed between an inner peripheral surface of the wheel and the outer peripheral surface of the rotary body, wherein the rotary body is made projected from a side of the wheel, and wherein a portion projected from the side of the wheel is in contact with the stopper.

26. The supporting structure for wheel according to claim 24, wherein the rotary body is disposed on a side of the wheel, and wherein the rotation limiting mechanism is formed between a side surface of the wheel and a side surface of the rotary body.

27. The supporting structure for wheel according to claim 24, wherein the rotation axis is movable between a reference position at which the rotation axis moves forward with respect to the proceeding direction of the vehicle body so that the rotary body does not contact to the stopper and a contact position at which the rotary body contacts to the stopper.

28. The supporting structure for wheel according to claim 27, and further comprising a plate member on each side of the wheel, wherein the plate member has a guide groove, and wherein the rotation axis is moved in the guide groove.

29. The supporting structure for wheel according to claim 28, wherein the stopper has an inclined surface which is more inclined downward as proceeds to the opposite direction to the proceeding direction of the vehicle body,
wherein the rotary body moves along the inclined surface, and
wherein the guide groove includes a first guide portion for guiding the rotation axis between the reference position and the contact position and a second guide portion for guiding the rotation axis with a linear track extending substantially parallel to the inclined surface.

30. The supporting structure for wheel according to claim 28, wherein the stopper has a curved surface extending in a shape of an arc-shaped curve,
wherein the rotary body moves along the curved surface, and
wherein the guide groove includes a first guide portion for guiding the rotation axis between the reference position and the contact position and a second guide portion for guiding the rotation axis with a curved track extending in an arc-shape.

31. The supporting structure for wheel according to claim 29, wherein an upper surface of the first guide portion is inclined downward as goes from the reference position to the contact position.

32. The supporting structure for wheel according to claim 29, wherein the first guide portion is formed with a protrusion on a lower surface of the first guide portion, and wherein the rotation axis moves between the reference position and the contact position over the protrusion.

33. The supporting structure for wheel according to claim 27, and further comprising an elastic body for urging the rotation axis from the contact position to the reference position.

34. The supporting structure for wheel according to claim 28, and further comprising a support member for supporting the plate member in a manner movable in the proceeding direction of the vehicle body, and
wherein the rotation axis moves from the reference position to the contact position by rearward motion of the plate member with respect to the proceeding direction of the vehicle body and moves from the contact position to the reference position by forward motion of the plate member with respect to the proceeding direction of the vehicle body.

35. The supporting structure for wheel according to claim 24, and further comprising a stopper moving apparatus for moving the stopper so as to contact to and separate from the wheel.

36. The supporting structure for wheel according to claim 24, and further comprising a guide groove on a circumferential surface of the rotary body, wherein the stopper include a rail for guiding the guide groove.

37. The supporting structure for wheel according to claim 24, wherein the wheel is a dual wheel caster.
